(19)

**Europäisches Patentamt**
**European Patent Office**
**Office européen des brevets**

(11) **EP 4 693 664 A1**

(12) **EUROPEAN PATENT APPLICATION**

(43) Date of publication:
**11.02.2026 Bulletin 2026/07**

(21) Application number: **25192667.1**

(22) Date of filing: **29.07.2025**

(51) International Patent Classification (IPC):
**H01M 50/264** (2021.01)   **H01M 50/249** (2021.01)
**H01M 50/209** (2021.01)   **H01M 10/6567** (2014.01)
**H01M 10/6556** (2014.01)   **H01M 10/625** (2014.01)
**H01M 10/613** (2014.01)

(52) Cooperative Patent Classification (CPC):
**H01M 10/625; H01M 10/613; H01M 10/6556;**
**H01M 10/6567; H01M 50/209; H01M 50/249;**
**H01M 50/264;** H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **05.08.2024 US 202418794173**

(71) Applicant: **Hyster-Yale Materials Handling, Inc.**
**Fairview, OR 97024 (US)**

(72) Inventor: **Hoogduin, Joost**
**Nijmegen (NL)**

(74) Representative: **Forresters IP LLP**
**Skygarden**
**Erika-Mann-Straße 11**
**80636 München (DE)**

(54) **SYSTEMS AND METHODS FOR BATTERY TEMPERATURE MANAGEMENT**

(57)    A temperature-control (TC) system (120) comprises a plurality of TC elements (122). Each TC element (122) is attached to a respective energy storage (ES) unit (112). Each ES unit (112) is part of an ES module (115) of a materials-handling vehicle (602). The TC elements (122) may be coupled to a heat exchange system (150) in parallel via separate, independent couplings (124). The TC elements (122) may be further configured such that a combined length of the coupling (124) of each TC element (122) is substantially equal, which may result in the ES units (112) receiving substantially equivalent TC services, even under high-load conditions.

FIG. 1

EP 4 693 664 A1

**Description**

RELATED APPLICATIONS

This application claims priority to United States Patent Appl. No. 18/794,173, entitled "SYSTEMS AND METHODS FOR BATTERY TEMPERATURE MANAGEMENT," filed August 5, 2024, the entire disclosure of which is incorporated herein by reference.

TECHNICAL FIELD

This disclosure relates generally to vehicles such as, for example, materials-handling vehicles. This disclosure relates more specifically to managing the temperature of an energy storage device, such as a battery, in such a vehicle.

BACKGROUND INFORMATION

Unless otherwise explicitly indicated, the approaches described in the technical field and background sections are not prior art to the claims that follow this disclosure nor admitted prior art.

Energy storage devices, such as batteries, can age more quickly when operated outside of their designated temperature ranges. For example, the temperature range for many types of lithium-ion batteries is between about 20°C and 60°C. Operation at temperatures outside of this range can lead to performance degradation and irreversible damage, such as lithium plating and thermal runaway. Low temperatures can impair the diffusion and movement of ions, which can cause deposits to form on active sites of the battery resulting in increased resistance. Since charge/discharge operations are exothermic, batteries are often subjected to high temperatures. While heat exposure can briefly increase battery performance (due to increased reaction rate), the useful life of the battery can be significantly reduced. High temperatures can disrupt the chemical balance within the battery, causing detrimental side reactions and corrosion. Moreover, high temperatures can increase the effective force of the electric current that drives ions between electrodes, resulting in physical stress and further damage.

The use of available temperature-control systems in electric-powered vehicles can have significant drawbacks. For example, temperature and pressure differentials within such systems can produce condensation that can damage electrical components. Moreover, pressurized elements can cause significant damage when breaches occur. These systems can also suffer from uneven performance; batteries earlier in the temperature-control circuit may experience much higher performance than batteries near the end, resulting in nonuniform wear. It can be difficult to maintain thermal contact with battery modules, particularly in vehicles that experience significant jostling. Interconnections between elements may be such that damage to a portion of the system can disrupt temperature-control operations across a plurality of modules. Furthermore, maintenance can be complicated and inefficient; work on an individual module may require draining the entire system.

OVERVIEW OF DISCLOSURE

This disclosure generally relates to a (1) temperature-control system for an energy-storage module comprising a plurality of energy-storage units, (2) a temperature-control apparatus, and (3) methods for controlling the temperature of an energy-storage module.

Disclosed herein are examples of a temperature-control system, comprising a plurality of temperature-control elements configured to be attached to respective energy-storage units of an energy-storage module. In some implementations, each temperature-control element may comprise an inlet connector configured to couple an inlet of the temperature-control element to an inlet node, and an outlet connector configured to couple an outlet of the temperature-control element to an outlet node. The temperature-control elements may be configured such that a combined length of the inlet connector and the outlet connector of each temperature-control element is substantially equal. The inlet connector and the outlet connector of each temperature-control element may be configured to couple the temperature-control element to a heat exchange system independently of other temperature-control elements of the plurality of temperature-control elements. The inlet node may comprise an inlet manifold configured to fluidly couple inlets of the plurality of temperature-control elements to an outlet of the heat exchange system and the outlet node may comprise an outlet manifold configured to fluidly couple outlets of the plurality of temperature-control elements to an inlet of the heat exchange system. In some implementations, each temperature-control element comprises a respective temperature-control circuit of a plurality of parallel temperature-control circuits, each temperature-control circuit covering a respective energy-storage unit. The system may further comprise a separator disposed between the heat exchange system and the energy-storage units. Each temperature-control element may comprise an attachment member configured to secure the temperature-control element to an energy-storage unit. The attachment member may comprise one or more tabs configured to secure the temperature-control element over a surface of the energy-storage unit. The temperature-control element may be configured to cover substantially all of the surface of the energy-storage unit. The energy-storage units may comprise battery units. In some implementations, the system may further comprise control logic configured to determine a temperature-control configuration for the energy-storage module based, as least in part, on operating conditions of the energy-storage module. The control logic may be configured to determine the temperature-control configuration based on a temperature of one or more of the energy-storage units. The temperature-control configuration may specify a flow rate of a heat exchange system coupled to the plurality of temperature-control modules.

Disclosed herein are examples of an apparatus comprising a heat exchange system configured to produce initialized temperature-control media at an outlet and receive utilized temperature-control media at an inlet and a plurality of temperature-control elements. Each temperature-control element is attached to a respective energy-storage unit. The temperature-control elements may comprise a plurality of separate, independent inlet connectors configured to couple inlets of respective temperature-control elements to the outlet of the heat exchange system in parallel such that each temperature-control element receives initialized temperature-control media in a substantially same state, and a plurality of separate, independent outlet connectors configured to couple outlets of respective temperature-control elements to the inlet of the heat exchange system. The temperature-control elements may be configured such that a cumulative length of the separate, independent inlet connector and the separate, independent outlet connector of each temperature-control element is substantially equal. The temperature-control elements may be further configured such that segments of the separate, independent inlet connectors and separate, independent outlet connectors are substantially parallel. The apparatus may further comprise a first manifold configured to couple the plurality of separate, independent inlet connectors to the outlet of the heat exchange system and a second manifold configured to couple the plurality of separate, independent outlet connectors to the inlet of the heat exchange system. In some implementations, the apparatus comprises temperature-control logic configured to control parameters pertaining to operation of the heat exchange system based, at least in part, on operating conditions of the energy-storage module. The temperature-control logic may be configured to increase a flow rate of temperature-control media through the plurality of temperature-control elements based, at least in part, on a temperature of one or more of the energy-storage units.

Disclosed herein are examples of methods for managing the temperature of an energy-storage module, comprising monitoring operating conditions of a plurality of energy-storage units. Each energy-storage unit comprises a respective temperature-control element, determining a temperature-control configuration for the energy-storage module in response to the monitoring, circulating temperature-control media through the temperature-control elements in accordance with the determined temperature-control configuration such that each temperature-control element receives initialized temperature-control media in a substantially same state, and receiving utilized temperature-control media from each temperature-control element at a substantially same flow rate.

Aspects of the disclosed systems and methods for battery temperature management may be utilized in a vehicle, such as an electric-powered vehicle, hybrid vehicle, or the like. For example, aspects of the disclosed systems and methods may be used in a materials-handling vehicle, such as a pallet truck, cart, stacker, reach stacker, hybrid reach stacker, or the like.

BRIEF DESCRIPTION OF THE DRAWINGS

Examples of systems, methods, devices, and computer-readable storage media comprising instructions configured to implement operations for associating operators with machinery are set forth in the accompanying figures and detailed description.

Figure 1 is a schematic block diagram illustrating an example of a temperature-controlled energy-storage system comprising temperature-control elements coupled to a heat exchange system in parallel by separate, independent couplings having substantially equivalent flow characteristics.

Figure 2A illustrates an example of a temperature-control element.

Figure 2B illustrates an example of a temperature-control element attached to an energy-storage module.

Figure 2C is a side view of a temperature-control element.

Figure 2D is a bottom view of an example of an energy-storage module comprising a temperature-control element.

Figure 2E is a bottom view of an example of an energy-storage module comprising a temperature-control element attached to an energy storage unit.

Figure 2F is a bottom view of an example of an energy-storage module comprising temperature-control elements coupled to a heat exchange system in parallel by separate, independent couplings having substantially equivalent flow characteristics.

Figure 2G is a bottom view illustrating another example of an energy-storage module comprising temperature-control elements coupled to a heat exchange system in parallel by separate, independent couplings having substantially equivalent flow characteristics.

Figure 3 is a schematic block diagram of another example of a temperature-controlled energy-storage system.

Figure 4A is a front view of an example of an energy-storage module comprising a plurality of temperature-control elements coupled to respective energy-storage units.

Figure 4B is a front view of an example of protection means for an energy-storage module comprising a plurality of temperature-control elements coupled to respective energy-storage units.

Figure 4C is a side view of an energy-storage module comprising protection means.

Figure 4D is a side view of an energy-storage module comprising means for protecting electrical components of one or more energy-storage units.

Figure 4E is a first side view of example protection means configured to enclose portions of an energy-storage module comprising a plurality of energy-storage units and corresponding temperature-control elements.

Figure 4F is a second side view of example protection means configured to enclose portions of an energy-storage module comprising a plurality of energy-storage units and corresponding temperature-control elements.

Figure 4G is a perspective view of an example of an energy-storage module configured to hold a plurality of energy-storage units.

Figure 4H is a perspective view of an example of an energy-storage module configured to secure a plurality of energy-storage units within a support structure.

Figure 4I is a perspective view of an example of an energy-storage module configured to secure a plurality of energy-storage units and corresponding temperature-control elements within a support structure.

Figure 4J is a front view of an example of an energy-storage module configured to secure a plurality of energy-storage units and corresponding temperature-control elements within a support structure.

Figure 4K is a front view of an example of an energy-storage module configured to electrically couple a plurality of energy-storage units to a module interface.

Figure 4L is a perspective view of an example of an energy-storage module configured to enclose a plurality of energy-storage units.

Figure 4M is a perspective view of an example of an energy-storage module configured to protect a plurality of energy-storage units from components of a temperature-control system.

Figure 4N is a perspective view of another example of an energy-storage module configured to protect a plurality of energy-storage units from components of a temperature-control system.

Figure 4O comprises side views of another example of an energy-storage module configured to protect a plurality of energy-storage units from components of a temperature-control system.

Figure 5 is a schematic block diagram of an example of a temperature-controlled energy-storage system comprising control logic.

Figure 6A illustrates an example of a temperature-controlled energy-storage system configured to power a vehicle.

Figure 6B illustrates another example of a temperature-controlled energy-storage system configured to power a vehicle.

Figure 6C illustrates an example of a temperature-controlled energy-storage system configured to power a hybrid reach stacker.

Figure 6D is a schematic block diagram illustrating further examples of temperature-controlled energy-storage systems.

Figure 7 is a flow diagram illustrating an example of a method for controlling the temperature of an energy-storage system.

Figure 8 is a flow diagram illustrating another example of a method for controlling the temperature of an energy-storage system.

Figures 9A-9D illustrate examples of energy-storage modules configured to be secured in a substantially vertical stack.

Figures 10A-10C illustrate examples of temperature-controlled energy-storage systems comprising energy-storage modules secured within a substantially vertical stack.

Figures 11A-11C illustrate examples of temperature-controlled energy-storage systems comprising energy-storage modules secured within a substantially vertical stack by one or more vertical support members.

Figures 12A and 12B illustrate additional examples of temperature-controlled energy-storage systems comprising energy-storage modules secured within a substantially vertical stack.

Figures 13A and 13B illustrate examples of temperature-controlled energy-storage systems comprising energy-storage modules and a heat exchange system secured within a substantially vertical stack.

Figure 14A and 14B illustrate examples of temperature-controlled energy storage systems configured to be installed into a materials-handling vehicle by a hoist or the like.

DETAILED DESCRIPTION OF EMBODIMENTS

***Preliminary Notes***

Example embodiments are described below with reference to the accompanying drawings. Unless otherwise expressly stated, the sizes, positions, etc., of components, features, elements, etc., as well as any distances therebetween, are not necessarily to scale, and may be disproportionate and/or exaggerated for clarity.

The embodiments described herein are merely examples, set forth by way of illustration only and not limitation. Those skilled in the art will recognize in light of the teachings herein that there are alternatives, variations and equivalents to the example embodiments described herein and their component parts. For example, other embodiments are readily possible, variations can be made to the embodiments described herein, and there may be equivalents to the components, parts, or steps that make up the described embodiments.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," "comprising," "include," "includes," "including," "has," "have," and "having," when used in this document, are open-ended and specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another and not to imply any relative order, placement, or ranking. For example, one element could be termed a "first element" and similarly, another element could be termed a "second element," or vice versa. The same is true of labels like (a), (b), (c) or (1), (2), (3), etc. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the drawings. For example, if an object in the figures is turned over, elements described as "below" or "beneath" other elements or features would then be oriented "above" the other elements or features. Thus, the term "below" can, for example, encompass both an orientation of above and below. An object may be otherwise oriented (*e.g.*, rotated 90 degrees or at other orientations) and the spatially relative descriptors used herein may be interpreted accordingly.

Unless clearly indicated otherwise, all functional or operative connections may be direct or indirect. Similarly, unless clearly indicated otherwise, all physical connections may be rigid or non-rigid, permanent or temporary, direct or indirect (*e.g.*, via intermediary components).

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings. Additionally, the drawings may include non-essential elements that are included only for the sake of thoroughness. These non-essential elements may be removed entirely or left only in outline form if drawing changes are desired to create greater clarity.

Not every feature shown in every drawing is labeled with a reference number, even though the same feature may be labeled with a reference number on other drawings. Reference numbers have been omitted where it is believed they would unnecessarily clutter a drawing. However, all rights are reserved to add reference numbers to the drawings to clarify aspects of the embodiments. Moreover, some views omit some features shown in other views. Finally, the drawings sometimes illustrate variations from one drawing to another, even where those drawings are intended to depict the same embodiment.

Additionally, as will be appreciated by one of ordinary skill in the art, principles of the present disclosure may be reflected in a computer program product on a computer-readable storage medium having computer-readable program code means embodied in the storage medium. Any tangible, non-transitory computer-readable storage medium may be utilized, including magnetic storage devices (hard disks, floppy disks, and the like), optical storage devices (CD-ROMs, DVDs, Blu-Ray discs, and the like), flash memory, and/or the like. These computer program instructions may be loaded onto a general-purpose computer, special purpose computer, or other programmable data processing apparatus to produce a machine, such that the instructions that execute on the computer or other programmable data processing apparatus create means for implementing the functions specified. These computer program instructions may also be stored in a computer-readable memory that can direct a computer or other programmable data processing apparatus to function in a particular manner, such that the instructions stored in the computer-readable memory produce an article of manufacture, including implementing means that implement the function specified. The computer program instructions may also be loaded onto a computer or other programmable data processing apparatus to cause a series of operational steps to be performed on the computer or other programmable apparatus to produce a computer-implemented process, such that the instructions that execute on the computer or other programmable apparatus provide steps for implementing the functions specified.

***Overall System***

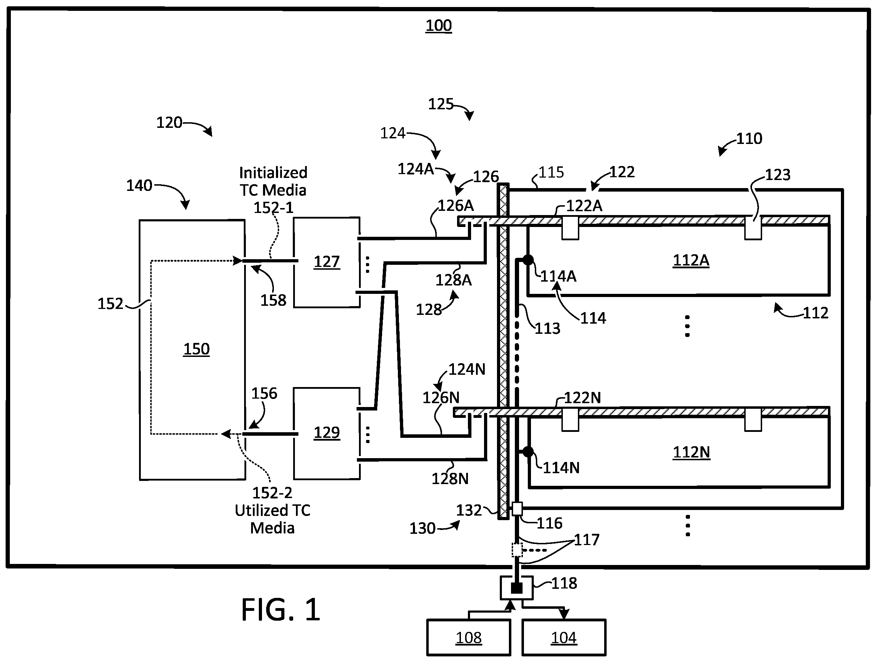

Figure 1 is a schematic block diagram illustrating an example of an operating environment in which aspects of the systems and methods for temperature control disclosed herein may be practiced. The environment may comprise a temperature-controlled energy storage (TC ES) system 100. The TC ES system 100 may comprise, *inter alia,* an energy-storage system (ES) 110 and temperature-control system 120.

The ES system 110 may comprise and/or be coupled to one or more ES modules 115, each ES module 115 comprising a plurality of ES units 112. As used herein, unless context requires otherwise, an ES unit 112 may comprise and/or refer to a physical structure, component, apparatus, and/or device capable of storing energy and discharging the stored energy as electrical energy. An ES unit 112 may be capable of maintaining a potential difference between two or more terminals (*e.g.*, a voltage difference $\Delta V$). An ES unit 112 may comprise one or more of a cell, an electrochemical cell, a collection of one or more cells, a collection of one or more electrochemical cells, a battery comprising one or more cells, an electrochemical battery comprising one or more electrochemical cells, an aluminum-ion battery, a carbon battery, a flow battery, a vanadium redox battery, a zinc-bromide battery, a zinc-cerium battery, a lead-acid battery, a glass battery, a lithium-ion battery, a lithium cobalt oxide battery, a lithium ion manganese oxide battery, a lithium ion polymer battery, a lithium iron phosphate battery, a lithium-sulfur battery, a thin film lithium-ion battery, a lithium ceramic battery, a magnesium-ion battery, a metal-air electrochemical battery, a lithium-air battery, an aluminum-air battery, a germanium-air battery, a calcium-air battery, an iron air battery, a potassium-ion battery, a silicon-air battery, a zinc-air battery, a tin-air battery, a sodium-air battery, a beryllium-air battery, a molten salt battery, a nickel-cadmium battery, a nickel-hydrogen battery, a nickel-iron battery, a nickel metal hydride battery, a nickel-zinc battery, a polymer-based battery, a rechargeable alkaline battery, a silver-zinc battery, a silver-cadmium battery, a sodium-sulfur battery, a super iron battery, a zinc-ion battery, a biobattery and/or the like.

In the Figure 1 example, the ES module 115 may comprise *N* ES units 112, *e.g.,* 112A through 112N. The ES units 112A-N may be electrically coupled to one another in any suitable electrical configuration, *e.g.*, may be coupled in series, parallel, or the like. The ES units 112A-N may comprise respective electrical interfaces, *e.g.*, unit electrical interfaces 114. As disclosed herein, a unit electrical interface (UEI) 114 may comprise and/or refer to means for electrically interfacing with an ES unit 112, which may include, but is not limited to: one or more terminals, a negative terminal (*e.g.,* a negatively charged electrode such as a cathode of the ES unit 112), a positive terminal (*e.g.,* a positively charged electrode such as an anode of the ES unit 112), a battery balance interface, a diagnostic interface, a measurement interface, and/or the like. In some implementations, the ES units 112A-N of the ES module 115 may be electrically coupled to a module electrical interface 116. As used herein, a module electrical interface (MEI) 116 may comprise and/or refer to any suitable means for electrically interfacing with an ES module 115 and/or the ES units 112 thereof, *e.g.,* ES units 112A-N. The ES units 112A-N may be electrically coupled to the MEI 116 by one or more unit coupling(s) 113. The unit couplings 113 may be configured to electrically couple the ES units 112A-N (and/or UEI 114A-N thereof) to the MEI 116 according to any suitable scheme, *e.g.,* the unit couplings 113 may be configured to electrically couple the ES unit 112A-N in series, parallel, a combination of series and parallel (*e.g.,* couple subgroups of ES units 112 in parallel and couple the subgroups to the MEI in series or vice versa), and/or the like.

In some implementations, the ES system 110 may comprise a plurality of ES modules 115. The ES modules 115 may be electrically coupled to an interface of the ES system 110, *e.g.,* MEI 116 of the ES modules 115 may be electrically coupled to an energy-storage system (ESS) interface 118 by, *inter alia,* one or more module couplings 117. The ESS interface 118 may comprise a high-voltage (HV) electrical interface configured to, *inter alia,* power a vehicle or the like. In some implementations, modules 115 of the ES system 100 may be electrically coupled to be ESS interface 118 by separate, independent module couplings 117. For example, the ES modules 115 of the ES system 100 may be electrically coupled in parallel such that the MEI 116 of each ES module 115 couples to the ESS interface 118 at a substantially same voltage potential.

The ESS interface 118 may be configured to be coupled to a load 104. For example, the ES system 110 may be configured to power a vehicle and the load 104 illustrated in Figure 1 may comprise and/or represent vehicle systems configured to be powered by the ES system 110, *e.g.,* may comprise and/or represent a motor of the vehicle, a vehicle control system, a materials-handling system of the vehicle, and/or the like. In some implementations, the ESS interface 118 may be further configured to electrically couple the ES system 110 to a power source 108. The power source 108 may be configured to supply electrical power to the ES system 110. For example, the power source 108 may comprise and/or be coupled to a charger configured to charge ES units 112A-N of respective ES modules 115 of the ES system 110.

The ES units 112 may be configured for operation within a designated temperature range. By way of non-limiting example, the ES units 112 may comprise lithium-ion batteries having an operating temperature range between about 20°C and 60°C. Operation of the ES units 112 at temperatures outside of this range may lead to performance degradation or even result in irreversible damage.

The TC ES system 100 may further comprise and/or be coupled to a temperature-control (TC) system 120. The TC system 120 may be configured to, *inter alia,* regulate the temperature of the ES system 110 (and/or respective ES modules 115 and/or ES units 112 thereof); the TC system 120 may be configured to cool the ES units 112, heat the ES units 112, maintain the ES units 112 within a specified temperature range, and/or the like.

The TC system 120 may be configured to provide substantially equivalent TC services to the ES modules 115 and/or ES units 112 of the TC ES system 110. The TC system 120 may comprise one or more TC modules 125, each TC module 125 configured to provide TC services to the ES units 112 of a respective ES module 115. The TC module 125 illustrated in the Figure 1 example may be configured to provide TC services to the ES units 112A-N of the ES module 115. In other words, ES modules 115 of the TC ES system 100 may comprise and/or be coupled to respective TC modules 125.

The TC module 125 may comprise a plurality of TC elements 122, each TC element 122 configured to provide TC services to a respective ES unit 112, *e.g.,* TC elements 122A-N configured to provide TC services to ES units 112A-N, respectively. The TC elements 122AN may be attached to respective ES units 112A-N. In the Figure 1 example, the ES units 112 may expel heat primarily at and/or through the top surface thereof and, as such, the TC elements 122A-N may be attached to top surfaces of respective ES units 112A-N. In some implementations, the TC elements 122A-N may be configured to cover substantially the entire top surface of ES units 112A-N, respectively. The disclosure is not limited in this regard, however, and could be adapted to attach TC elements 122 to any suitable surface of ES units 112 having any suitable shape, configuration, and/or thermodynamic characteristics.

The efficacy of the TC services provided by the TC elements 122A-N may depend on maintaining close physical connections between the TC elements 122A-N and corresponding ES units 112A-N. For example, the efficacy of a TC element 122 may be significantly reduced if the TC element 122 becomes physically separated from the ES unit 112 (and/or surface thereof) due to, *inter alia,* jostling of a vehicle or the like. In some implementations, the TC elements 122 may comprise attachment means 123 configured to secure the TC elements 122 to respective ES units 112. The attachment means 123 may comprise any suitable means for attaching, fastening, and/or otherwise securing a TC element 122 to an ES unit 112 including, but not limited to, one or more tabs, locking tabs, flanges, fasteners, screws, bolts, ties, latches, rivets, adhesives, and/or the like. As disclosed in further detail herein, in some implementations, the TC elements 122 may have a plate configuration; the TC elements 122 may be configured to overlay the top surface of respective ES units 112 and the attachment means 123 may comprise tab attachment means 123 configured to be secured to respective sides thereof.

As illustrated in Figure 1, the TC elements 122A-N of the TC module 125 may be coupled to a heat exchange system 150. As used herein, a heat-exchange (HE) system 150 may comprise and/or refer to any suitable means for temperature control including, but not limited to, a thermal management system, a heat pump, a heat exchanger, a cooling system, a refrigeration system, a liquid cooling system, a refrigerant cooling system, a refrigerant direct cooling system, a heating system, a liquid heating system, a heat pipe cooling system, and/or the like. In some implementations, the HE system 150 may be configured to circulate TC media 152 through the TC system 120, *e.g.,* through TC elements 122 of respective TC modules 125. As used herein, TC media 152 may comprise and/or refer to any suitable temperature-control medium, which may include, but is not limited to, coolant, refrigerant, liquid, water, steam, and/or the like.

The HE system 150 may be configured to produce "initialized" TC media 152-1 at an outlet 158 (HE outlet 158). As used herein, "initialized" TC media 152-1 may comprise and/or refer to TC media 152 having potential energy corresponding to a designated TC application. In other words, initialized TC media 152-1 may comprise and/or refer to TC media 152 that has been charged or otherwise endued with thermodynamic energy. For example, in cooling applications, initialized TC media 152-1 may comprise and/or refer to TC media 152 that has been cooled to a designated temperature, in heating applications, initialized TC media 152-1 may comprise and/or refer to TC media 152 that has been heated to a designated temperature, and so on. Initialized TC media 152-1 may be circulated through TC elements 122 of the TC system 120 and the resulting "utilized" TC media 152-2 may return to the HE system 150 through an inlet 156 (HE inlet 156). As used herein, "utilized" TC media 152-2 may comprise and/or refer to TC media 152 that has been utilized in a TC application. For example, in cooling applications, utilized TC media 152-2 may comprise and/or refer to TC media 152 that has absorbed thermal energy from one or more ES units 112, in heating applications, utilized TC media 152-2 may comprise and/or refer to TC media 152 that has transferred thermal energy to one or more ES units 112, and so on. Utilized TC media 152-2 may, therefore, comprise and/or refer to TC media 152 having thermodynamic energy that has been at least partially expended or exhausted, *e.g.*, through circulation through one or more TC elements 122.

As illustrated in Figure 1, the TC elements 122A-N of respective TC modules 125 may be coupled to the HE system 150 in parallel. The TC elements 122A-N may, therefore, receive initialized TC media 152-1 from the HE system 150 in substantially the same or equivalent state. In other words, each TC element 122A-N may receive freshly initialized TC media 152-1 from the HE system 150 as opposed to utilized TC media 152-2. By contrast, systems that provide TC services via non-parallel connections (*e.g.*, series connections) may exhibit significant differences in TC performance. For example, the efficacy of TC services may decrease along elements connected in series such that elements near the outlet of the heat exchanger may benefit from a much greater degree of TC than other elements, and the TC services provided to elements near the end of the series may be significantly degraded (particularly in high-load scenarios), resulting in uneven wear or damage.

According to the parallel arrangement of the Figure 1 example, each TC element 122A-N of the TC module 125 may be coupled to the heat exchange system 150 via a separate, independent TC coupling 124; the TC coupling 124A of TC element 122A may comprise an inlet connection 126A configured to couple the TC element 122A to the HE outlet 158 and an outlet connection 128A configured to couple the TC element 122A to the HE inlet 156; the TC coupling 124N of TC element 122N may comprise an inlet connection 126N configured to couple the TC element 122N to the HE outlet 158 and an outlet connection 128N configured to couple the TC element 122N to the HE inlet 156; and so on. The inlet connections 126A-N may be coupled to the HE outlet 158 through a first node 127 of the TC module 125 and the outlet connections 128A-N may be coupled to the HE inlet 156 through a second node 129 of the TC module 125. The nodes 127 and 129 may comprise any suitable means for distributing, aggregating, and/or otherwise controlling the flow of TC media 152 including, but not limited to, one or more distribution nodes, manifolds, valves, and/or the like. The first node 127 may be configured to couple inlet connections 126A-N of the TC elements 122A-N to the HE outlet 158 and, as such, may comprise and/or be referred to as an TC inlet node, TC inlet manifold, HE outlet node, HE outlet manifold, or the like. The second node 129 may be configured to couple outlets 128A-N of the TC elements 122A-N to the HE inlet 156 and, as such, may comprise and/or be referred to as an TC outlet node, TC outlet manifold, HE inlet node, HE inlet manifold, or the like.

As illustrated in the Figure 1 example, each TC element 122A-N of the TC module 125 may be coupled to the HE system 150 through a separate, independent TC coupling 124A-N. In other words, each TC element 122A-N may comprise separate, independent connections to the HE inlet 156 and HE outlet 158 of the HE system 150. Accordingly, the TC elements 122 may continue to provide TC services to respective ES units 112 despite faults in other TC elements 122 (and/or other TC couplings 124). For example, the TC element 122A may continue providing TC services to ES unit 112A and/or remain coupled to the heat exchange system 150 through TC coupling 124A, despite damage to other TC elements 122 and/or other TC couplings 124 (*e.g.,* despite damage to TC element 122N, TC coupling 124N, and/or the like).

The use of separate, independent TC couplings 124 for respective TC elements 122 may facilitate diagnostic and/or maintenance operations. Since the TC elements 122AN of the TC module 125 are coupled to the heat exchange system 150 independently, the TC elements 122A-N may be serviced separately and/or independently. For example, the TC element 122A may be serviced by, *inter alia,* draining TC media 152 from the TC element 122A (and/or TC coupling 124A), while the other TC elements 122 and/or TC couplings 124 remain intact. In other words, the separate, independent TC couplings 124 of the disclosed TC system 120 obviate the need to drain other TC elements 122 when a particular TC element 122 is serviced.

As disclosed herein, the TC system 120 may be configured to equalize the TC services provided to the ES units 112A-N of respective ES modules 115. As illustrated in the Figure 1 example, the TC elements 122A-N of the TC module 125 may be coupled to the heat exchange system 150 in parallel (as opposed to utilizing conventional non-parallel connections, such as a series connection). Accordingly, the inlet 226 of each TC element 122 may receive initialized TC media 152-1 in a substantially same or equivalent state, quantity, and/or rate. In other words, each TC element 122A-N may receive "fresh" initialized TC media 152-1 before such initialized TC media 152-1 has been utilized by any other TC element 122A-N (*e.g.,* before circulation through any other TC element 122A-N).

The TC system 120 may be further configured to normalize or equalize TC services across the ES units 112A-N of respective TC modules 125 by, *inter alia,* configuring the TC elements 122A-N to exhibit substantially equivalent flow characteristics. As used herein, "flow characteristics" may comprise and/or refer to characteristics pertaining to the flow and/or circulation of TC media 152 through one or more components of the TC system 120, which may include, but are not limited to, pressure drop ($\Delta P$), flow rate ($Q$), and/or the like. The TC elements 122A-N may be configured such that TC media 152 flowing therethrough exhibit substantially the same pressure drop ($\Delta P$) and, hence, substantially same flow rate ($Q$). The TC elements 122A-N may be configured such that the TC couplings 124A-N thereof exhibit substantially equivalent flow characteristics. For example, the TC elements 122A-N of the TC module 125 may be configured and/or arranged within the TC system 120 (and/or ES module 115) such that the TC couplings 124A-N thereof have substantially the same length. As used herein, the length of the TC coupling 124 of a TC element 122 may comprise and/or refer to a combined or total length of the inlet connection 126 ($l_{in}$) and outlet connection 128; the length of TC coupling 124A may comprise the combined length of the inlet connection 126A and outlet connection 128A, the length of TC coupling 124N may comprise the combined length of the inlet connection 126N and outlet connection 128N, and so on. In the Figure 1 example, the TC couplings 124A-N of TC elements 122A-N may be configured such that $l_{cpl\_A} \approx \cdots \approx l_{cpl\_M}$, where $l_{cpl\_A}$ represents the length of TC coupling *124A*, $l_{cpl\_M}$ represents the length of TC coupling 124N, and so on. In other words, the TC couplings 124A-N may be configured such that $(l_{in\_A} + l_{out\_A}) \approx \cdots \approx (l_{in\_M} + l_{out\_M})$, where $l_{in\_A}$ represents the length of inlet connection 126A, $l_{out\_A}$ represents the length of outlet connection 128A, $l_{in\_M}$ represents the length of inlet connection 126N, $l_{out\_M}$ represents the length of outlet connection 128N, and so on.

Configuring the TC system 120 such that the length of the TC couplings 124A-N of each TC element 122A-N is substantially equal may result in each TC element 122A-N having substantially equivalent flow characteristics, *e.g.*, substantially equivalent pressure drop ($\Delta P$), and hence, substantially equivalent flow rate ($Q$). Accordingly, configuring the TC system 120 to provide uniform TC services to a plurality of ES units 112A-N may comprise, *inter alia,* (a) coupling TC elements 122A-N of respective ES units 112A-N to initialized TC media 152-1 generated by the HE system 150 in parallel, *e.g.,* via separate, independent TC couplings 124A-N comprising separate, independent inlet connections 126A-N for each TC element 122A-N, and (b) configuring the TC couplings 124A-N to be of substantially equal length.

Configuring the flow characteristics of the TC elements 124A-N may further comprise configuring an arrangement and/or orientation of the TC couplings 124A-N thereof. As disclosed in further detail herein, equalizing the flow characteristics of the TC element 124A-N may comprise configuring the inlet connections 126A-N and/or outlet connections 128A-N of the TC couplings 124A-N to have substantially same or equivalent orientations, *e.g.*, run substantially parallel to one another. Accordingly, configuring the TC system 120 to provide uniform TC services to the ES units 112A-N of respective ES modules 115 (through respective TC modules 125) may comprise, *inter alia,* (a) coupling TC elements 122A-N of the TC module 125 to the HE outlet 158 in parallel, and configuring the TC elements 122A-N to exhibit equivalent flow characteristics, which may comprise (b) configuring the couplings 124A-N to be of substantially equal length, and/or (c) configuring the couplings 124A-N to have a substantially equivalent orientation.

In some implementations, the TC system 120 may be further configured to protect the ES module 115 from damage due to, *inter alia,* leaks, condensation, breaches in pressurized components 140, and/or the like. The TC module 125 may, for example, comprise protection means 130. The protection means 130 may comprise any suitable means for physically isolating, sealing, shielding, separating, and/or otherwise protecting electronic components of the ES module 115 from damage due to exposure to pressurized components 140 of the TC system 120. The protection means 130 may be configured to protect the ES module 115 from leaks in the TC couplings 124A-N, first node 127, second node 129, HE system 150, HE inlet 156, HE outlet 158, and/or the like. The protection means 130 may include, but are not limited to, one or more structural elements, plates, enclosures, moisture barriers, and/or the like.

In the Figure 1 example, the protection means 130 may comprise, *inter alia,* a separator 132. The separator 132 may comprise a structural element such as a plate, panel, or the like. The separator 132 may be configured to protect the ES units 112A-N from pressurized components 140 of the TC system 120. For example, the separator 132 may be disposed between the ES units 112A-N and the HE system 150. The separator 132 may be further configured to protect the ES units 112A-N from exposure to TC media 152. As illustrated in Figure 1, the separator 132 may be disposed between the ES units 112A-N and components of the TC system 120, such as the TC couplings 124A-N of the TC elements 122AN, and so on. For example, the separator 132 may be disposed between UEI 114A-N of the ES units 112A-N and the inlet connections 126A-N and/or outlet connections 128A-N of the TC elements 122A-N.

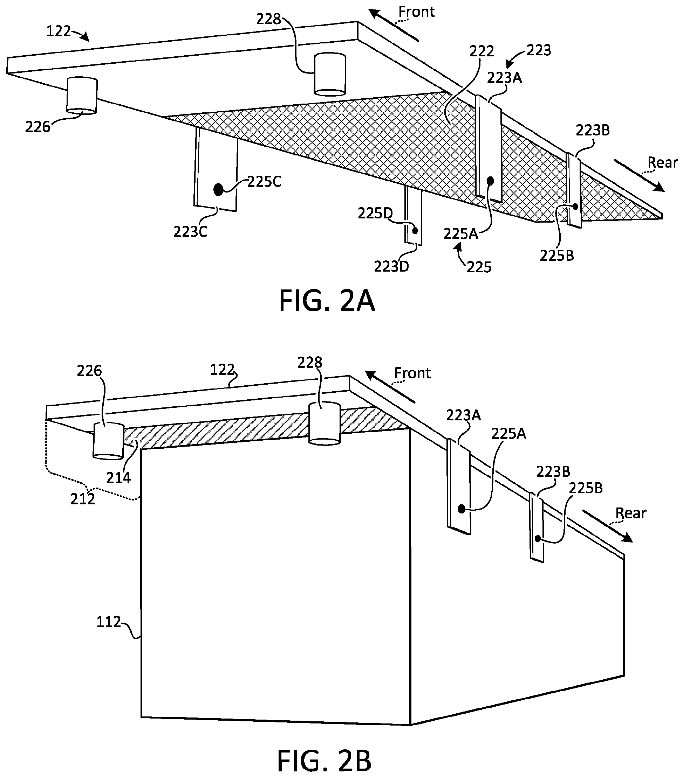

Figure 2A is a perspective view of an example of a TC element 122 of the disclosed TC system 120. Figure 2A illustrates aspects of the TC element 122 prior to being attached to an ES unit 112. As illustrated in the Figure 2A example, the TC element 122 may comprise an inlet 226 and outlet 228. TC media 152, such as coolant or the like, may be configured to flow through the TC element 122 from the inlet 226 to the outlet 228, or vice versa (inlet connection 126 and outlet connection 128 not shown to avoid obscuring details of the illustrated examples).

The TC element 122 may be configured to cover selected surface(s) of an ES unit 112. The surface(s) may be selected in accordance with thermal characteristics of the ES unit 112. In the Figure 2A example, the ES unit 112 may expel thermal energy primarily through the top or upper surface thereof and, as such, the TC element 122 may be configured to cover or overlay the top surface of the ES unit 112. The shape and/or configuration of the TC element 122 may be adapted to a shape and/or configuration of the ES unit 112. In the Figure 2B example, the ES unit 112 may have a rectangular shape and the TC element 122 may have a corresponding rectangular shape and/or configuration, e.g., may be configured to cover substantially the entire top surface of the rectangularly-shaped ES unit 112. The TC elements 122 may, therefore, comprise and/or be referred to as TC plates, TC panels, or the like. The disclosure is not limited in this regard, however; the TC elements 122 disclosed herein may be configured in accordance with any suitable type of ES unit 112 having any suitable shape and/or configuration.

In some implementations, the TC element 122 may comprise means for facilitating thermal coupling between the TC element 122 and the ES unit 112. As illustrated in Figure 2A, the TC element 122 may comprise a thermal transfer (TT) surface 222, which may correspond to the upper or top surface of the ES unit 112. The TT surface 222 may comprise means for facilitating thermal coupling, which may include, but are not limited to: thermally conductive material, thermal transfer tape or ribbon, thermal paste, and/or the like.

The TS element 122 may further comprise attachment means 123 (Figure 1), which may comprise any suitable means for securing the TC element 122 in thermal contact with the ES unit 112, which may include, but are not limited to, structural members (*e.g.*, tabs 223 as disclosed in further detail herein), fastening means, adhesives, bonding agents, and/or the like. In the examples illustrated in FIGS. 2A and 2B, the attachment means 123 may comprise one or more tabs 223A-D. The tabs 223A-D may be configured to be secured to an ES unit 112, *e.g.,* may be configured to be secured to the sides of the ES unit 112, as illustrated in Figure 2B. In some implementations, the tabs 223A-D may be configured to lock onto and/or within corresponding structures of the ES unit 112, *e.g.,* may comprise locking tabs 223A-D or the like. Alternatively, or in addition, the attachment means 123 may comprise fastening means. For example, the tabs 223A-D may be secured to the ES unit 112 by use of fasteners 225A-D. The fasteners 225 may comprise any suitable fastening means, which may include, but are not limited to, one or more screws, bolts, rivets, latches, clips, and/or the like.

As illustrated in Figure 2B, the inlet 226 and/or outlet 228 may be disposed on and/or within an overhang region 212 of the TC element 122. The overhang region 212 may comprise a region, section or portion of the TC element 122 configured to extend beyond an end of the ES unit 112; the TC element 122 may be configured to extend beyond a front or coupling end of the ES unit 112 along the longitudinal axis thereof. The overhang section 212 may comprise a coupling overhang (CO) region 214. The CO region 214 may comprise a region, section or portion of the overhang section 212 between the ES unit 112 and the inlet 226 and/or outlet 228 of the TC element 122. As disclosed in further detail herein, the CO region 214 may be configured to, *inter alia,* protect the ES unit 112. For example, protection means 130 (Figure 1) such as a plate or the like may be disposed within the CO region 214, which may enable the protection means 130 to isolate the ES unit 112 from components of the TC system 120, such as the inlet 226 of the TC element 122 (and/or inlets of other TC elements 122), the outlet 228, the TC coupling 124 (*e.g.,* inlet connection 126 and outlet connection 128), the first node 127, the second node 129, pressurized components 140 of the TC system 120, the HE system 150, and so on. Deploying protection means 130 within the CO region 214 may, therefore, protect the ES unit 112 from damage due to leakage of the TC media 152, condensation, breach of pressurized components 140, and/or the like.

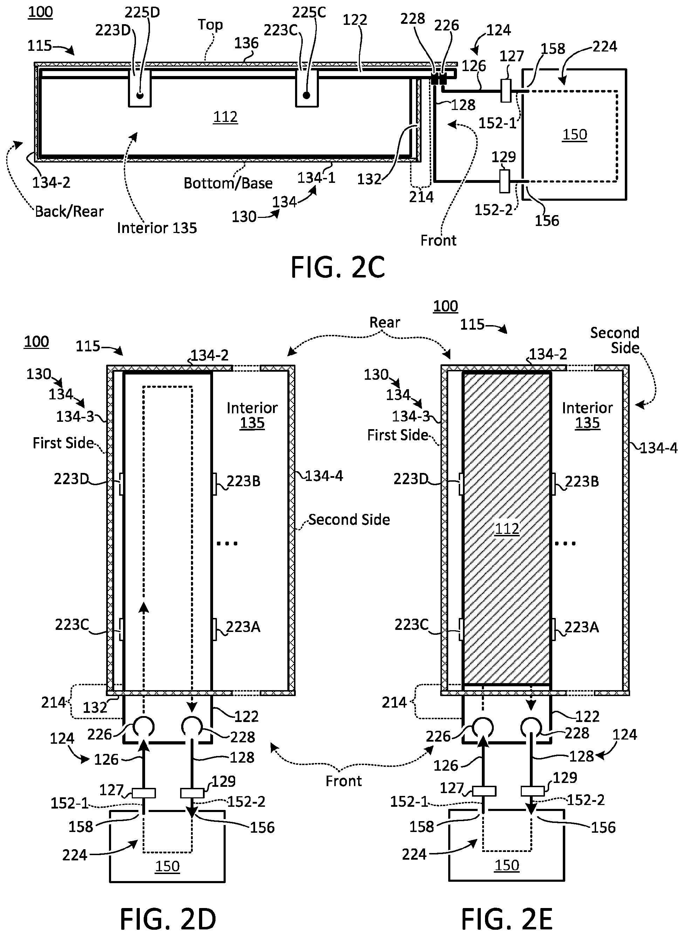

Figure 2C illustrates a side view of a TC element 122 attached to an ES unit 112. Figure 2C further illustrates an example of a TC coupling 124, including an inlet connection 126 configured to couple the inlet 226 of the TC element 122 to an outlet 158 of the heat exchange system 150 (*e.g.*, through a first node 127) and an outlet connection 128 configured to couple the outlet 228 of the TC element 122 to an inlet 156 of the heat exchange system 150 (*e.g.*, through a second node 129). For clarity, the inlet 226 and outlet 228 are depicted as being horizontally offset from one another. This disclosure is not limited in this regard, however, and the system could be adapted to align the inlet 226 and outlet 228 as illustrated in FIGS. 2A and 2B.

As illustrated in Figure 2C, the TC coupling 124 may be configured to connect the TC element 122 to the heat exchange system 150 independently of other TC elements 122 and/or other TC couplings 124 thereof (other TC elements 122 and corresponding TC couplings 124 not shown to avoid obscuring details of the illustrated examples). In other words, the TC coupling 124 of the TC element 122 may be configured to establish a TC circuit 224 between the TC element 122 and heat exchange system 150 that is separate from and/or independent of other TC elements 122 and/or TC couplings 124 of the TC system 120.

Figure 2C further illustrates examples of protection means 130, as disclosed herein. In the Figure 2C example, the protection means 130 may comprise a module support structure (MSS) 134 of the ES module 115. The MSS 134 may be configured to receive and/or secure a plurality of ES units 112. The MSS 134 may comprise any suitable means for receiving, enclosing, protecting, securing and/or otherwise holding one or more ES units 112 and/or corresponding TC elements 122 including, but not limited to a: frame, base, enclosure, shell, form, and/or the like. The MSS may comprise and/or be embodied by any suitable structural elements including, but not limited to, one or more panels, walls, rods, railing, beams, supports, braces, columns, posts, frames, mounts, brackets, gaskets, fasteners, and/or the like. The MSS 134 may comprise a base member 134-1 configured to, *inter alia,* support one or more ES units 112. The base member 134-1 may correspond to and/or define a bottom or base of the ES module 115. The MSS 134 may further comprise a rear or back member 134-2, which may correspond to and/or define a back or rear end of the ES module 115. In some implementations, the MSS 134 may further comprise a top member 136. As illustrated in the Figure 2C example, the top member 136 may be configured to cover a top portion of the ES module 115. The top member 136 may be configured to cover top surfaces of the ESS units(s) 112 disposed within the ES module 115. Alternatively, the top member 136 may be configured to extend beyond the ES units 112 to cover, *inter* alia, top surfaces of the TC elements 122 disposed within the ES module 115, as illustrated in the Figure 2C example. The MSS 134 may comprise and/or define an interior region 135, *e.g.,* may comprise and/or define an interior of the MSS 134 and/or ES module 115. The interior region 135 may comprise and/or correspond to a region that is at least partially enclosed by the MSS 134 and/or other protection means 130 of the ES module 115. For example, the interior region 115 may comprise and/or correspond to a region that is at least partially enclosed by the base member 134-1, back member 134-2, top member 136, and/or side members of the MSS 134 (*e.g.,* side members not shown in Figure 2C to avoid obscuring details of the illustrated examples).

As further illustrated in Figure 2C, the MSS 134 and/or protection means 130 may comprise a separator 132. The separator 132 may be configured to be removably secured, sealed, coupled, and/or otherwise attached to a lateral end of the ES module 115. The separator 132 may be configured to be attached to a front end of MSS 134, *e.g.,* may be configured to be attached to an end of the MSS 134 opposite the back or rear end of the ES module 115. The separator 132 may be disposed within the OC region 214 of the ES module 115. Accordingly, as illustrated in the Figure 2C example, the separator 132 may be configured to isolate, seal, shield, separate and/or otherwise protect the ES unit(s) 112 within the MSS 134 from components of the TC system 120, such as the TC coupling 124 of the TC element 122 (*e.g.,* the inlet connection 126 and/or outlet connection 128), the inlet 226 of the TC element 122, the outlet 228 of the TC element 122, the first node 127 (*e.g.,* inlet manifold), the second node 129 (*e.g.,* outlet manifold), pressurized components 140, the HE system 150, and so on. In some implementations, the separator 132 may be configured to prevent TC media 152 from penetrating the interior 135 of the MSS 134. For example, the separator 132 may be configured to be sealed over the front end of the MSS 134. The separator 132 may comprise any suitable sealing means including, but not limited to, one or more seals, gaskets, stripping, weather stripping, sealant material, and/or the like.

Figures 2D and 2E comprise bottom views of an example ES module 115. Figure 2D illustrates an example of a flow path by which TC media 152 may be circulated through a TC element 122 of the ES module 115, *e.g.,* a flow path from the inlet 226 of the TC element 122 to the outlet 228 thereof. In Figure 2D, the ES unit 112 coupled to the TC element 122 is not shown to avoid obscuring details of the illustrated examples. As illustrated in the Figure 2D example, the TC coupling 124 may establish a TC circuit 224 between the TC element 122 and HE system 150 wherein (a) initialized TC media 152-1 flows from the HE system 150 into the inlet 226 of the TC element 122, *e.g.,* via the first node 127 and inlet connection 126, (b) the initialized TC media 152-1 flows through the TC element 122, *e.g.,* flows from the inlet 226 to the outlet 228, and (c) the resulting utilized TC media 152-2 flows from the outlet 228 of the TC element 122 back to the HE system 150, e.g. through the outlet connection 128 and second node 129 into the HE inlet 156.

Figures 2D and 2E further illustrate examples of protection means 130 of the ES module 115. As disclosed herein, the protection means 130 may comprise an MSS 134 configured to receive and/or secure a plurality of ES units 112. The MSS 134 may be configured to at least partially enclose ES units 112 within an interior region 135 of the ES module 115, *e.g.,* may comprise one or more of a base member 134-1, back member 134-2, top member 136, first side member 134-3, and second side 134-4 (base member 134-1 and top member 136 not shown in Figures 2D and 2E to avoid obscuring details of the illustrated examples). The protection means 130 may further comprise a separator 132 configured to be removably attached to a front end of the ES module 115. The separator 132 may be disposed within an OC region 214 of the ES module 115. As disclosed herein, the separator 132 may be configured to isolate, seal, shield, separate and/or otherwise protect ES units 112 of the ES module 115 from components of the TC system 120. In some implementations, the separator 132 may be configured to be removably sealed to the front end of the MSS 134.

As disclosed herein, the TC system 120 may be configured to provide uniform TC functionality across a plurality of ES units 112. As illustrated in the Figure 1 example, the TC system 120 may comprise a plurality of TC elements 122A-N, each configured to provide substantially the same level of TC functionality to a respective one of $N$ ES units 112A-N. Providing uniform TC services across a plurality of TC elements 122A-N may comprise (a) coupling the TC elements 122A-N to initialized TC media 152-1 produced at the HE outlet 158 in parallel, such that the inlet connection 126A-N of each TC element 122A-N receives initialized TC media 152-1 in substantially the same state and (b) configuring TC couplings 124A-N of the TC elements 122A-N to exhibit substantially the same flow characteristics, *e.g.*, exhibit substantially the same pressure drop ($\Delta$P) resulting in substantially the same flow rate (Q). For example, the TC couplings 124A-N may be configured to have a substantially the same total length and/or orientation.

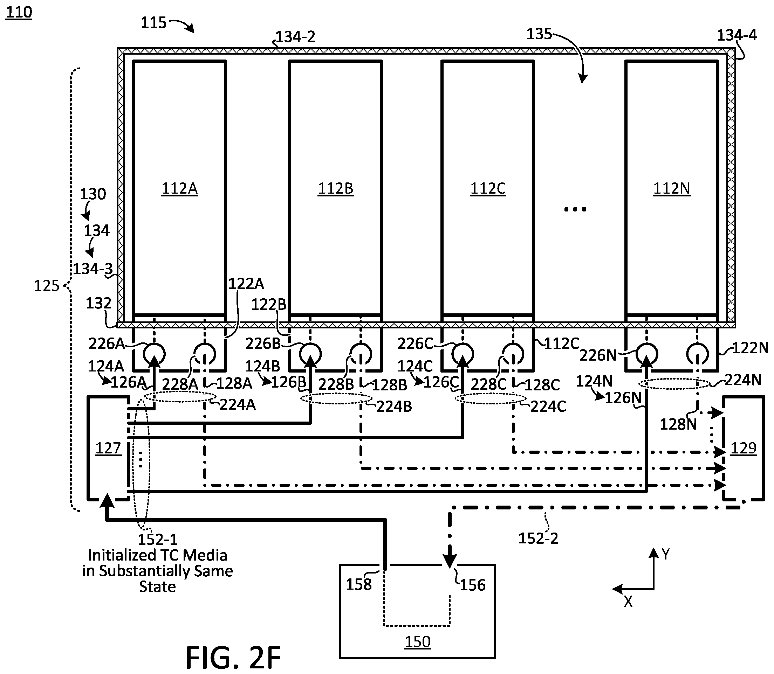

Figure 2F is a block diagram illustrating another example of an ES module 115 comprising TC elements 122 coupled to a HE system 150 in parallel by separate, independent TC couplings 124 having substantially equivalent flow characteristics. As illustrated in Figure 2F, the ES module 115 may comprise TC elements 122A-N, each coupled to the HE system 150 in parallel by a separate, independent TC coupling 124A-N. The TC couplings 124A-N may comprise separate, independent inlet connections 126A-N configured to couple inlets 126A-N of the TC elements 122A-N to initialized TC media 152-1 produced at the outlet 158 of the HE system 150 (via the first node 127). Therefore, as illustrated in Figure 2F, each TC element 122A-N may receive initialized TC media 152-1 in substantially the same quantity, flow rate, and/or state, *e.g.,* before being used by any other TC element 122A-N. The TC couplings 124A-N may further comprise separate, independent outlet connections 128A-N configured to couple utilized TC media 152 flowing from the outlets 128A-N of the TC elements 122A-N to the inlet 156 of the HE system 150 (via the second node 129). Each, TC element 122A-N may, therefore, be configured to circulate TC media 152 through a respective separate, independent TC circuit 224A-N.

The TC elements 122A-N may be further configured to exhibit substantially the same flow characteristics, *e.g.,* exhibit substantially equivalent pressure drop ($\Delta$P) for TC media 152 circulating through respective TC couplings 124A-N (and/or TC circuits 224A-N) resulting in substantially equivalent flow rate (Q) through each TC element 122A-N. In other words, the TC elements 122A-N (and/or TC couplings 124A-N thereof) may be configured to exhibit flow characteristics per the two equations below (collective Eq. 1):

$$\Delta P_A \approx \Delta P_B \approx \Delta P_C \approx \cdots \approx \Delta P_M \qquad \qquad \text{Eq. 1}$$

$$Q_A \approx Q_B \approx Q_C \approx \cdots \approx Q_M$$

In Eq. 1, the $\Delta P_i$ symbols represent the pressure drop exhibited by respective TC elements 122-*i, e.g.,* represent pressure drop ($\Delta P_i$) exhibited by TC media 152 circulating through the TC circuit 224-*i* and/or TC coupling 124-*i* of the TC element 122-*i*, which may comprise circulation of initialized TC media 152-1 from the HE system 150 to the inlet 226-*i* of the TC element 122-*i* via inlet connection 126-*i*, circulation of the initialized TC media 152-1 through the TC element 122-*i* to outlet 228-*i*, and circulation of the resulting utilized TC media 152-2 back to the HE system 150 via the outlet connection 128-*i* of the TC element 122-i. In Eq. 1, the $Q_i$ symbols represent the flow rate (Q) of TC media 152 through respective TC elements 122-*i*, which may be a function of the pressure drop ($\Delta P_i$) exhibited by the TC couplings 124-*i* and/or TC circuits 224-*i* of the respective TC elements 122-*i*.

The pressure drop ($\Delta P_i$) and/or flow rate ($Q_i$) of TC media 152 through a TC element 122-i may be a function of, *inter alia,* the total length of the TC coupling 124-*i* thereof. Other factors that may influence the pressure drop ($\Delta P_i$) and/or flow rate ($Q_i$) of TC media 152 include the size and shape of the passage through which the TC media 152 passes and the material used to form the passage through which the TC media 152 passes. Accordingly, normalizing the flow characteristics of the TC elements 122A-N may comprise configuring the total length of the couplings 124A-N of the TC elements 122A-N to be substantially the same, as well as accounting for other factors that may influence the pressure drop ($\Delta P_i$) and/or flow rate ($Q_i$) of TC media 152. As illustrated in Figure 2F, the position of the TC elements 122A-N relative to nodes 127 and 129 of the TC system 120 may be configured such that the total length of each TC coupling 124A-N is substantially equivalent. For example, the TC couplings 124A-N of the TC elements 122A-N may be configured in accordance with the equations below (collectively Eq. 2):

$$l_{cpl\_A} \approx l_{cpl\_B} \approx l_{cpl\_C} \approx \cdots \approx l_{cpl\_M} \qquad \text{Eq. 2}$$

$$\left(l_{in\_A} + l_{out\_A}\right) \approx \left(l_{in\_B} + l_{out\_B}\right) \approx \left(l_{in\_C} + l_{out\_C}\right) \approx \cdots \approx \left(l_{in\_M} + l_{out\_M}\right)$$

In Eq. 2, $l_{cpl\_i}$ represents the total length of the TC coupling 124-$i$ of TC element 122-$i$ (*e.g.*, $l_{cpl\_A}$ may represent the total length of TC coupling 124A, $l_{cpl\_M}$ may represent the total length of TC coupling 124N, and so on), $l_{in\_i}$ represents the length of the inlet connection 126-$i$ of TC coupling 124-$i$, and $l_{out\_i}$ represents the length of the outlet connection 128-$i$ of TC coupling 124-$i$.

In some implementations, normalizing the flow characteristics of the TC elements 122A-N may further comprise aligning the TC couplings 124A-N of the TC elements 122A-N. As used herein, aligning the TC couplings 124A-N may comprise configuring sections of the TC couplings 124A-N to run in substantially equivalent orientations (*e.g.*, may comprise configuring sections of respective inlet connections 126A-N and/or outlet connections 128A-N to run substantially parallel to one another). As illustrated in the Figure 2F example, sections of the inlet connections 126A-N and/or outlet connections 128A-N may be configured to run parallel to one another with respect to the X and Y axes of Figure 2F.

Although Figure 2F illustrates examples of TC couplings 124A-N having parallel orientations with respect to a set of arbitrary axes X and Y, the disclosure is not limited in this regard and the system could be adapted to align the orientations of the TC couplings 124A-N with respect to any suitable axes and/or reference, *e.g.,* the inlet connections 126AN and/or outlet connections 128A-N may be configured to run at corresponding angles and/or equivalent curved orientations or the like. For example, TC couplings 124A-N of the TC elements 122A-N may be configured to mirror one another, *e.g.*, based on respective proximity to nodes 127 and 129. For example, as illustrated in Figure 2F, TC coupling 124A of TC element 122A may be configured to mirror TC coupling 124N of TC element 122N, *e.g.,* the inlet connection 126A may be configured to mirror the outlet connection 128N and the outlet connection 128A may be configured to mirror the inlet connection 126N. TC couplings 124 of other TC elements 122 may be configured to mirror other, corresponding TC couplings 124. For example, in implementations in which the ES module 115 comprises four ES units 112, the TC coupling 124B of TC element 122B may be configured to mirror the TC coupling 124C of TC element 122C. Aligning the TC couplings 124A-N may be configured to normalize the flow characteristics of the TC elements 122A-N per Eq. 1 above (*e.g.,* in addition to normalizing lengths of the TC couplings 124A-N).

As disclosed herein, the TC elements 122A-N of the TC system 120 may be coupled to the HE system 150 by TC couplings 124A-N configured to exhibit substantially equivalent flow characteristics. The TC couplings 124A-N may be separate and/or independent of each other. For example, the TC element 122A may be coupled to the HE system 150 by TC coupling 124A (*e.g.,* TC circuit 224A), which may separate from and/or independent of TC couplings 124B-N (*e.g.,* TC circuits 224B-N); the TC element 122B may be coupled to the HE system 150 by TC coupling 124B (*e.g.,* TC circuit 224B), which may be separate from and/or independent of TC couplings 124A and 124C-N (*e.g.,* TC circuits 224A and 224B-N); and so on. Accordingly, the TC elements 122A-N may continue to operate despite disruptions to other TC elements 122A-N (*e.g.,* despite disruption to other TC couplings 124A-N, TC circuits 224A-N, and/or the like).

In the Figure 2F example, the ES module 115 may further comprise protection means 130. As disclosed herein, the protection means 130 may comprise an MSS 134 configured to receive and/or secure a plurality of ES units 112A-N and/or corresponding TC elements 122A-N within an interior region 135 of the ES module 115. The MSS 134 may be configured to at least partially enclose the ES units 112A-N and/or corresponding TC elements 122A-N. The MSS 135 may comprise a base member 134-1, back member 134-2, first side member 134-3, second side member 134-4, top member 136, and so on (base member 134-1 and top member 136 not shown in Figure 2F to avoid obscuring details of the illustrated examples). The protection means 130 may further comprise a separator 132 configured to be removably secured to front lateral end of the MSS 134. The separator 132 may be disposed within an OC region 214 of the ES module 115. Accordingly, the separator 132 may be configured to isolate, seal, shield, separate and/or otherwise protect ES units 112 within the interior region 135 of the ES module 115 from components of the TC system 120.

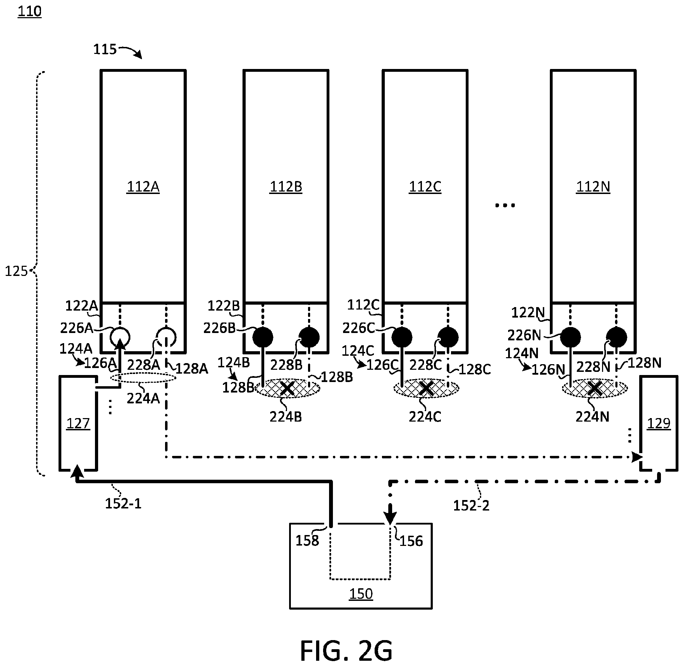

Figure 2G is a block diagram illustrating another example of an ES module 115 of a TC ES system 100, as disclosed herein. Protection means 130, such as the MSS 134 and separator 132 are not shown in Figure 2G to avoid obscuring details of the illustrated examples. In the Figure 2G example, the TC couplings 124B-N of TC elements 122B-N (and corresponding TC circuits 224B-N) may be disrupted. The TC coupling 124 of a TC element 122 may be disrupted for various reasons including, but not limited to: damage to the TC coupling 124 itself (*e.g.*, damage to the inlet connection 126, inlet 226, outlet connection 128, outlet 228, or the like), blockage within the TC coupling 124, damage to the TC element 122, blockage within the TC element 122, or the like. Alternatively, the TC elements 122B-N may be intentionally disconnected from the HE system 150 for maintenance or the like.

As illustrated in Figure 2G, the TC element 122A may remain coupled to the HE system 150 through the separate, independent TC coupling 124A despite disruption to the TC couplings 124B-N of TC elements 122B-N. The inlet 226A of the TC element 122A may be coupled to the HE outlet 158 by an inlet connection 126A that is separate from and independent of the inlet connections 126B-N of the TC couplings 124B-N of TC elements 122B-N. Accordingly, initialized TC media 152-1 may flow into the inlet 226A of the TC element 122A from the HE system 150 regardless of disruption to the inlet connections 126B-N of TC elements 122B-N. In addition, the outlet 228A of the TC element 122A may be coupled to the HE inlet 156 by an outlet connection 128A that is separate from and independent of the outlet connections 1268B-N of the TC couplings 124B-N of TC elements 122B-N. Accordingly, utilized TC media 152-2 may flow from the outlet 128A of the TC element 122A back into the HE system 150 regardless of disruption to the outlet connections 128B-N of TC elements 122B-N.

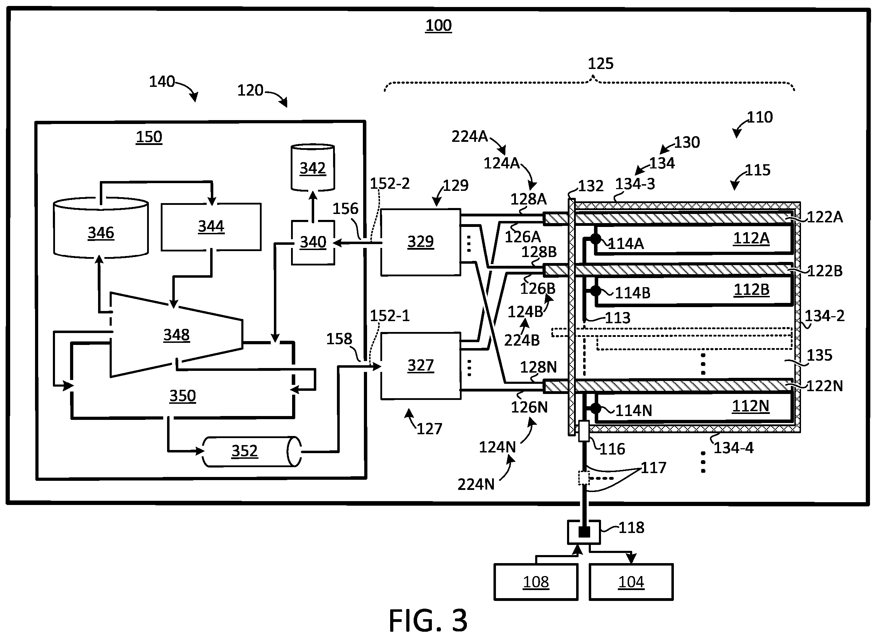

Figure 3 is a schematic block diagram illustrating another example of a TC ES system 100. In the Figure 3 example, The TC system 120 may be configured to control the temperature of an ES system 110 comprising one or more ES modules 115, each ES module 115 comprising a respective set of N ES units 112, as disclosed herein, where N represents an upper limit of more than 1, but not necessarily 14. The TC system 120 may comprise one or more TC modules 125, each TC module 125 comprising N TC elements 122 attached to respective ES units 112, *e.g.*, TC elements 122A-N attached to ES units 112A-N. As illustrated in Figure 3, the TC elements 122A-N may be secured to ES units 112A-N by respective attachment means 123, such as locking tabs 223, fasteners 225, and/or the like. The ES module 115 may comprise protection means 130, which may comprise a separator 132 and MSS 134. The MSS 134 may be configured to at least partially enclose the ES units 112A-N and corresponding TC elements 122A-N within an interior region 135 of the ES module 115 (bottom member 134-1 and top member 136 of the MSS 134 not shown in Figure 3 to avoid obscuring details of the illustrated examples). The separator 132 may be configured to be removably attached and/or sealed over a front end of the MSS 134.

As disclosed herein, each TC element 122A-N of the TC module 125 may be coupled to the HE system 150 by a separate, independent TC coupling 124A-N. In other words, each TC element 122A-N may comprise a separate, independent TC circuit 224A-N, each TC circuit 224 comprising (a) receiving initialized TC media 152-1 from the HE system 150 at an inlet 226 of the TC element 122 via the inlet connection 226 of the TC element and (b) expelling utilized TC media 152-2 from the outlet 228 of the TC element 122, the utilized TC media 152-2 flowing back to the HE system 150 via the outlet connection 128 of the TC element 122 where the utilized TC media 152-2 may be reinitialized and recirculated. The TC elements 122A-N may be configured to exhibit substantially equivalent flow characteristics, *e.g.*, substantially equivalent pressure drop ($\Delta P$), flow rate (Q), and/or the like per Eq. 1. For example, the TC elements 122A-N may be configured such that the TC couplings 124A-N connecting respective TC elements 122A-N to the HE system 150 are of substantially equal length. In some implementations, the TC elements 122A-N may be further configured to align aspects of the TC couplings 124A-N, *e.g.*, align the TC couplings 124A-N such that sections of the outlet connections 126A-N and/or inlet connections 128AN run parallel to one another.

Figure 3 further illustrates an example of a heat exchange system 150. In the Figure 3 example, utilized TC media 152-2 from the TC elements 122A-N may flow into the HE system 150 via the HE inlet 156 and manifold 329 (*e.g.*, second or outlet manifold 329). The utilized TC media 152-2 may flow into a heat exchanger 350 though a tank 340, which may be coupled to expansion means, *e.g.*, an expansion tank 342. The heat exchanger 350 may comprise an expansion valve 348 coupled to a condenser 344 and compressor 346. The heat exchanger 350 may be configured to re-initialize utilized TC media 152-2 received through the HE inlet 156 and the resulting initialized TC media 152-1 may flow to the TC elements 122A-N via the HE outlet 158 and/or manifold 327 (*e.g.*, first or inlet manifold 327). TC media 152 may be circulated through the TC elements 122A-N by any suitable circulation means such as a pump 352 or the like.

The TC system 120 may comprise and/or be embodied by any suitable components. By way of non-limiting example, in some implementations, initialized TC media 152-1 produced by the heat exchanger 350 may flow to the pump 352 via a 3/4-inch hose coupled between a 7/8-inch 14 Unified National Fine Thread (UNF) outlet of the heat exchanger 350 and a 3/4 inlet of the pump 352. Initialized TC media 152-1 may be pumped into a 3/4-inch inlet of the first manifold 327 (HE outlet 158) via a 3/4-inch hose coupled to a 3/4 outlet of the pump 352. The first manifold 327 may be configured to distribute initialized TC media 152-1 to each TC element 122A-N in parallel via separate, independent inlet connections 126A-N, each comprising 3/4-inch hose coupled to a respective 5/8-inch outlet of the first manifold 327 coupled to a 16-millimeter (mm) inlet 226A-N of a respective TC element 122A-N. The parallel connections between the HE system 150 and respective TC elements 122A-N may be configured such that each TC element 122A-N receives initialized TC media 152-1 in a substantially same state. In other words, each TC element 122 of TC elements 122A-N may receive "freshly" initialized TC media 152-1 before such initialized TC media 152-1 has been used to provide TC services through any other TC element 122 (and/or before the initialized TC media 152-1 has been used to provide TC services to any of the ES units 112A-N). The initialized TC media 152-1 may flow through respective TC elements 122A-N and the resulting utilized TC media 152-2 may flow to the second manifold 329 via a plurality of separate, independent outlet connections 128A-N, each comprising a 3/4-inch hose coupled to a 16-mm outlet 228A-N of a respective TC element 122A-N and a respective 5/8-inch inlet of the second manifold 329. The second manifold 329 may comprise a 3/4-inch outlet coupled to an inlet of the tank 340 by a 3/4-inch hose (HE inlet 156), the tank 340 may be coupled to 5-liter expansion tank 342 by a 3/8-inch hose. Utilized TC media 152-2 may flow from the tank 340 to a 7/8-inch 14 UNF inlet of the heat exchanger 350 via a 3/4-inch hose. The expansion valve 348 of the HE system 150 may be coupled to the small outlet and large inlet of the heat exchanger 350. In addition, the small side outlet of the expansion valve 348 may be coupled to an 18.3-mm suction inlet of the compressor 346 and a 15.5-mm discharge outlet of the compressor 346 may be coupled to a 3/4-inch inlet of the condenser 344. A 5/8-inch outlet of the condenser 344 may be coupled to a large-side inlet of the expansion valve 348. Utilized TC media 152-2 received from the tank 340 may be re-initialized by the heat exchanger 350 *(e.g.,* cooled, heated, or the like), and the resulting, initialized TC media 152-1 may be circulated through the TC system 120 by the pump 352, as disclosed herein.

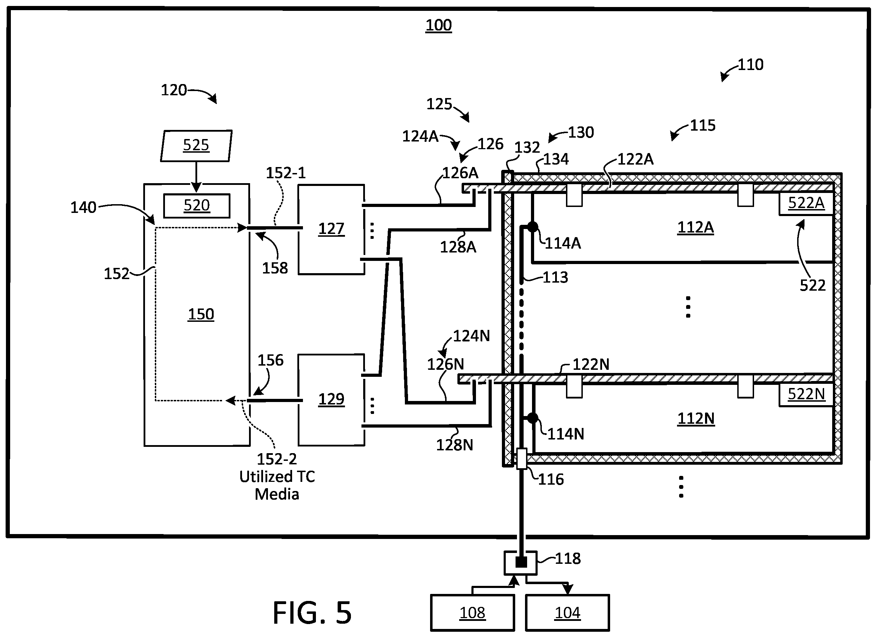

The pump 352 may be configured to circulate TC media 152 through respective TC elements 122A-N of the TC system 120 according to a specified flow rate (Q). The flow rate *(Q)* may be determined by control logic, as disclosed in further detail herein *(e.g.,* by TC logic 520 described below in conjunction with Figure 5). The TC elements 122A-N may be coupled to the HE system 150 *(e.g.,* HE outlet 158) in parallel. In other words, each TC element 122A-N may comprise a separate, independent TC circuit 224 in which TC media 152-1 circulates through TC elements 122A-N independently; each TC element 122A-N may comprise a separate, independent TC coupling 124A-N, each comprising a separate, independent inlet connection 126A-N coupled to the outlet of the HE system 150 *(e.g.,* outlet of the pump 352 through the first manifold 327) and a separate, independent outlet connection 128A-N coupled to the inlet of the HE system 150 *(e.g.,* inlet of the tank 340 through the second manifold 329).

The TC couplings 124A-N may be further configured to exhibit substantially equivalent flow characteristics. The TC couplings 124A-N may be configured to exhibit substantially equivalent pressure drops (ΔP) and/or flow rates (Q) per Eq. 1 above. Normalizing the flow characteristics of the TC elements 122A-N may comprise configuring the TC couplings 124A-N to have substantially the same total length per Eq. 2 (and as illustrated in Figure 2F). In some implementations, normalizing the flow characteristics of the TC elements 112A-N may further comprise aligning the TC couplings 124A-N, *e.g.,* configuring sections of the TC couplings 124A-N to run parallel with one another, as illustrated in Figure 2F.

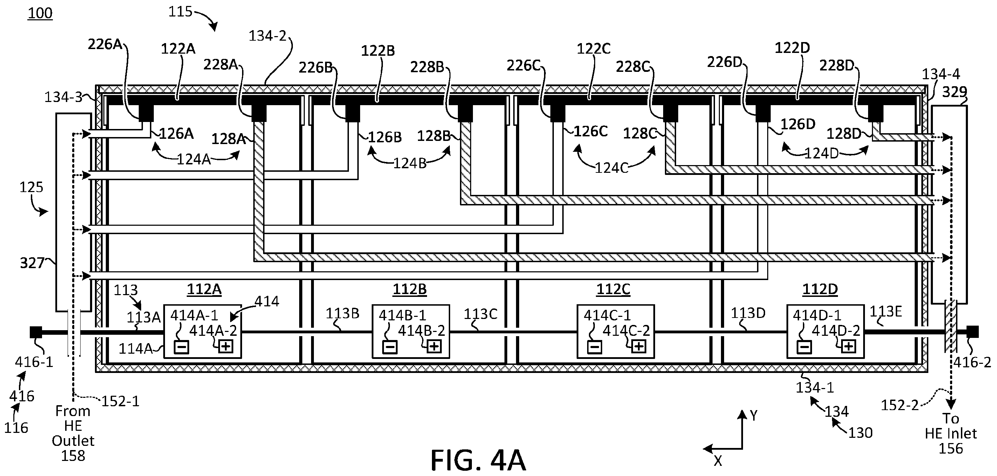

Figure 4A is a front view of another example of an ES module 115 of a TC ES system 110. In the Figure 4A example, the ES module 115 comprises four ES units 112 and the corresponding TC module 125 comprises four TC elements 122, *e.g.,* TC elements 122A-D attached to top surfaces of ES units 112A-D, respectively. The ES units 112A-D may comprise respective UEI 114. As illustrated in Figure 4A, the UEI 114 may comprise respective terminals 414, including a first terminal 414A *(e.g.,* a negatively charged electrode such as a cathode) and a second terminal 414B *(e.g.,* a positively charged electrode such as an anode); the UEI 114A of ES unit 112A may comprise terminals 414A-1 and 414A-2, the UEI 114B of ES unit 112B may comprise terminals 414B-1 and 14B-2, the UEI 114C of ES unit 112C may comprise terminals 414C-1 and 414C-2, the UEI 114D of ES unit 112D may comprise terminals 414D-1 and 414D-2, and so on.

As further illustrated, the ES units 112A of the ES module 115 may be electrically coupled to a MEI 116 of the ES module 115. The MEI 116 may comprise one or more terminals 416, including a first terminal 416-1 *(e.g.,* a negative terminal) and a second terminal 416-2 *(e.g.,* a positive terminal). The ES units 112 may be electrically coupled to the MEI 116 (and/or one another) by, *inter alia,* unit couplings 113. In the Figure 4A example, the unit couplings 113 may be configured to electrically couple the ES units 112 in series: the unit coupling 113A may be configured to electrically couple the first terminal 414A-1 of ES unit 112A to the first terminal 416-1 of the MEI 416, the unit coupling 113B may be configured to electrically couple the second terminal 414A-2 of ES unit 112A to the first terminal 414B-1 of ES unit 112B, the unit coupling 113C may be configured to electrically couple the second terminal 414B-2 of ES unit 112B to the first terminal 414C-1 of ES unit 112C, the unit coupling 113D may be configured to electrically couple the second terminal 414C-2 of ES unit 112C to the first terminal 414D-1 of ES unit 112D, and the unit coupling 113E may be configured to electrically couple the second terminal 414D-2 of ES unit 112D to the second terminal 416-2 of the MEI 116. Although the ES units 112A-D are electrically coupled in series in the Figure 4A example, the disclosure is not limited in this regard and could be adapted to electrically couple ES units 112 in any suitable configuration.

The TC elements 122A-N may be configured to exhibit substantially equivalent flow characteristics, *e.g.,* substantially equivalent pressure drop (ΔP), flow rate (Q), and so on per Eq. 1. Normalizing the flow characteristics of the TC elements 122A-N may comprise configuring the TC couplings 124A-N thereof to have substantially equal lengths per Eq. 2. In the Figure 4A example, the TC elements 122A-D may be configured per the equations below (Eq. 3):

$$l_{cpl\_A} \approx l_{cpl\_B} \approx l_{cpl\_C} \approx l_{cpl\_D} \qquad \text{Eq. 3}$$

$$(l_{in\_A} + l_{out\_A}) \approx (l_{in\_A} + l_{out\_A}) \approx (l_{in\_A} + l_{out\_A}) \approx (l_{in\_D} + l_{out\_D})$$

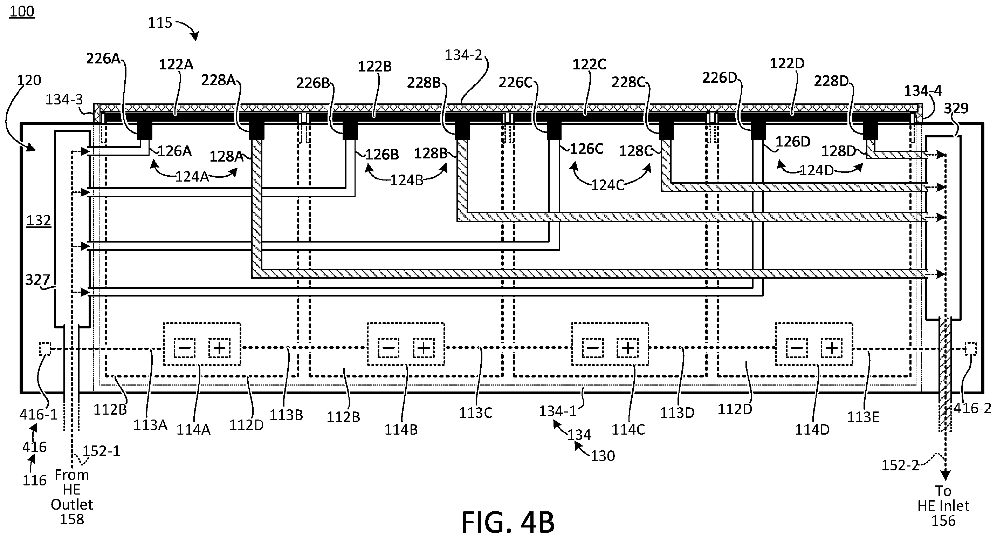

Normalizing the flow characteristics of the TC element 122A-N may further comprise aligning connections of the TC couplings 124A-N and/or considering other factors such as geometry and materials, as disclosed herein. As illustrated in FIGS. 4A and 4B, sections of the inlet connections 126A-N and/or outlet connections 128A-N may be configured to run parallel to one another with respect to the X and Y axes. Although parallel connections are illustrated in Figure 4A, the disclosure is not limited in this regard and could be adapted to utilize TC couplings 124A-D of any suitable orientation *(e.g.,* any orientation configured to produce substantially equivalent flow characteristics), including orientations in which the inlet connections 126A-D and/or outlet connections 128A-D of the TC couplings 124A-D have non-parallel orientations.

Coupling TC elements 122A-D having normalized flow characteristics to the HE system 150 in parallel by TC couplings 124A-D of substantially equivalent length may cause pressure drop ($\Delta$P) and flow rate ($Q$) of TC media 152 through each TC element 122A-D to be substantially equal. Coupling the TC elements 122A-D to the HE system 150 in parallel by TC couplings 124A-D of substantially equivalent length as disclosed herein may, therefore, configure the TC system 120 to provide uniform TC services across the plurality of ES units 112A-D comprising the ES module 115.

Figure 4B is a front view of another example of an ES module 115 of a TC ES system 100. As disclosed herein, the TC elements 122 attached to respective ES units 112 may be configured to overhang and/or extend beyond a front end of the ES units 112. In other words, when attached to an ES unit 112, the TC element 122 may create a CO region 214 that extends beyond a front end of the ES unit 112, as illustrated in, *inter alia,* Figures 2B-2F. The protection means 130 of the ES module 115 may comprise a MSS 134, which may comprise a base member 134-1, back member 134-2, first side member 134-3, and second side member 134-4 (back member 134-2 not shown in Figure 4B to avoid obscuring details of the illustrated examples). The protection means 130 may further comprise a separator 132, which may be configured to be removably attached to a front end of the MSS 134. In the Figure 4B example, the separator 132 is secured to the MSS 134 such that the ES units 112A-D are substantially enclosed within the protection means 130. As disclosed herein, front ends of the TC elements 122A-D may laterally extend beyond the ES units 112A-D (and MSS 134). The separator 132 may be disposed within the OC region 214 such that the separator 132 separates, isolates, seals, shields and/or otherwise protects the ES units 112A-D (and electrical components thereof such as the UEI 114A-E and unit couplings 113) from components of the TC system 120 such as the TC couplings 124A-D, inlets 226A-D, outlets 228A-D, first manifold 327, second manifold 329, pressurized components 140 of the TC system 120, the HE system 150, and so on (pressurized components 140 and HE system 150 not shown in Figure 4B to avoid obscuring details of the illustrated examples).

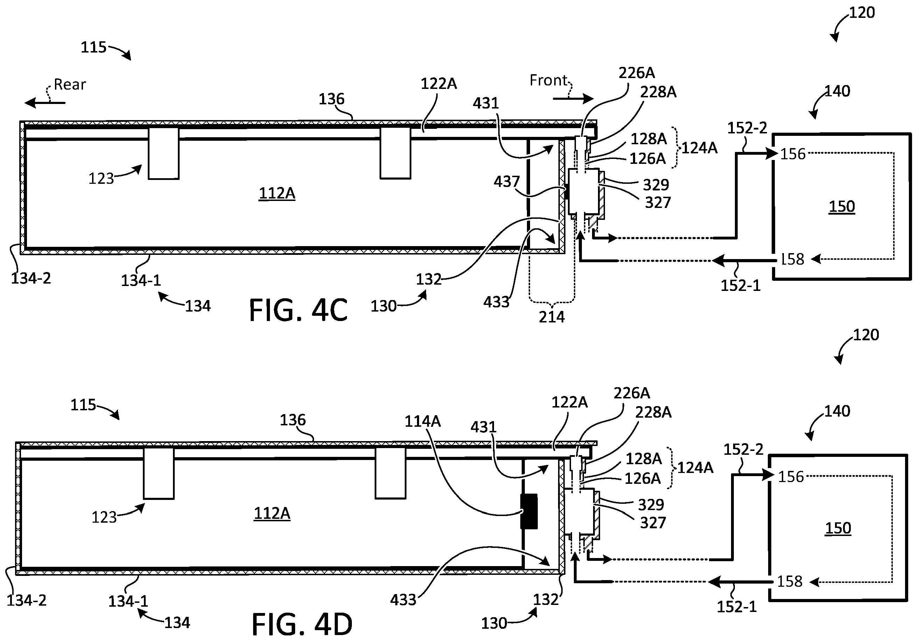

Figure 4C is a first side view of another example of a ES module 115comprising a plurality of TC elements 122attached to respective ES units 112, *e.g.,* TC elements 122A-D attached to ES units 112A-D as in the examples illustrated in FIGS. 4A and 4B (TC elements 122B-D and corresponding ES units 112B-D not shown Figure 4C to avoid obscuring details of the illustrated examples). As disclosed herein, the ES units 112A-D may be secured within the ES module 115 by a MSS 134, which may comprise a base member 134-1, back member 134-2, first side member 134-3, second side member 134-4, and top member 136 (side members 134-3 and 134-4 not shown in Figures 4C and 4D to avoid obscuring details of the illustrated examples).

The ES module 115 may further comprise protection means 130, which may include, *inter alia,* a separator 132. The separator 132 may be configured to be attached to a front end of the MSS 134. As illustrated in Figure 4C, the separator 132 may be disposed within an CO region 214 of the ES module 115. As disclosed herein, the CO region 214 may correspond to an overhang region between the front end of the ES units 112 and TC couplings 124 of the TC elements 122 (*e.g.,* between a lateral end of the ES units 112 and the inlets 226 and/or outlets 228 of the TC elements 122). As disclosed herein, positioning the separator 132 within the CO region 214 of the ES module 115 may enable the separator 132 to isolate, seal, shield, separate and/or otherwise protect the ES units 112 of the ES module 115 from components of the TC system 120. As illustrated in Figures 4C and 4D, the separator 132 may be disposed between the ES units 112 within the ES module 115 and the TC couplings 124 of the TC elements 122 coupled to the ES units 112 (*e.g.,* TC coupling 124A of TC element 122A including inlet connection 126A and outlet connection 128A), the inlets 226 and outlets 228 of the TC elements 122 (*e.g.,* inlet 226A and outlet 228A of TC element 122A), the first manifold 327, the second manifold 329, pressurized components 140 of the TC system 120, the HE system 150, and so on.

In some implementations, the separator 132 may be configured to isolate, seal, shield, and/or otherwise protect the ES units 112 (and/or electronic components thereof) from exposure to TC media 152. The separator 132 may be configured to be sealed over the front end of the MSS 134, *e.g.,* the separator 132 may be configured to contact and/or form a seal 431 with TC element 122A (and/or other TC elements 122B-D of the ES module 115). The separator 132 may be further configured to contact and/or form a seal 433 with the MSS 134, *e.g.,* may be configured to be sealed to one or more of the base member 134-1, first side member 134-3, second side member 134-4, and/or the like.

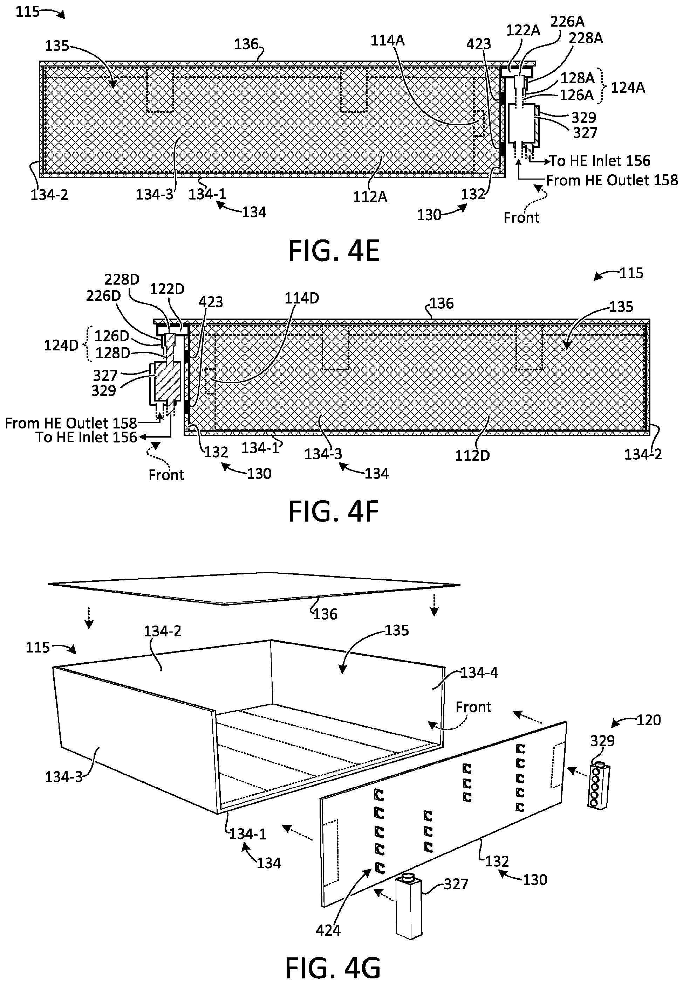

In some implementations, one or more components of the TC system 120 may be mounted on and/or secured to the ES module 115 by use of the protection means 130. For example, the first manifold 327 and/or second manifold 329 may be secured to the separator 132, as illustrated in Figures 4C and 4D, *e.g.,* by attachment means such as one or more manifold fasteners 437, which may comprise any suitable attachment and/or fastening means, as disclosed herein. In some implementations, the separator 132 may further comprise means for securing TC couplings 124 of the ES module 115, *e.g.,* may comprise TC guides 424 as disclosed in further detail herein. Accordingly, the separator 132 may comprise and/or be referred to as a TC support member or TC support structure. Alternatively, or in addition, the first manifold 327 and/or second manifold 329 may be mounted on and/or secured by other structural elements of the TC system 120 and/or ES module 115.

Figure 4D is a side view of another example of an ES module 115comprising protection means 130. As disclosed herein, the protection means 130 may be configured to isolate, seal, shield, separate and/or otherwise protect electrical components of the ES module 115, such the ES units 112, UEI 114 of the ES units 112, and so on. The protection means 130 may comprise a separator 132 coupled to an MSS 134. The MSS 134 may be configured to hold a plurality of ES units 112 and corresponding TC elements 122. The MSS 134 may comprise a base member 134-1, back member 134-2, first side member 134-3, second side member 134-4, and top member 136 (first side member 134-3 and second side member 134-4 not shown in Figure 4D to avoid obscuring details of the illustrated examples).

The protection means 130 may further comprise a separator 132 configured to be secured to a front end of the MSS 134. As disclosed herein, the separator 132 may be configured to be disposed within the CO region 214 of the ES module 115 and, as such, may be configured to isolate, seal, shield, separate, and/or otherwise protect UEI 114 of the ES units 112 within the ES module 115 from aspects of the TC system 120, e.g., from the TC couplings 124 (e.g., TC coupling 124A of TC element 122A including inlet connection 126A, inlet 226A, outlet connection 128A, outlet 228A, and so on), the first manifold 327, the second manifold 329, pressurized components 140 of the TC system 120, the HE system 150 (e.g., the HE inlet 156 and HE outlet 158), and so on. The separator 132 may be further configured to protect the ES units 112 (and/or UEI 114 thereof) from TC media 152, e.g., isolate the ES units 112 from leaks, condensation, and/or the like. In some implementations, the separator 132 may be configured to contact and/or form a seal 431 along inner surfaces of the TC elements 122 within the CO region 214 of the ES module 115. For example, the separator 132 may be disposed in a vertical configuration such that the separator 132 covers front sections of respective ES units 112A-D of the ES module 115, as illustrated in Figure 4B. The separator 132 may be further configured to contact and/or form a seal 433 with the MSS 134, e.g., contact and/or form a seal with the baser member 134-1, first side member 134-3, second side member 134-4, and/or the like. In some implementations, the separator 132 may be removably attached to the MSS 134. For example, the separator 132 and/or top member 132-2 may be removed from the MSS 134, which may facilitate access to the ES units 112A-D and/or electrical components thereof (e.g., UEI 114A-D) during installation, maintenance, or the like.

In some implementations, the protection means 130 may be configured to enclose and/or define an interior region 135 of the ES module 115. Figures 4E and 4F are side views of an ES module 115 comprising protection means 130 configured to substantially enclose a plurality of ES units 112. Figure 4E comprises a first side view and Figure 4F illustrates a second, opposite side view of the ES module 115. In the example illustrated in Figures 4E and 4F, the ES module 115 may comprise D ES units 112. As illustrated in Figure 4E, the ES unit 112A (and corresponding TC element 122A) may be disposed along the first side of the ES module 115 and, as illustrated in Figure 4F, the ES unit 112D (and corresponding TC element 122D) may be disposed along the second side of the ES module 115.

The protection means 130 of the ES module 115 may include an MSS 134, which may comprise a base member 134-1, back member 134-2, first side member 134-3 (e.g., illustrated in Figure 4E), second side member 134-4 (e.g., illustrated in Figure 4F), and top member 136. The MSS 134 may, therefore, be configured to define and/or substantially enclose the base, rear, top, and lateral sides of an interior region 135 of the ES module 115. In some implementations, the top member 136 may be configured to be removably attached to the MSS 134, e.g., may be removably attached to the rear member 132-2, first side member 134-3, and/or second side member 134-4 of the MSS 134.

The protection means 130 may further comprise a separator 132 configured to be removably attached or sealed over a front end of the MSS 134. The separator 132 may be configured to be removably attached to the MSS 134 by one or more fasteners 423. The fasteners 423 may comprise any suitable attachment and/or fastening means, as disclosed herein. As illustrated in Figures 4E and 4F, the separator 132 may be removably attached or sealed to one or more of the base member 134-1, first side member 134-3 and/or second side member 134-4. In some implementations, the separator 132 may be configured to be removably sealed to the MSS 134. For example, the separator 132 may be sealed to the MSS 134 by use of fasteners 134 comprising sealing means, such as one or more seals, gaskets, stripping, weather stripping, sealant material, and/or the like.

Although particular examples of protection means 130 are described herein, the disclosure is not limited in this regard and could be adapted to utilize any suitable protection means 130 comprising any suitable structural elements. For example, in some implementations, bottom, rear, and/or side portions of the MSS 134 may be implemented by same or common structural elements, e.g., members 134-1, 134-2, 134-3, and/or 134-4 may be formed from a tray, frame, or the like.

Figure 4G comprises a perspective view of another example of an ES module 115 configured to hold a plurality of ES units 112 (and/or corresponding TC elements 122). As illustrated in Figure 4G, the protection means 130 of the ES module 115 may comprise an MSS 134. The MSS 134 may comprise a base member 134-1, rear member 134-2, first side member 134-3, second side member 134-4, and top member 136 configured to at least partially enclose an interior region 135 of the ES module 115. In some implementations, the top member 136 may be configured to be removably attached and/or sealed over the interior region 135, e.g., may be configured to be removably attached and/or sealed to one or more of the rear member 134-2, first side member 134-3 and/or second side member 135-5 of the MSS 134. A front end of the MSS 134 may be open.

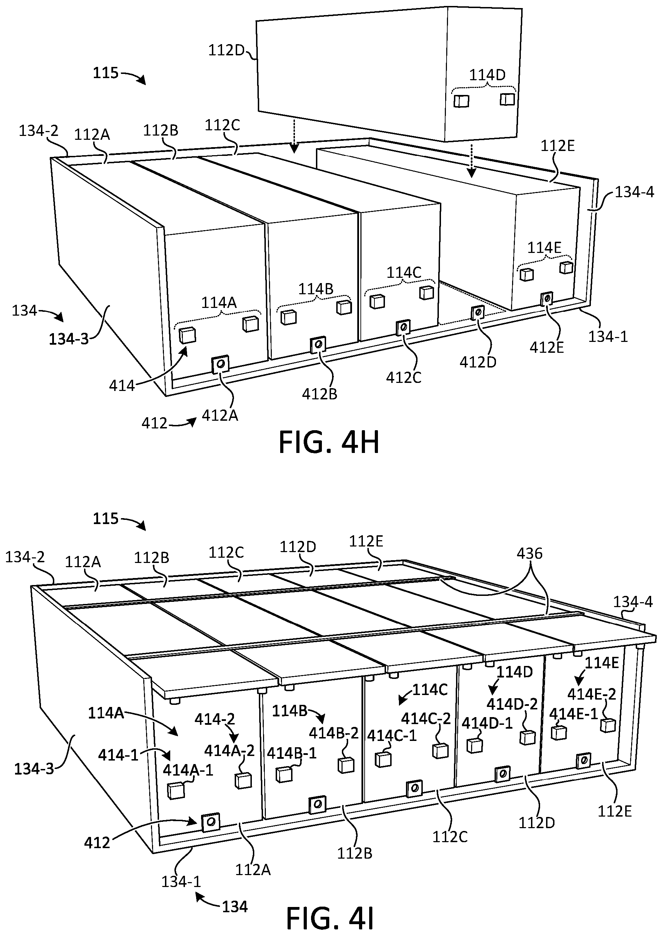

The MSS 134 may be configured to receive and/or secure a plurality of ES units 112 and/or corresponding TC elements 122 within the interior region 135 of the ES module 115. In the Figure 4G example, the ES module 115 may be configured to hold E ES units 112, e.g., ES units 112A-E coupled to TC elements 122A-E as illustrated in Figures 4H-4O.

The protection means 130 of the ES module 115 may further comprise a separator 132. The separator 132 may be configured to be removably attached and/or sealed over the front end of the MSS 134. In some implementations, the separator 132 may be further configured to support components of the TC system 120. For example, the separator 132 may be configured to secure a first manifold 327 configured to be coupled to an outlet 158 of the HE system 150, a second manifold 329 configured to be coupled to an inlet 156 of the HE system 150, and so on. The separator 132 may further comprise one or more TC guides 424, which may be configured to secure TC couplings 124 of the TC elements 122 in a designated configuration, *e.g.*, guide inlet connections 126 and/or outlet connections 128 configured to couple inlets 226 and/or outlets 228 of respective TC elements 122 to the first manifold 327 and the second manifold 329, respectively (TC couplings 124 not shown in Figure 4G to avoid obscuring details of the illustrated examples). The TC guides 424 may be further configured to maintain the TC couplings 124 at designated orientations (and/or designated lengths) such that the flow characteristics thereof are substantially equivalent, as disclosed herein.

Figure 4H is a perspective view of an example of an ES module 115 configured to hold a plurality of ES units 112 within an MSS 134. As disclosed herein, in some implementations, the top member 136 (and separator 132) of the ES module 115 may be configured to be selectively removed from the MSS 134, which may facilitate access to the interior region 135 of the ES module 115, *e.g.*, facilitate installation, maintenance and/or removal of ES units 112A-E and/or TC elements 112A-E.

In some implementations, the ES module 115 may comprise means for securing one or more ES units 112 within the MSS 134. The ES module 115 may comprise any suitable means for securing an ES unit 112 including, but not limited to, one or more fasteners, brackets, railings, mounts, flanges, and/or the like. The ES module 115 may, for example, comprise a plurality of mounts 412, each mount 412 configured to secure a respective ES unit 112 at a respective location or position within the MSS 134. In the Figure 4H example, the ES module 115 may comprise mounts 412A-E configured to secure ES units 112A-E within the MSS 134, respectively.

Figure 4I is a perspective view of an example of an ES module 115 configured to secure a plurality of ES units 112A-E (and/or corresponding TC elements 122A-E) within an interior region 135 of an MSS 134. In some implementations, the TC elements 122A-E may comprise attachment means 123 configured to secure the TC elements 122A-E to respective ES units 112A-E, *e.g.*, attachment means 123 configured for securing TC elements 122 to top surfaces of respective ES units 112 (attachment means 123 not shown in Figure 4I to avoid obscuring details of the illustrated examples). Alternatively, or in addition, the ES module 115 may comprise means for securing TC elements 122 to respective ES units 112. In the Figure 4I example, the ES module 115 may comprise a clamp member 436. The clamp member 436 may comprise any suitable means for securing, binding, and/or otherwise clamping the TC elements 122A-E over top surfaces of the ES units 112A-E including, but not limited to, one or more plates, straps, rails, ribs, cables, strips, clamps, clamp strips, brackets, bars, braces, ribs, panels, and/or the like. The clamp member 436 may be removably attached to the MSS 134, *e.g.,* may be removably attached to the first side member 134-3 and/or second side member 134-4.

As disclosed herein, the ES units 112 of the ES module 115 may comprise respective UEI 114, *e.g.,* UEIs 114A-E of ES units 112A-E. The UEI 114 may comprise one or more terminals 414 or other electrical interfaces, including a first terminal 414-1 (*e.g.,* negative electrode or cathode) and second terminal 414-2 (*e.g.*, positive electrode or anode); the UEI 114A of ES unit 112A may comprise a first terminal 414A-1 and second terminal 414A-2, the UEI 114B of ES unit 112B may comprise a first terminal 414B-1 and second terminal 414B-2, the UEI 114C of ES unit 112C may comprise a first terminal 414C-1 and second terminal 414C-2, the UEI 114D of ES unit 112D may comprise a firstterminal 414D-1 and second terminal 414D-2, the UEI 114E of ES unit 112E may comprise a first terminal 414E-1 and second terminal 414E-2, and so on.

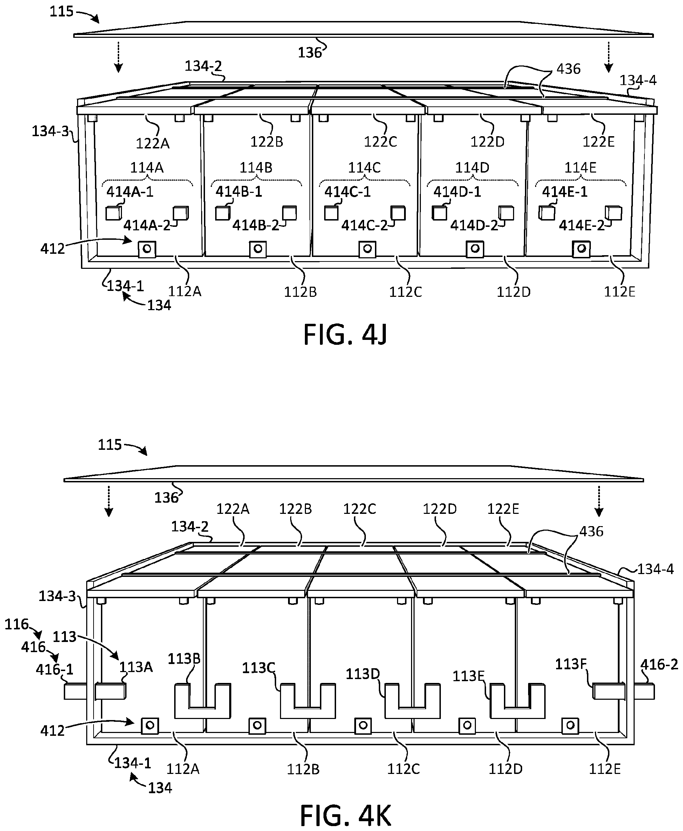

Figure 4J is a front view of an example of an energy-storage module configured to secure a plurality of energy-storage units and temperature-control elements within a support structure. In the Figure 4J, the MSS 134 may further comprise a top member 136 configured to be removably secured over a top of the ES module 115 (and/or TC elements 122A-E and clamp member 436). The top member 136 may be configured to secure the TC elements 122A-E to respective ES units 112A-E, protect the TC elements 122A-E from damage, and so on.

Figure 4K is a front view of an example of an ES module 115 configured to electrically couple a plurality of ES units 112 to one another and/or an MEI 116 of the ES module 115. As illustrated in Figure 4K, the ES module 115 may comprise unit couplings 113 configured to electrically couple the ES units 112A-E in series: the unit coupling 113A may be configured to electrically couple the first terminal 414A-1 of ES unit 112A to the first terminal 416-1 of the MEI 416, the unit coupling 113B may be configured to electrically couple the second terminal 414A-2 of ES unit 112A to the first terminal 414B-1 of ES unit 112B, the unit coupling 113C may be configured to electrically couple the second terminal 414B-2 of ES unit 112B to the first terminal 414C-1 of ES unit 112C, the unit coupling 113D may be configured to electrically couple the second terminal 414C-2 of ES unit 112C to the first terminal 414D-1 of ES unit 112D, the unit coupling 113E may be configured to electrically couple the second terminal 414D-2 of ES unit 112D to the first terminal 414E-1 of ES unit 112E, and the unit coupling 113F may be configured to electrically couple the second terminal 414E-2 of ES unit 112E to the second terminal 416-2 of the MEI 116. Although in the Figure 4K example the ES units 112A-E are electrically coupled in series, the disclosure is not limited in this regard and could be adapted to electrically couple ES units 112 in any suitable configuration.

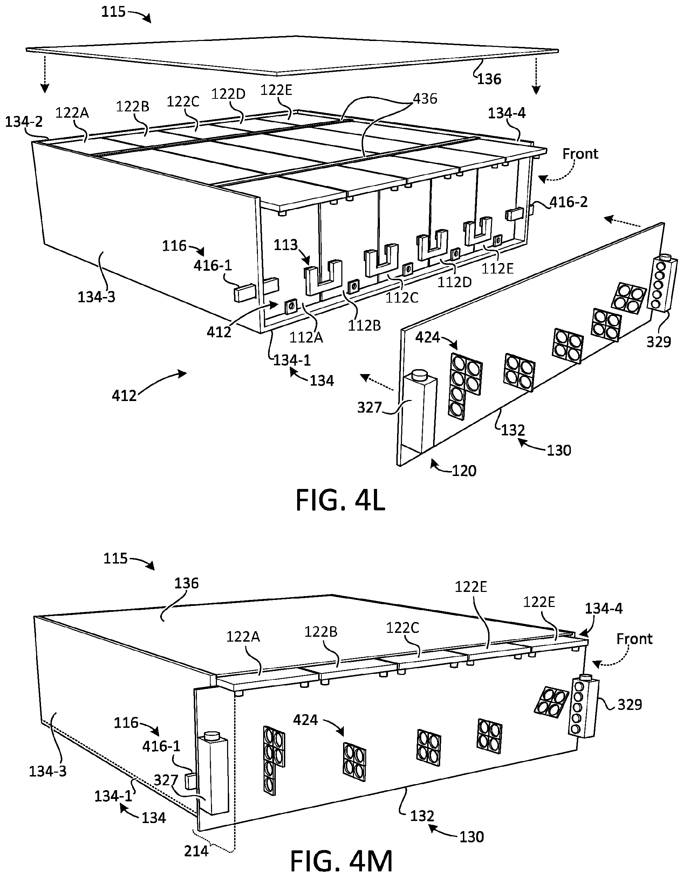

Figure 4L is a perspective view of an example of an ES module 115 comprising protection means 130, such as an MSS 134 and separator 132. The separator 132 may be configured to be fastened, attached and/or sealed over the front end of the MSS 134, *e.g.,* may be configured to be fastened, attached and/or sealed over a front surfaces of one or more of the base member 134-1, first side member 134-3, and second side member 134-4 of the MSS 134. In some implementations, the separator 132 may comprise and/or be configured to support components of the TC system 120, *e.g.,* one or more components of the TC system 120 may be mounted and/or otherwise attached to the separator 132. In the Figure 4L example, the separator 132 may comprise and/or be configured to support the first manifold 327, second manifold 329, TC guides 424, and/or the like. As disclosed herein, the TC guides 424 may be configured to secure TC couplings 124 of the TC elements 122A-E in a designated configuration, *e.g.,* a designated length, orientation, and so on. The TC guides 424 may be configured such that the TC couplings 124 exhibit substantially equivalent flow characteristics, as disclosed herein.

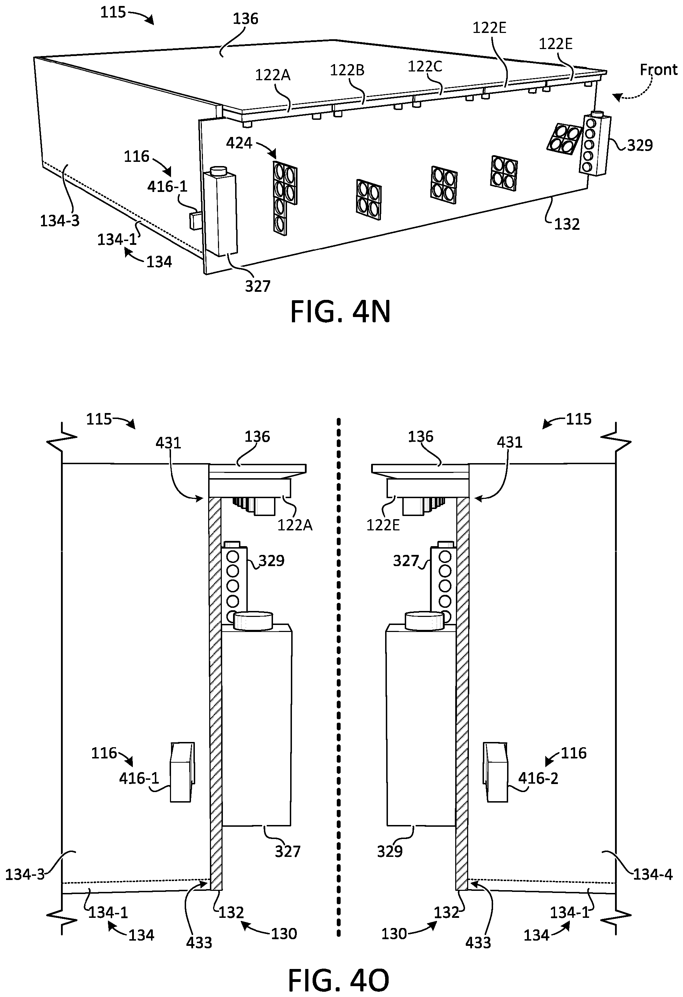

Figures 4M and 4N are perspective views of examples of ES modules 115 configured to isolate, seal, shield, protect, separate, and/or otherwise protect ES units 112 units from components of a TC system 120. In Figure 4M and 4N examples, a separator 132 may be attached and/or sealed over a front end of the MSS 134 of the ES module 115. The separator 132 may comprise and/or support components of the TC system 120, as disclosed herein. The separator 132 may be disposed within an CO region 214. As disclosed herein, the separator 132 may, therefore, be positioned between the ES units 112A-E of the ES module 115 and the TC couplings 124 of the TC elements 112A-E *(e.g.,* inlet connections 226 and outlet connections 228), inlets 226 of the TC elements 122A-E, outlets of the TC elements 112A-E, the first manifold 327, the second manifold 329, pressurized components 140 of the TC system 120, the HE system 150, and so on.

In the examples illustrated in Figures 4M and 4N, the MSS 134 may comprise a top member 136 configured to cover and/or enclose a top portion of the ES module 115. In the Figure 4N example, the top member 136 may extend to an end of the MSS 134, *e.g.,* extend to a lateral end of the base member 134-1, first side member 134-3, and/or second side member 134-4. Accordingly, in the Figure 4N example, lateral ends of the TC elements 122A-E may extend beyond the top member 136. The disclosure is not limited in this regard. In the Figure 4M example, the top member 136 may be configured to cover top surfaces of the TC elements 122A-E, *e.g.,* may extend beyond the front end of the MSS 134.

Figure 4O comprises side views of another example of an ES module 115 comprising a separator 132, as disclosed herein. As disclosed herein, in some implementations, the separator 132 may be configured to contact and/or form a seal 431 with the TC elements 122A-E of the ES module 115, *e.g.,* contact and/or form a seal 431 with lower or bottom surfaces of the TC elements 122A-E. Alternatively, or in addition, the separator 132 may be configured to contact and/or form a seal 433 with the MSS 134. For example, the separator 132 may be configured to contact and/or form a seal 433 with one or more of the base member 134-1, first side member 134-3, and/or second side member 134-4 of the MSS 134.

Figure 5 is a schematic block diagram of another example of a TC ES system 100 comprising an ES system 110 and TC system 120. The ES system 110 may comprise one or more ES modules 115, each ES module 115 comprising a plurality of ES units 112, *e.g., N* ES units 112A-N. The TC system 120 may comprise one or more TC modules 125, each TC module 125 configured to provide TC services to the ES units 112 of a respective ES module 115. The TC module 125 illustrated in the Figure 5 example may comprise N TC elements 122A-N configured to be attached to ES units 112A-N.

In some implementations, the TC system 120 may further comprise and/or be coupled to temperature-control (TC) logic 520. The TC logic 520 may comprise an intelligent electronic device, such as a computing device (*e.g.,* a device comprising computing resources, such as a processor, memory, non-transitory storage, data interface, and/or the like), an embedded device, a controller, a process controller, a microcontroller, control logic, programmable logic, a programmable logic controller (PLC), a vehicle control device, a battery management system (BMS), an automation controller, a Real-Time Automation Controller (RTAC), a human-machine interface (HMI) device, and/or the like.

The TC logic 520 may be configured to control aspects of the TC services provided to the ES module 115 by the TC system 120. In other words, the TC logic 520 may be configured to regulate, manage, and/or otherwise control operation of the TC system 120. In some implementations, the TC logic 520 may be configured to control the TC system 120 based on operating conditions of the ES module 115. As used herein, operating conditions may comprise and/or refer to any condition pertaining to operation of an energy storage resource such as an ES module 115 including, but not limited to: ambient temperature proximate the ES module 115, ambient humidity proximate the ES module 115, temperature of the ES module 115, utilization of the ES module 115, load on the ES module 115, power flow from the ES module 115, discharge rate of the ES module 115, power flow into the ES module 115, charge rate of the ES module 115, and/or the like. In some implementations, the TC logic 520 may be configured to acquire operating condition (OC) data 525 pertaining to the ES module 115. The OC data 525 may comprise any suitable information pertaining to the operating conditions of the ES module 115. For example, the OC data 525 may comprise information pertaining to the temperature of the ES module 115 and/or respective ES units 112A-N acquired by use of one or more temperature sensors 522. Alternatively, or in addition, the OC data 525 may comprise information pertaining to utilization of the ES module 115, such as a load on the ES module 115. In some implementations, the OC data 525 may comprise information pertaining to predicted or upcoming operating conditions, such as control inputs pertaining to utilization of the ES module 115, as disclosed in further detail herein.

The TC logic 520 may be configured to control the TC system 120 based, at least in part, on OC data 525 pertaining to the ES module 115. The TC logic 520 may be configured to determine a TC configuration for the HE system 150. The TC configuration may be configured to control any aspect pertaining to operation of the HE system 150, including, but not limited to: the flow rate (Q) at which TC media 152 are circulated through TC elements 122A-N of the TC system 120, the degree to which initialized TC media 152-1 is processed within the HE system 150 (*e.g.,* a degree to which the TC media 152 is cooled, heated, or the like), and so on.

For example, the TC logic 520 may be configured to control a HE flow rate parameter ($Q_{HE}$), which may determine a rate at which TC media 152 is pumped into the TC system 120, *e.g.,* may control the pump 352 illustrated in the Figure 3 example. The HE flow-rate parameter ($Q_{HE}$) may determine, *inter alia,* the rate at which TC media 152 are circulated through respective TC elements 122; the flow rate of TC media 152 through respective TC elements 122 may be expressed per Eq. 4 below:

$$Q_i = \alpha \, {}^{Q_{HE}}\!/_{M} \qquad\qquad\qquad \text{Eq. 4}$$

In Eq. 4, $Q_i$ represents the rate at which TC media 152 flows through respective TC elements 122 (*e.g.,* TC element 122-i) coupled to the HE system 150, which may be a function of the HE flow rate parameter ($Q_{HE}$), the number of TC elements 122 coupled to the HE system 150 in parallel (M), and a parameter $\alpha$, which may be based on a configuration of the TC system 120 (*e.g.,* may be based on widths of couplings between the HE system 150 and the TC elements 122A-N).

The TC logic 520 may control the HE flow-rate parameter ($Q_{HE}$) based, at least in part, on operating conditions of the ES module 115, *e.g.,* may increase $Q_{HE}$ under high-temperature and/or high-load conditions, may decrease $Q_{HE}$ under low-temperature and/or low-load conditions, and/or the like. In some implementations, the TC logic 520 may set the $Q_{HE}$ parameter as a function of a maximum flow rate of the HE system 150, *e.g.,* as a fraction or percentage of a maximum HE flow rate ($Q_{HE\_max}$) of the HE system 150 and/or value within a specified range from $Q_{HE\_min} \le Q_{HE} \le Q_{HE\_max}$.

The TC logic 520 may be configured to control other aspects pertaining to the operation of the HE system 150. For example, the TC logic 520 may be configured to control a HE processing-power parameter ($P_{HE}$), which may control the degree and/or extent of TC processing applied by the HE system 150; the HE processing-power parameter ($P_{HE}$) may control power expended by the HE system 150 to process TC media 152, *e.g.,* power used to convert utilized TC media 152-2 into initialized TC media 152-1. For example, the $P_{HE}$ parameter may control the thermodynamic energy within the initialized TC media 152-1 generated by the HE system 150. The TC logic 520 may control the $P_{HE}$ parameter based, at least in part, on operating conditions of the ES module 115, *e.g.,* may increase $P_{HE}$ under high-temperature and/or high-load conditions, may decrease $P_{HE}$ under low-temperature and/or low-load conditions, and/or the like. In some implementations, the TC logic 520 may control the $P_{HE}$ parameter as a function of a maximum HE power level, *e.g.,* as a fraction or percentage of a maximum HE power output ($P_{HE\_max}$) and/or value within a specified range from $P_{HE\_min} \le P_{HE} \le P_{HE\_max}$.

Although examples of control parameters are described herein, the disclosure is not limited in this regard and could be adapted to control any aspect pertaining to operation of the HE system 150 (and/or TC system 120). In some implementations, the TC logic 520 may be configured to coordinate multiple control parameters. For example, the TC logic 520 may be configured to coordinate the $Q_{HE}$ and $P_{HE}$ parameters, such that increasing $Q_{HE}$ results in corresponding increases to $P_{HE}$, decreasing $Q_{HE}$ results in corresponding decreases to $P_{HE}$, and so on (and vice versa). Alternatively, or in addition, the TC logic 520 may be configured to control one or more meta parameters, such as a TC parameter ($TC_{HE}$). The TC parameter ($TC_{HE}$) may be configured to control the level of TC services provided to the ES module 115. For example, increasing the TC parameter ($TC_{HE}$) may comprise configuring the HE system 150 to increase the level and/or degree of TC provided to the TC system 120 (*e.g.,* increasing $Q_{HE}$, $P_{HE}$, and/or the like), decreasing $TC_{HE}$ may comprise decreasing the level and/or degree of TC provided to the TC system (*e.g.,* decreasing $Q_{HE}$, $P_{HE}$, and/or the like), and so on. In some implementations, the TC parameter ($TC_{HE}$) may be expressed in terms of a percentage. For example, the TC logic 520 may set the TC parameter ($TC_{HE}$) to a value between 0% and 100%; when the TC parameter ($TC_{HE}$) is set to 0%, the TC system 120 may be configured to provide substantially no TC services to the ES system 110 and when the TC parameter ($TC_{HE}$) is set to 100%, the TC system 120 may be configured to provide maximum TC services to the ES system 110. The TC logic 520 may set the TC parameter ($TC_{HE}$) based on, *inter alia,* one or more operating conditions of the TC ES system 100, as disclosed in further detail herein. In one example, $TC_{HE}$ may be set based on ambient temperature and ambient humidity, singularly or in combination.

In some implementations, the TC logic 520 may be configured to monitor the ES system 110. As disclosed herein, the TC logic 520 may be configured to acquire OC data 525 pertaining to the operating conditions of the ES module 115. For example, the TC logic 520 may comprise and/or be communicatively coupled to one or more temperature sensors 522. The temperature sensors 522 may be configured to indicate the temperature within the ES module 115 and/or the temperature of respective ES units 112. For example, the TC logic 520 may comprise and/or be coupled to temperature sensors 522A-N, which may be configured to monitor the temperature of ES units 112A-N. Alternatively, or in addition, the OC data 525 may comprise information pertaining to utilization of the ES module 115 (*e.g.,* load on the ES module 115), prospective utilization of the ES module 115, and/or the like. For example, the TC logic 520 may be configured to acquire information pertaining to utilization of the ES module 115 from a battery management system (BMS), the MEI 116, and/or the like.

In some implementations, the TC logic 520 may be configured to control the TC services provided to the ES module 115 based, at least in part, on the temperature of the ES module 115 and/or the temperature of one or more ES units 112A-N of the ES module 115. For example, the TC logic 520 may decrease the level of TC services provided to the ES module 115 (and/or deactivate the TC system 120) while the temperature of the ES units 112A-N remains within a predetermined, nominal operating range. As used herein, decreasing the level of TC services provided by the TC system 120 may comprise decreasing one or more operational aspects of the HE system 150, such as flow rate, processing power, and/or the like. Decreasing the TC services provided by the TC system 120 may comprise decreasing control parameters, such as parameters pertaining to flow rate ($Q_{HE}$), processing power ($P_{HE}$), meta parameters such as a TC parameter ($TC_{HE}$), and/or the like. Deactivating the TC system 120 may comprise configuring the HE system 150 to cease the processing and/or circulation of TC media 152 through the TC modules 122A-N, circulating TC media 152 at a minimal flow rate ($Q_{HE\_min}$), applying a minimal degree of processing to the TC media 152 ($P_{HE\_min}$), and/or the like.

The TC logic 520 may be configured to increase the level of TC services provided to the ES system 110 (and/or ES module 115) in response to changes to the monitored temperature of the ES module 115 (and/or one or more ES units 112A-N). As used herein, increasing the level of TC services provided by the TC system 120 may comprise increasing one or more operational aspects of the HE system 150, such as flow rate, processing power, and/or the like. Increasing the TC services provided by the TC system 120 may comprise increasing control parameters, such as parameters pertaining to flow rate ($Q_{HE}$), processing power ($P_{HE}$), meta parameters such as a TC parameter ($TC_{HE}$), and/or the like. The TC logic 520 may provide a maximum level of TC services in response to temperatures that fail to satisfy one or more thresholds, *e.g.*, in response to temperatures that fall outside the operating limits of the ES units 112. Providing a maximum level of TC services may comprise configuring the TC system 120 to circulate TC media 152 through the TC elements 122A-N at a maximum flow rate ($Q_{HE\_max}$), apply a maximum degree of processing to the TC media 152 within the HE system 150 ($P_{HE\_max}$), and/or the like.

As disclosed herein, in some implementations, the TC logic 520 may be configured to control the TC system 120 based, at least in part, on the temperature of the ES module 115 and/or temperature of respective ES units 112A-N. The disclosure is not limited in this regard, however, and could be adapted to control the TC system 120 based on any suitable information pertaining to the ES module 115. For example, the TC logic 520 may be configured to control the TC system 120 based, at least in part, on OC data 525 pertaining to utilization of the ES module 115 (*e.g.,* power flow to/from ES units 112A-N of the ES module 115), projected utilization (*e.g.*, requests to utilize the ES module 115, such as throttle requests, actuator inputs, or charge operations), external or environmental temperature, and/or the like. The TC logic 520 may increase the level of TC services provided to the ES module 115 in response to detecting increased load (and/or projected increases), before such conditions result in high temperatures. In other words, the TC logic 520 may preemptively increase the level of TC services provided to the ES module 115 before temperature increases are observed.

In some implementations, the TC logic 520 may be further configured to prevent and/or mitigate potential damage to the ES system 110. The TC logic 520 may be configured to issue alerts to an operator in response to detecting temperatures outside the operating range of the ES units 112, *e.g.,* warn the operator that the TC system 120 is incapable of maintaining temperature within operational bounds. Alternatively, or in addition, the TC logic 520 may control utilization of the ES system 110, *e.g.,* may decrease the amount of power drawn from the ES system 110, reduce the charge rate of the ES system 110, and/or the like in response to detecting temperatures that fall outside of operational bounds.

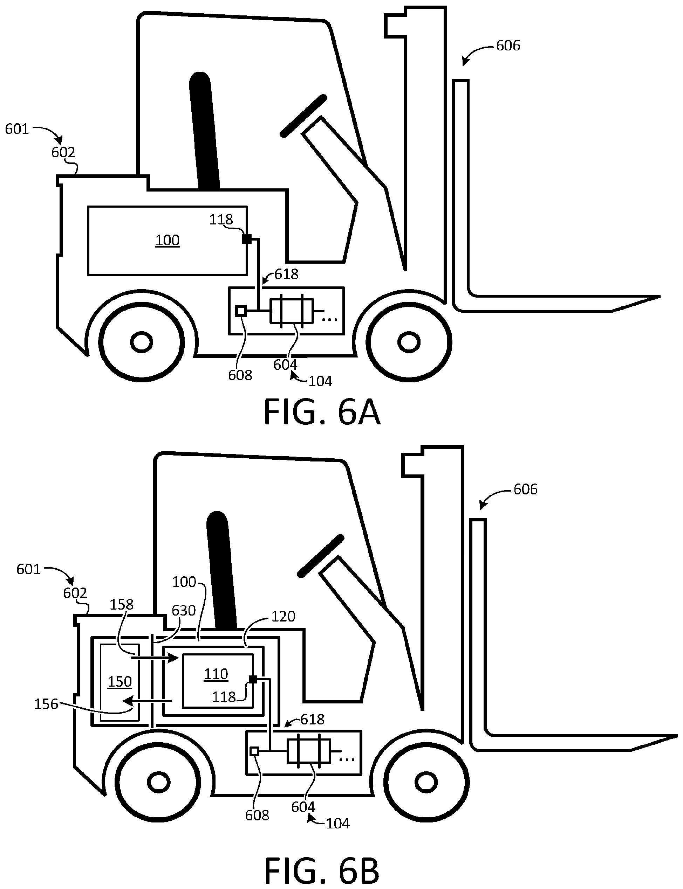

The TC ES system 100 disclosed herein may be configured for use in any suitable energy storage application. Figures 6A-6D illustrate examples of TC ES systems 100 configured to power a machine 601, such as materials-handling equipment or the like. By way of non-limiting example, the machine 601 may comprise a vehicle 602. As used herein, a vehicle 602 may comprise or refer to any suitable means for conveyance including, but not limited to: a passenger convenance (a conveyance configured to hold one or more occupants), a non-passenger conveyance, a load-handling conveyance, a material-handling conveyance, a forklift, a warehouse forklift, a side loader, a telehandler, an industrial forklift, a rough terrain forklift, a pallet jack, a high-capacity forklift, a stacker, a hybrid stacker, a reach stacker, hybrid reach stacker, a container handler, a walkie stacker, a reach for truck, a three-wheel stand forklift, a utility cart, an electric motor rider truck, an electric narrow aisle truck, an electric motor hand or hand-rider truck, autonomous equipment (a machine 601 configured for autonomous operation), or the like. In the examples illustrated in Figures 6A and 6B, the vehicle 602 may comprise a lift truck.

The TC ES system 100 may be configured to power the vehicle 602. The ESS interface 118 of the TC ES system 100 may be electrically coupled to an electrical interface of the vehicle, *e.g.,* a vehicle electrical interface (VEI) 618. The VEI 618 may be configured to control power flow to and/or from the TC ES system 100. As illustrated in Figure 6B, the ESS interface 118 may be electrically coupled to the ES system 110, *e.g.,* may be electrically coupled to ES units 112 of respective ES modules 115 of the ES system 110 by separate, independent electrical connections or interfaces. For example, the ESS interface 118 may be electrically coupled to MEI 116 of respective ES modules 115 of the ES system 110, each MEI 116 electrically coupled to the ES units 112A-N of a respective ES module 115 (via UEI 114AN), as disclosed herein *(e.g.,* as illustrated in Figures 1, 3, and/or 5). Accordingly, a first set of one or more ES modules 115 of TC ES system 110 may remain connected to the VEI 618 (and provide power to the vehicle 602) while a second set of one or more ES modules 115 are disconnected.

As disclosed herein, the ESS interface 118 may be configured to electrically couple the ES system 110 to an electrical interface of the vehicle 602, *e.g.,* a VEI 618 or the like. The VEI 618 may be configured to selectively couple the ESS interface 118 to a load 104. The load 104 may comprise and/or correspond to any suitable means for utilizing electrical power produced by the ES system 110; the load 104 may include, but is not limited to, a drivetrain 604 of the vehicle 102 (one or more electrical motors mechanically coupled to one or more wheels of the vehicle 102), a lift or load-manipulation device 606 of the vehicle 102 *(e.g.,* a forklift, stacker, or the like), a control system of the vehicle 602, and/or the like.

The VEI 618 may be further configured to electrically couple the ESS interface 118 of the ES system 110 to a power source interface (PSI) 608. The PSI 608 may be configured to electrically couple the ES system 110 to external power, *e.g.,* a power source 108, such as a charger as illustrated in the Figure 1 example. For example, the PSI 608 may be configured to couple the ES system 110 to a charging system or the like. The charging system may be configured to charge ES units 112A-N of respective ES modules 115 of the ES system 110 through the PSI 608 (charging system not shown in Figures 6A and 6B to avoid obscuring details of the illustrated examples).

As illustrated in Figure 6B, the TC ES system 100 may further comprise and/or be coupled to a TC system 120. As disclosed herein, the TC system 120 may be configured to control, regulate, and/or otherwise manage the temperature of the ES system 110. The TC system 120 may comprise a plurality of TC elements 122, each TC element 122 attached to an ES unit 112 and a respective ES module 115 of the ES system 110. The TC system 120 may comprise N TC elements 122 for each ES module 115 of the ES system 110, each TC element 122A-N configured to be attached to a respective ES unit 112A-N of the ES module 115, as illustrated in Figures 1, 3, and 5. The TC system 120 may comprise a HE system 150, which may be configured to, *inter alia,* circulate TC media 152 through TC elements 122 of the TC system 120. Initialized TC media 152-1 may flow into inlets 226 of respective TC elements 122 of the TC system 120 from an outlet 158 of the HE system 150 and the resulting utilized TC media 152-2 may flow from outlets 228 of the TC elements 122 into an inlet 156 of the HE system 150.

The TC ES system 100 may be configured to provide substantially equivalent TC services across the ES modules 115 and ES units 112 of the ES system 110. As disclosed herein, the TC elements 122 attached to respective ES units 112 may be coupled to the outlet 158 of the HE system 150 in parallel, such that each TC element 122 receives initialized TC media 152-1 in a substantially same state. Alternatively, or in addition, the TC couplings 124 of respective TC elements 122 may be configured to exhibit substantially equivalent flow characteristics, *e.g.,* may be configured to have a substantially equal cumulative length, run substantially parallel to one another, and so on. In some implementations, the TC system 120 may further comprise protection means 130 configured to isolate ES units 112 of the ES system 110 from the TC couplings 124 and/or pressurized components 140 of the HE system 150. In some implementations, the TC ES system 100 may further comprise HE protection means 630 configured to, *inter alia,* isolate the ES system 110 from the HE system 150, as illustrated in Figure 6B.

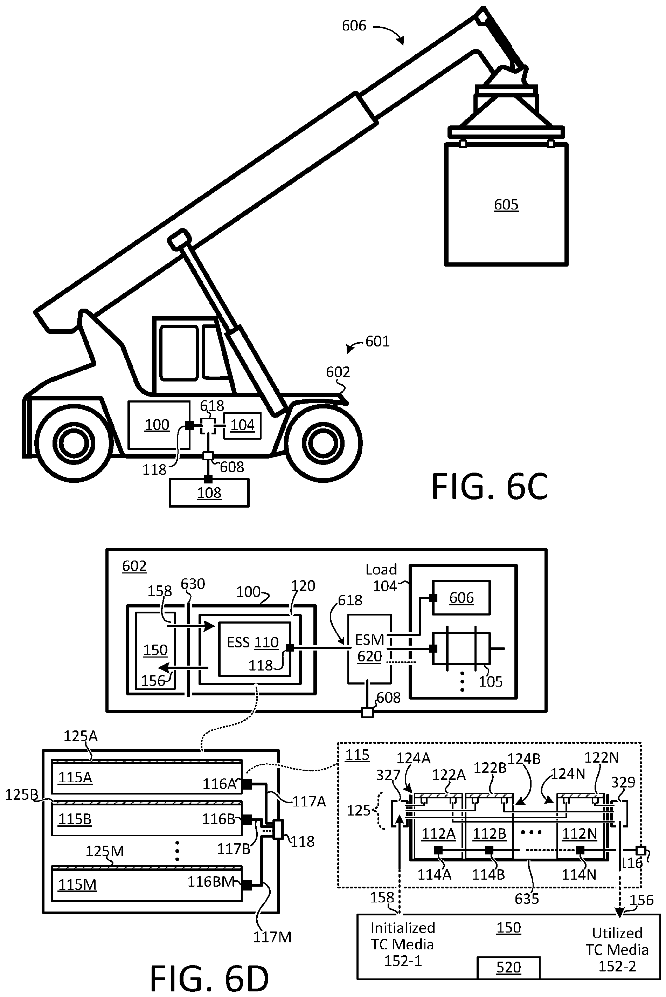

Figure 6C illustrates another example of a TC ES system 100 configured to power a machine 601, such as a vehicle 602. In the Figure 6C example, the TC ES system 100 may be configured to power a hybrid reach stacker (HRS) vehicle 602. The HRS vehicle 602 may comprise a load manipulation device 606. As illustrated in Figure 6C, the load manipulation device 606 may be configured to lift, translate, stack, unstack, etc. shipping containers 605, e.g., containers that are about 8-feet wide and about 40-feet long and of varying height.

In some implementations, the TC ESS 100 may comprise and/or be coupled to the vehicle 602. For example, the ESS interface 118 of the TC ESS 100 may be electrically coupled to a VEI 618 of the vehicle 602. The VEI 618 may comprise and/or be electrically coupled to an energy storage management (ESM) system 620. The ESM system 620 may comprise any suitable means for regulating, controlling, and/or otherwise managing operation of the TC ESS 100. The ESM system 620 may, for example, comprise a BMS or the like. The ESM system 620 may be configured to control the flow of electrical power to and/or from the TC ESS 100, *e.g.,* control power flow to and/or from the TC ESS 100 through the ESS interface 118. As illustrated in the Figure 6C example, the ESM system 620 may be configured to selectively couple the ESS interface 118 to a load 104 of the HRS vehicle 602, a PSI 608 of the vehicle 602-1 *(e.g.,* an external power source 108 such as a charger), and so on. The ESM system 620 may comprise an electrical interface of the machine 601 and/or materials-handling vehicle 602. In other words, the ESM system 620 may comprise an electrical interface by which the vehicle 602 is powered, charged, and/or the like.

Figure 6D is a schematic block diagram illustrating an example of a TC ES system 100 configured to power a vehicle 602, such as the HRS vehicle 602 of Figure 6C. As illustrated, the ESM 620 may be configured to utilize the ES system 110 to, *inter alia,* power the vehicle 602; the ESM 620 may configure the ES system 110 to supply power to a load 104, which may include, but is not limited to: a drivetrain 105 of the vehicle 602 (*e.g.,* supply power to one or more motors, motor controllers, and/or the like), a load manipulation device 606, a vehicle control system, and/or the like. The ESM 620 may be further configured to couple the ES system 110 to a power source 108, such as a charging system, *e.g.*, through a PSI 608 of the vehicle 602.

In the Figure 6D example, the ES system 110 comprises a plurality of ES modules 115, each module 115 comprising a respective set of ES units 112. For example, the ES system 110 may comprise M × N ES units 112, *e.g., M* ES modules 115A-M, each comprising *N* ES units 112A-N, where M and *N* each represent an integer variable of 1 or more.

The TC ES system 100 may further comprise a TC system 120 configured to, *inter alia,* regulate, manage, and/or otherwise control the temperature of the ES system 110. The TC system 120 may comprise TC elements 122 disposed within each of the M ES modules 115 comprising the ES system 110. The TC system 120 may comprise M × N TC elements 122, each TC element 122 attached to a respective ES unit 112. In some implementations, aspects of the TC system 120 may be deployed within respective ES modules 115. For example, the TC system 120 may be organized into a plurality of TC modules 125, each TC module 125 configured to provide TC services to a respective ES module 115. In the Figure 6D example, the TC system 120 may comprise *M* TC modules 125A-M configured to provide TC services to ES modules 115A-M, respectively. Operation of the TC system 120 may be controlled, at least in part, by TC logic 520, as disclosed herein.

Figure 6D further illustrates an example of an ES module 115 of the ES system *110, e.g.,* the illustrated ES module 115 may represent one of the M ES modules 115A-M comprising the ES system 110. The ES module 115 may comprise N ES units 112A-N disposed within a housing 635. The ES units 112A-N may comprise UEIs 114A-N connected to an MEI 116. The MEIs 116A-M of respective ES modules 115A-M may be electrically coupled to an ESS interface 118 by respective module couplings 117A-M. In other words, each ES module 115A-M may comprise a separate, independent electrical coupling to the ESS interface 118, *e.g.,* via separate, independent module couplings 117A-M. Accordingly, one or more of the ES modules 115A-M may be disconnected from the ESS interface 118 while one or more other ES modules 115A-M remain connected, which may enable the TC ES system 100 to continue providing power to the machine 601 *(e.g.,* vehicle 602) while one or more ES modules 115A-M are being serviced. For example, the ES module 115M may be disconnected from the ESS interface 118 by module coupling 115M (and/or removed from the TC ES system 100), while the ES modules 115A and 115B remain electrically connected to the ESS interface 118 by the separate, independent module couplings 117A and 117B.

Figure 6D also illustrates an example of a TC module 125. The TC module 125 may comprise N TC elements 122A-N, each TC element 122 attached to a respective ES unit 112A-N of the ES module 115. The TC elements 122A-N of the TC module 125 may be coupled to the HE system 150 in parallel such that each TC element 122A-N of each ES module 115A-M receives initialized TC media 152-1 in substantially the same state.

The TC elements 122A-N may be coupled to the HE system 150 in parallel by separate, independent TC couplings 124A-N. The TC couplings 124A-N may be configured to exhibit substantially equivalent flow characteristics. As disclosed herein, the TC couplings 124A-N of each ES module 115A-M may be configured to be of substantially the same total length (e.g., same cumulative length inlet connection 126 and outlet connection 128) and/or run substantially parallel to one another.

In some implementations, the TC module 125 may further comprise protection means 130 configured to isolate ES units 112A-N of the ES module 115 from aspects of the TC system 120, *e.g.,* isolate the ES units 112A-N from TC couplings 124A-N (*e.g.,* inlet connections 126, outlet connections 128, and so on), inlets 126 and/or outlets 128 of the TC elements 122A-N, manifolds 327 and 329 of the TC module 125, pressurized components 140 of the TC system 120, the HE system 150, and so on.

The HE system 150 may be configured to circulate TC media 152 through the TC module 125. The HE system 150 may cause initialized TC media 152-1 to flow into the TC elements 122A-N of the TC module 125 in parallel via separate, independent TC couplings 124A-N connected to the inlet manifold 327 of the TC module 125, and the resulting utilized TC media 152-2 may flow back to the HE system 150 through the outlet manifold 329 of the TC module 125.

As illustrated in Figure 6D, the TC system 120 may comprise a plurality of TC modules 125A-M, each configured to provide TC services to a respective ES module 115AM. The HE system 150 may be configured to circulate TC media 152 through the TC modules 125A-M in parallel. For example, inlet manifolds 327 of the TC modules 125A-M may be coupled to the outlet 158 of the HE system 150 in parallel, such that the TC elements 122AN of each TC module 125A-M receive initialized TC media 152-1 in substantially the same state. As used herein, initialized TC media 152-1 in substantially the same state may comprise and/or refer to initialized TC media 152-1 having substantially equivalent TC capacity, *e.g.*, substantially equivalent thermodynamic characteristics such as internal energy, cooling capacity, heating capacity, and/or the like. As disclosed herein, the TC capacity energy of TC media 152 may be consumed as the TC media 152 is circulated through the TC system 120, *e.g.,* may be consumed as initialized TC media 152-1 flows from the HE outlet 158 through one or more TC elements 122. Accordingly, as used herein, initialized TC media 152-1 (or initialized TC media 152-1 in substantially the same state) may comprise and/or refer to initialized TC media 152-1 produced at the outlet 158 of the HE system 150 and/or before such initialized TC media 152-1 is circulated through a TC module 125 and/or TC element 122 thereof.

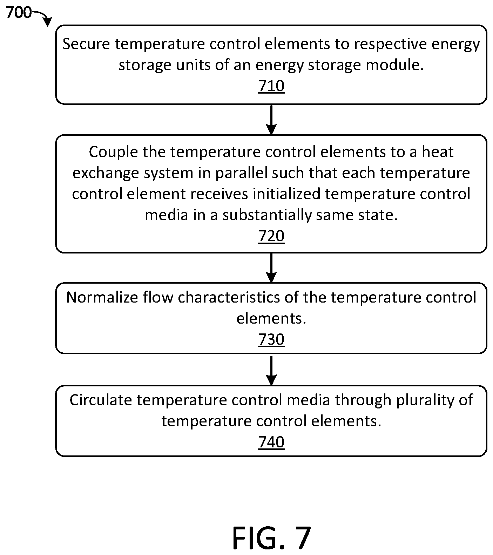

Figure 7 is a flow diagram illustrating an example of a method 700 for controlling the temperature of an ES system 110 by use of a TC system 120, as disclosed herein. More specifically, the method 700 may comprise providing uniform TC services to one or more ES modules 115, each ES module 115 comprising a plurality of ES units 112. For example, the method 700 may be configured to provide uniform TC services to an ES module 115 comprising $N$ ES units 112A-N as illustrated in Figures 1, 2F, 2G, 3, and 5.

Step 710 may comprise securing TC elements 122 to respective ES units 112 of the ES module 115, *e.g.,* may comprise securing TC elements 122A-N to ES units 122A-N. The TC elements 122A-N may be secured by attachment means 123, such as locking tabs 223, fasteners 225, and/or the like.

Step 720 may comprise coupling the TC elements 122 to a HE system 150 in parallel. The TC elements 122A-N may be coupled to the HE system 150 such that each TC element 122A-N receives initialized TC media 152-1 in a substantially same state. For example, the TC elements 122A-N may be connected to the HE system 150 by respective TC couplings 124A-N, the TC couplings 124A-N comprising separate, independent inlet connections 126A-N coupling inlets 226A-N of each TC element 122A-N to the outlet 158 of the HE system 150 in parallel. For example, the inlet connections 126A-N may be coupled to the HE outlet 158 through a first node 127, manifold 327, and/or the like. The HE system 150 may produce initialized TC media 152-1 at the outlet 158 and, as such, each TC element 122A-N may receive freshly initialized TC media 152-1, *e.g.,* receive initialized TC media 152-1 in substantially the same state, as disclosed herein.

In some implementations, the TC couplings 124A-N may further comprise separate, independent outlet connections 128A-N configured to couple outlets 228A-N of the TC elements 122A-N to an inlet 156 of the HE system 150. For example, the outlet connections 128A-N may be coupled to the HE inlet 156 through a second node 129, second manifold 329, and/or the like. Utilized TC media 152-2 may flow from the outlets 228A-N of the TC elements 122A-N to the inlet 156 of the HE system 150 where the utilized TC media 152-2 may be processed (*e.g.,* initialized) for circulation through the TC system 120. Step 720 may, therefore, comprise forming a plurality of separate, independent TC circuits 224AN, each TC circuit 224A-N configured to circulate TC media 152 through a respective TC element 122A-N.

Step 730 may comprise normalizing flow characteristics of the TC elements 122AN. Step 730 may comprise configuring the TC elements 122A-N (and/or corresponding TC circuits 224A-N) to exhibit substantially equivalent flow characteristics, such as substantially equivalent pressure drop ($\Delta$P), flow rate (Q), and so on, per Eq. 1 above. Normalizing the flow characteristics at 730 may comprise configuring TC couplings 124A-N of the TC elements 122A-N to be of substantially equivalent length, geometry, material, and/or the like. In other words, the TC elements 122A-N may be configured such that a combined length of the inlet connections 126A-N and outlet connections 128A-N of the TC couplings 124A-N of respective TC elements 122A-N is substantially equal, per Eq. 2 above.

Normalizing the flow characteristics of the TC elements 122A-N at 730 may further comprise aligning TC couplings 124A-N of the TC elements 122A-N, as disclosed herein. Aligning the TC couplings 124A-N may comprise configuring sections of the inlet connections 126A-N and/or outlet connections 128A-N of respective TC couplings 124A-N to run substantially parallel to one another, *e.g.,* as illustrated in Figures 2F, 2G, 4A, and 4B.

Step 740 may comprise circulating TC media 152 through the plurality of TC elements 122A-N. Step 740 may comprise circulating TC media 152 through a plurality of separate, independent TC circuits 224, each TC circuit 224 corresponding to a respective TC element 122. Circulating TC media 152 through TC element 122A-N may comprise, *inter alia,* (a) providing initialized TC media 152-1 produced at the outlet 158 of the HE system 150 to each TC element 122A-N through a separate, independent inlet connection 126A-N, (b) circulating the initialized TC media 152-1 through the TC elements 122A-N, and (c) expelling utilized TC media 152-2 from outlets 128A-N of the TC elements 122A-N through separate, independent inlet connections 128A-N coupled to an inlet 156 of the HE system 150. The utilized TC media 152-2 may be processed within the HE system 150 (*e.g.,* may be cooled, heated, or the like) for recirculation through the TC elements 122A-N.

In some implementations, aspects of step 740 may be implemented by TC logic 520 of the TC system 120. The TC logic 520 may configure the HE system 150 to generate initialized TC media 152-1 (*e.g.,* convert utilized TC media 152-2 into initialized TC media 152-1) and circulate the initialized TC media 152-1 through the TC system 120. The TC logic 520 may be configured to control one or more parameters pertaining to operation of the HE system 150, such as a HE flow-rate parameter ($Q_{HE}$), HE processing-power parameter ($P_{HE}$), meta parameter(s) such as a TC parameter ($TC_{HE}$), and/or the like. Step 740 may comprise controlling the TC system 120 based on OC data 525 pertaining to the ES module 115, such as temperature or the like. For example, step 740 may comprise setting control parameters of the HE system 120 based, at least in part, on the temperature of the ES module 115 and/or one or more ES units 112A-N. Alternatively, or in addition, step 740 may comprise preemptively controlling one or more HE parameters based on utilization and/or predicted utilization of the ES module 115, such as a load on the ES module 115, control inputs pertaining to the ES module 115 (*e.g.,* throttle inputs, actuator inputs, or charge requests), and/or the like.

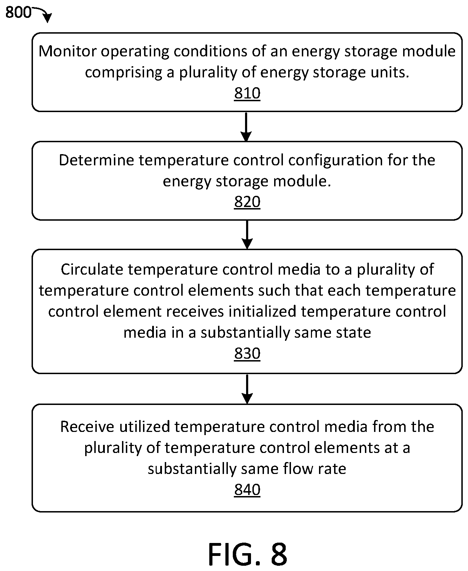

Figure 8 is a flow diagram illustrating another example of a method for controlling the temperature of an ES system 110 comprising an ES module 115, the ES module 115 comprising a plurality of ES units 112, *e.g.,* $N$ ES units 112A-N. The TC system 120 may comprise a plurality of TC elements 122A-N. The TC elements 122A-N may be secured to respective ES units 112A-N of the ES module 115. In some implementations, the TC elements 122A-N may be secured to respective ES units 122A-N by attachment means 123, such as locking tabs 223, fasteners 225, and/or the like. The TC elements 122A-N may comprise TC couplings 124A-N configured to, *inter alia,* establish separate independent TC circuits 224AN between each TC element 122A-N and an HE system 150. The TC elements 122A-N may be coupled to the HE system 150 in parallel; inlets 126A-N of the TC elements 122A-N may be coupled to initialized TC media 152-1 produced at an outlet 158 of the HE system 150 by separate, independent inlet connections 126A-N and utilized TC media 152-2 may flow from outlets 128A-N of the TC elements 122A-N to an inlet 156 of the HE system 150 through separate, independent outlet connections 128A-N of the TC elements 122A-N.

Step 810 may comprise monitoring one or more operating conditions of the ES module 115. Step 810 may comprise acquiring OC data 525 pertaining to the ES module 115, as disclosed herein. In some implementations, step 810 may comprise monitoring a temperature of the ES module 115 and/or one or more ES units 112A-N. The temperature may be monitored by TC logic 520 by use of one or more temperature sensors 522, *e.g.,* temperature sensors 522A-N coupled to ES units 112A-N. Alternatively, or in addition, step 810 may comprise monitoring other information pertaining to utilization (and/or prospective utilization) of the ES module 115, which may include, but is not limited to: a load on the ES module 115 (and/or respective ES units 112A-N), a discharge rate of the ES module 115, power output of the ES module 115, power flow from the ES module 115, charge rate of the ES module 115, power flow into the ES module 115, control inputs pertaining to the ES module 115 (*e.g.,* power requests, charge requests, and/or the like), control inputs pertaining to a vehicle powered by the ES module 115 (*e.g.*, throttle inputs), control inputs pertaining to equipment powered by the ES module 115 (*e.g.,* control inputs to one or more actuators, such as a lift mechanism), and/or the like.

Step 820 may comprise determining a TC configuration for the TC system 120 in response to the monitoring. The TC configuration may be based, at least in part, on OC data 525 acquired at 810. Step 820 may comprise evaluating the OC data 525 to determine whether to increase TC services being provided to the ES module 115, decrease TC services, continue providing TC services at a current rate, and/or the like. In some implementation, step 820 may comprise evaluating one or more thresholds. For example, step 820 may comprise increasing TC services in response to detecting temperatures that fail to satisfy one or more thresholds and/or fall outside of one or more ranges. Alternatively, step 820 may comprise decreasing TC services in response to determining that the ES module 115 is operating within a specified temperature range and/or has remained within the temperature range for a threshold time. In some implementations, the TC configuration may be based on OC data 525 pertaining to utilization of the ES module 115 (and/or prospective utilization of the ES module 115). For example, the TC configuration may be configured to increase TC services in response to determining that a load on the ES module 115 (and/or upcoming load to be imposed on the ES module 115) exceeds one or more load thresholds.

Step 830 may comprise circulating TC media 152 to the plurality of TC elements 122A-N such that each TC element 122A-N receives initialized TC media 152-1 in a substantially same state. The TC media 152 may be circulated by use of the HE system 150. The HE system 150 may be configured to operate in accordance with the TC configuration determined at 820. Step 830 may comprise controlling aspects of the operation of the HE system 150. For example, step 830 may comprise controlling one or more HE parameters, which may include, but are not limited to: an HE flow-rate parameter ($Q_{HE}$), an HE processing-power parameter ($P_{HE}$), a meta parameter such as a TC parameter ($TC_{HE}$), and/or the like. Step 830 may comprise increasing TC services provided to the ES module 115 in response to determining that the OC data 525 acquired at 810 indicates one or more of: temperatures outside of one or more thresholds, increased utilization of the ES module 115 (*e.g.*, increased power output from the ES module 115), prospective increase to utilization of the ES module 115 (*e.g.,* control inputs predicted to result in increased load on the ES module 115), and/or the like. Alternatively, step 830 may comprise decreasing TC services provided to the ES module 115 in response to determining that the information monitored at 810 indicates decreased temperature within the ES module 115, decreased load on the ES module 115, and/or the like.

Step 830 may comprise configuring operation of the HE system 150 to circulate initialized TC media 152-1 through a plurality of TC elements 122A-N coupled to the HE system 150 in parallel. Step 830 may comprise configuring the HE system 150 to provide initialized TC media 152-1 to inlets 126A-N of respective TC elements 122A-N in parallel, such that each TC element 122A-N receives initialized TC media 152-1 in substantially the same state. The TC couplings 124A-N may comprise separate, independent inlet connections 126A-N, each configured to couple an inlets 226A-N of a respective TC element 122A-N to the outlet 158 of the HE system 150 in parallel.

Step 840 may comprise receiving utilized TC media 152-2 from the plurality of TC elements 122A-N at a substantially same flow rate. The TC elements 122A-N may be configured such that the TC couplings 124A-N and/or TC circuits 224A-N thereof exhibit substantially equal flow characteristics such as pressure drop ($\Delta P$), flow rate ($Q$), and so on, per Eq. 1 above. Step 840 may comprise normalizing flow characteristics of the TC couplings 124A-N of respective TC elements 122A-N. Normalizing the flow characteristics may comprise configuring the TC couplings 124A-N such that (a) the length the TC couplings 124A-N are substantially equal and (b) segments of the TC couplings 124A-N are substantially parallel. The TC elements 122A-N may be configured such that a combined length of the inlet connections 126A-N and outlet connections 128A-N of respective TC couplings 124A-N is substantially equal, per Eq. 2 above. Normalizing the flow characteristics may further comprise aligning the TC couplings 224A-N, which may comprise configuring sections of the inlet connections 126A-N and outlet connections 128A-N to run substantially parallel to one another, as disclosed herein (*e.g.,* as illustrated in Figures 2F, 2G, 4A, and 4B).

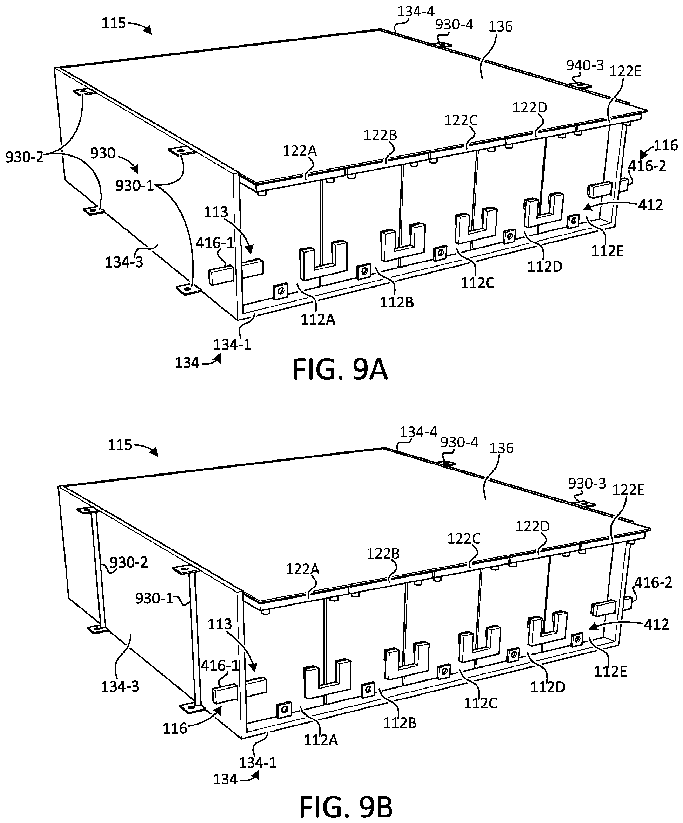

Figures 9A-9D illustrate examples of ES modules 115 configured to be secured in a substantially vertical stack. The ES module 115 illustrated in the Figure 9A example may be configured to hold a plurality of ES units 112A-E. The ES units 112A-E may be secured within an MSS 134 of the ES module 115 by mounts 412. The ES module 115 may be further configured to hold TC elements 122A-E, which may be secured to top surfaces of respective ES units 112A-E. The ES module 115 may further comprise a top member 136 configured to be removably attached on and/or over a top surface of the MSS 134 (*e.g.,* may be configured to cover the ES units 112A-E, TC elements 122A-E, clamp member 136, and so on). The ES units 112A-E may be electrically coupled to terminals 416-1 and 416-2 of an MEI 116 of the ES module 115 by unit couplings 113, as disclosed herein.

As illustrated in the Figure 9A example, the ES module 115 may further comprise a stack attachment member 930. The stack attachment member 930 may comprise any suitable means for securing the ES module 115 to another ES module 115 in a substantially vertical stack configuration including, but not limited to, one or more tabs, flanges, rails, bars, plates, straps, ribs, cables, strips, clamps, clamp strips, brackets, bars, braces, ribs, panels, fasteners, and/or the like. In the Figure 9A example, the ES module 115 comprises stack attachment members 930-1 through 930-4, each comprising tabs or flanges disposed on a top and/or bottom of the MSS 134. Another ES module 115 may be secured above or below the illustrated ES module 115 in a substantially vertical stack by, *inter alia,* securing the other ES module 115 to the stack attachment members 930 of the ES module 115, *e.g.,* may comprise fastening stack attachment members 930 disposed on a bottom surface of the other ES module 115 to stack attachment members 930 disposed on the top surface of the illustrated ES module 115 (or vice versa).

In the example illustrated in Figure 9A, the stack attachment members 930-1 through 930-4 may be secured, embodied, and/or integrated into the base 134-1 and/or sides 134-3 and 134-4 of the MSS 134. The disclosure is not limited in this regard, however, and could be adapted to utilize stack attachment members 930 secured, embodied, and/or integrated into any suitable structural element(s) of the ES module 115.

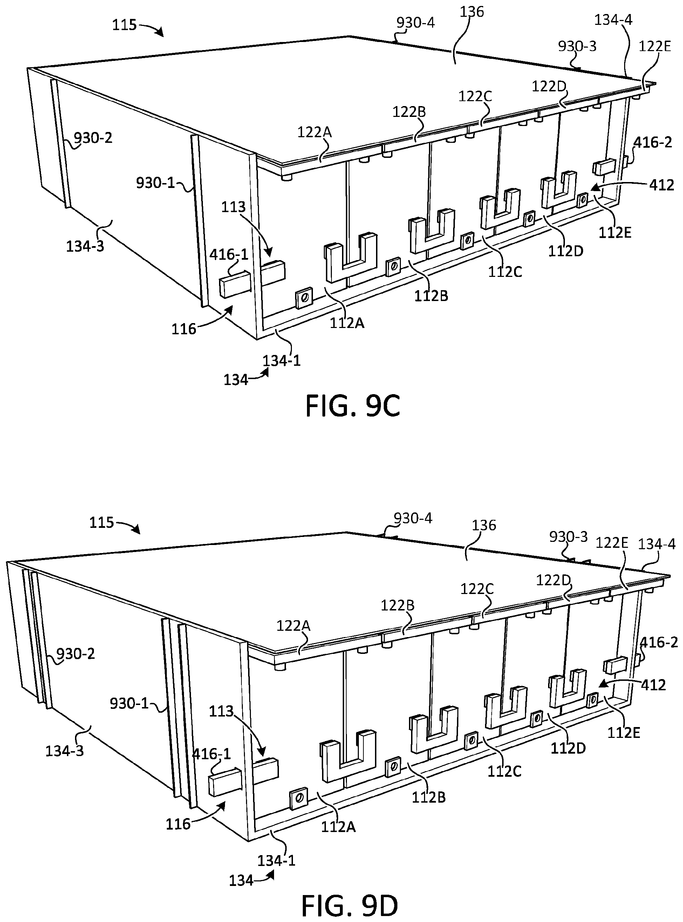

ES modules 115 of the disclosed TC ES system 100 may comprise any suitable type of stack attachment members 930. By way of non-limiting example, Figure 9B illustrates an example of an ES module 115 comprising stack attachment members 930 that comprise tabs or flanges coupled to respective vertical members, *e.g.,* rails, bars, panels, or the like. By way of further non-limiting example, Figure 9C illustrates an example of an ES module 115 comprising stack attachment members 930 that comprise vertical members, *e.g.*, vertical rails or the like. Alternatively, or in addition, ES modules 115 of the TC ES system 100 may comprise stack attachment members 930 comprising respective pairs of vertical rails, as illustrated in Figure 9D (*e.g.*, attachment members 930-1 through 930-4 may comprise respective pairs of vertical rails).

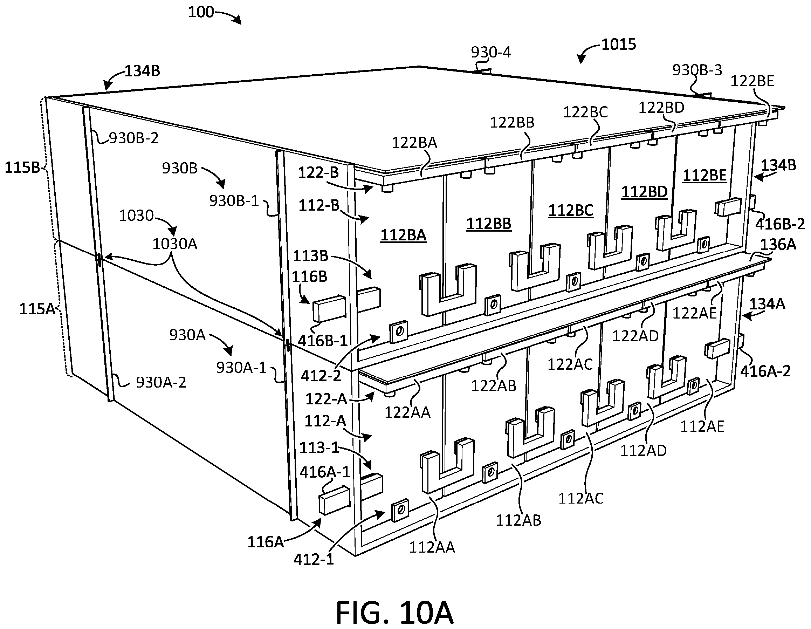

Figures 10A-10C illustrate examples of TC ES systems 100 comprising a plurality of ES modules 115 secured within a substantially vertical stack 1015. In the Figure 10A example, the substantially vertical stack 1015 comprises a first ES module 115A and second ES module 115B. The first ES module 115A may be configured to hold a first plurality of ES units 112-A, *e.g.,* may be configured to hold E ES units 112AA-112AE. The ES units 112AA-122AE may be electrically coupled to an MEI 116A of the first ES module 115A by unit couplings 113-1, as disclosed herein. The first ES module 115A may further comprise a first plurality of TC elements 122-A (*e.g.,* TC elements 122AA-122AE, which may be attached to top surfaces of respective ES units 112 of the first plurality of ES units 112-A). The first plurality of ES units 122-A (and/or first plurality of TC elements 122-A) may be held within an MSS 134A of the first ES module 115A. The first plurality of ES units 112-A may be secured within the MSS 134A by one or more mounts 412-2, as disclosed herein. In some implementations, the ES module 115A may further comprise a top member 136A configured to enclose a top surface of the MSS 134A, e.g., may be configured to overlay the first plurality of TC elements 122-A, as illustrated in Figure 10A.

The second ES module 115B may be configured to hold a second plurality of ES units 112-B, *e.g.,* may be configured to hold E ES units 112BA-112BE. The ES units 122BA-122BE may be electrically coupled to an MEI 116B of the second ES module 115B by unit couplings 113-2, as disclosed herein. The second ES module 115B may further comprise a second plurality of TC elements 122-B (*e.g.,* TC elements 122BA-122BE, which may be attached to top surfaces of respective ES units 112 of the second plurality of ES units 112-B). The second plurality of ES units 122-B (and/or second plurality of TC elements 122-B) may be held within an MSS 134B of the second ES module 115B. The second plurality of ES units 112-B may be secured within the MSS 134B by one or more mounts 412-2, as disclosed herein. In some implementations, the ES module 115B may further comprise a top member 136B configured to enclose a top surface of the MSS 134B, *e.g.,* may be configured to overlay the second plurality of TC elements 122-B, as disclosed herein.

The first ES module 115A may be secured to the second ES module 115B in the substantially vertical stack 1015 by, *inter alia,* stack attachment members 930A of the first ES module 115A and/or stack attachment member 930B of the second ES module 115B. In the Figure 10A example, the stack attachment members 930A and 930B may comprise vertical rails; the first ES module 115A may comprise a first set of vertical rails (*e.g.,* stack attachment members 930A-1 through 930A-4) and the second ES module 115B may comprise a second set of vertical rails (*e.g.,* stack attachment members 930B-1 through 930B-4). Stack attachment members 930A-3 through 930A-4 and 930B-3 through 930B-4 not shown in Figures 10A-10B to avoid obscuring details of the illustrated examples.

The first ES module 115A may be secured to the second ES module 115B in the substantially vertical stack 1015 by, *inter alia,* securing stack attachment members 930A of the first ES module 115A to corresponding stack attachment members 930B of the second ES module 115B. In the Figure 10A example, stack attachment members 930A of the first ES module 115A may be secured to corresponding stack attachment members 930B of the second ES module 115B by stack fasteners 1030. The stack fasteners 1030 may comprise any suitable means for attaching, securing, binding, connecting and/or otherwise fastening one or more members including, but not limited to, one or more tabs, locking tabs, flanges, fasteners, screws, bolts, ties, latches, rivets, adhesives, and/or the like. As illustrated in the Figure 10A example, stack attachment members 930A of the first ES module 115A may be secured to corresponding stack attachment members 930B of the second ES module 115B by a first set of stack fasteners 1030A.

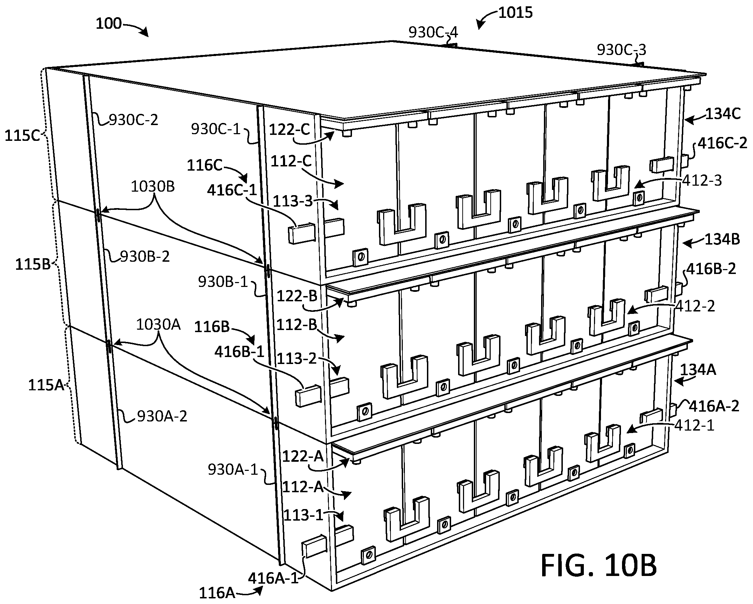

Although Figures 10A and 10B illustrate examples comprising stack attachment members 930 that comprise vertical rails, the disclosure is not limited in this regard and could be adapted to secure ES modules 115 in the substantially vertical stack 1015 by use of any suitable type of attachment means. For example, in some implementations the stack attachment members 930A and/or 930B may comprise tabs or flanges as illustrated in Figures 9A and 9B. In these implementations, the second ES module 115B may be secured to the first ES module 115A within the substantially vertical stack 1015 by fastening tabs or flanges of the first ES module 115A to corresponding tabs or flanges of the second ES module 115B, *e.g.,* by stack fasteners 1030A such as bolts, rivets, screws, or the like.

Figure 10B illustrates another example of an TC ES system 100 comprising a plurality of ES modules 115 secured within a substantially vertical stack 1015. In the Figure 10B example, the TC ES system 100 comprises a third ES module 115C, *e.g.,* the TC ES system 100 illustrated in Figure 10B may comprise a substantially vertical stack 1015 comprising three ES modules 115 (*e.g.,* ES modules 115A-C).

The third ES module 115C may be configured to hold a third plurality of ES units *112-C, e.g.,* may be configured to hold E ES units 112. The third plurality of ES units 122-C may be electrically coupled to an MEI 116C of the third ES module 115C by unit couplings 113-2, as disclosed herein. The third ES module 115C may further comprise a third plurality of TC elements 122-C (*e.g., E* TC elements 122, which may be attached to top surfaces of respective ES units 112 of the third plurality of ES units 112-C). The third plurality of ES units 112-C (and/or corresponding TC elements 122-C) may be secured within an MSS 134C of the third ES module 115C by one or more mounts 412-3, as disclosed herein. In some implementations, the ES module 115C may further comprise a top member 136C configured to enclose a top surface of the MSS 134C (and/or top surfaces of the third plurality of TC elements 122-C, as disclosed herein).

In the Figure 10B example, the second ES module 115B may be secured to the first ES module 115A within the substantially vertical stack 1015 by, *inter alia,* fastening stack attachment members 930A of the first ES module 115A to corresponding stack attachment members 930B of the second ES module 115B (*e.g.,* by use of a first set of stack fasteners 1030A). As further illustrated in the Figure 10B example, the third ES module 115C may comprise stack attachment members 930C (*e.g.,* stack attachment members 930C-1 through 930C-4, which may comprise vertical rails or the like, as disclosed herein). The third ES module 115C may be secured to the second ES module 115B within the substantially vertical stack 1015 by, *inter alia,* fastening stack attachment members 930B of the second ES module 115B to corresponding stack attachment members 930C of the third ES module 115C (*e.g.,* by use of a second set of stack fasteners 1030B). Therefore, the TC ES system 100 illustrated in Figure 10B may comprise a substantially vertical stack 1015 comprising three ES modules 115 (*e.g.,* ES modules 115A-C).

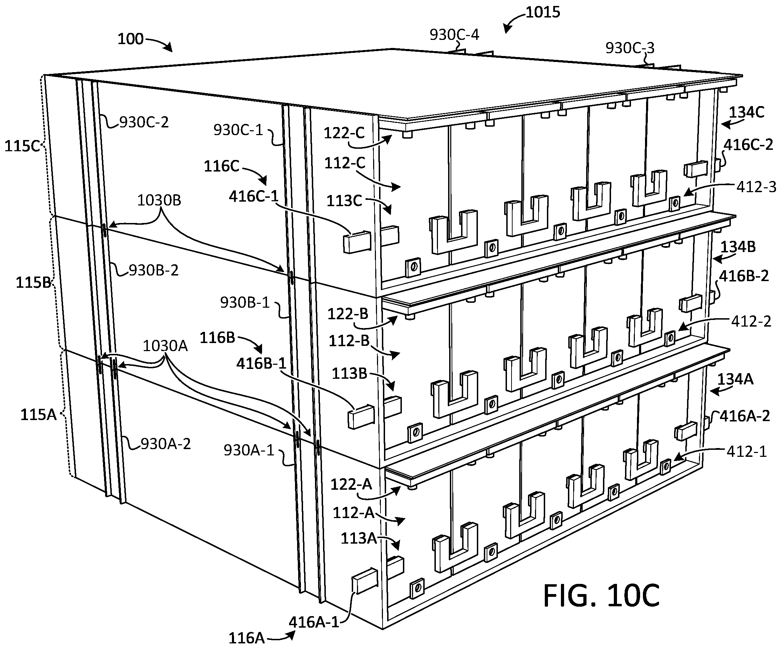

Figure 10C illustrates another example of a TC ES system 100 comprising ES modules 115 secured within a substantially vertical stack 1015. In the Figure 10C example, the substantially vertical stack 1015 comprises three layers, *e.g.,* ES modules 115A-C. The ES modules 115A-C may comprise respective stack attachment members 930. In the example illustrated in Figure 10C, the stack attachment members 930 may comprise respective pairs of vertical rails. The second ES module 115B may be secured to the first ES module 115A within the substantially vertical stack 1015 by, *inter alia,* using a first set of stack fasteners 1030A to secure vertical rails of the second stack attachment members 930B to corresponding vertical rails of the first stack attachment members 930A (*e.g.,* both vertical rails of respective pairs). The disclosure is not limited in this regard, however, and could secure ES modules 115 to one another within the substantially vertical stack 1015 by any suitable technique. For example, as further illustrated in Figure 10C, the third ES module 115C may be secured to the second ES module 115B within the substantially vertical stack 1015 by, *inter alia,* using a second set of stack fasteners 1030B to secure single vertical rails of the stack attachment members 930B to corresponding vertical rails of the stack attachment members 930C (*e.g.,* attaching a single vertical rail of respective pairs of vertical rails).

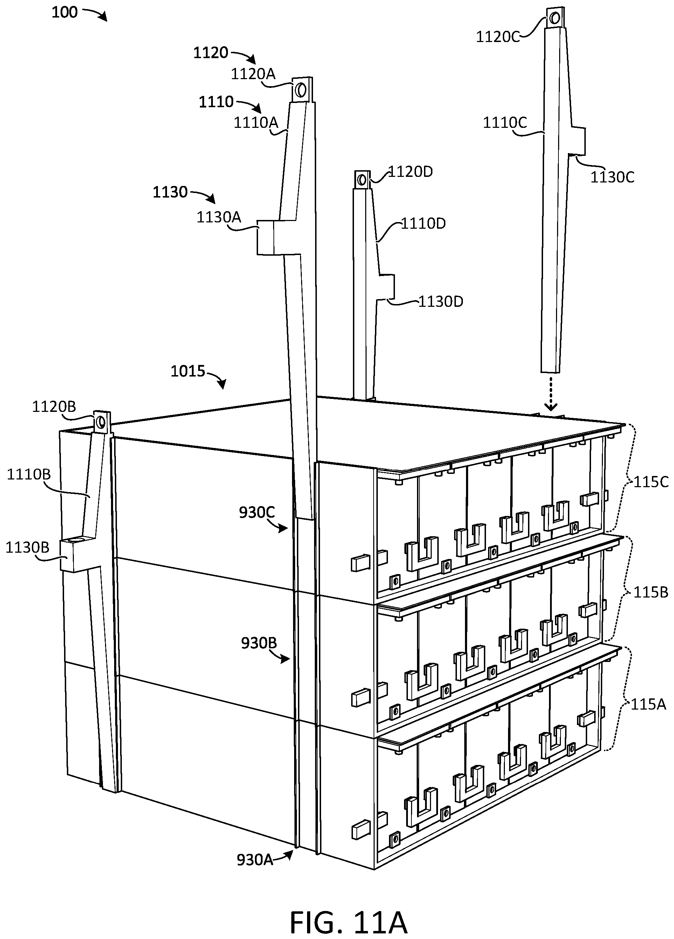

Figures 11A-11C illustrate further examples of TC ES systems 100. In the examples illustrated in Figures 11A-11C, ES modules 115 of the TC ES system 100 may be configured to be secured within a substantially vertical stack 1015 by one or more vertical support members 1110, *e.g.,* vertical support members 1110A-D. As illustrated in Figure 11A, the vertical support members 1110A-D may be configured to engage with stack attachment members 930 of the ES modules 115, *e.g.,* may be configured to engage with stack attachment members 930A-C of ES modules 115A-C. For example, the stack attachment members 930A-C may comprise pairs of vertical rails and the vertical support members 1110A-D may be configured to slidably engage channels formed thereby. The disclosure is not limited in this regard, however, and could configure the vertical support members 1110 and/or ES modules 115 (*e.g.,* stack attachment members 930) with any suitable physical coupling.

In some implementations, the vertical support members 1110 may comprise respective hoist attachment members 1120 (*e.g.,* vertical support members 1110A-D may comprise respective hoist attachment members 1120A-D). As disclosed in further detail herein, the hoist attachment members 1120 may be configured to enable the assembled substantially vertical stack 1015 to be hoisted into the frame of a materials-handing vehicle.

The vertical support members 1110 may further comprise vehicle mounts 1130 (*e.g.,* vertical support members 1110A-D may comprise respective vehicle mounts 1130A-D). As disclosed in further detail herein, the vehicle mounts 1130 may be configured to secure the substantially vertical stack 1015 within a materials-handling vehicle such as the vehicles 602 illustrated in Figures 6A-6C.

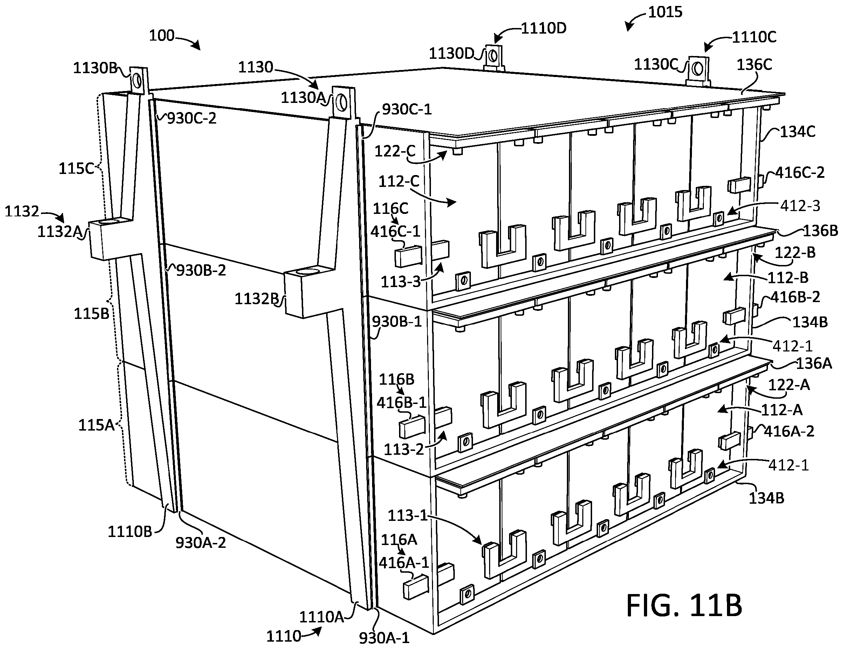

Figure 11B illustrates an example of a TC ES system 100 comprising ES modules 115A-C secured within a substantially vertical stack 1015 by, *inter alia,* vertical support members 1110A-D. In the Figure 11B example, vertical support members 1110A-D may be secured to ES modules 115A-C. The ES modules 115A-C may be secured to the vertical support members 1110A-D by any suitable means, *e.g.*, fastening and/or attachment means, as disclosed herein.

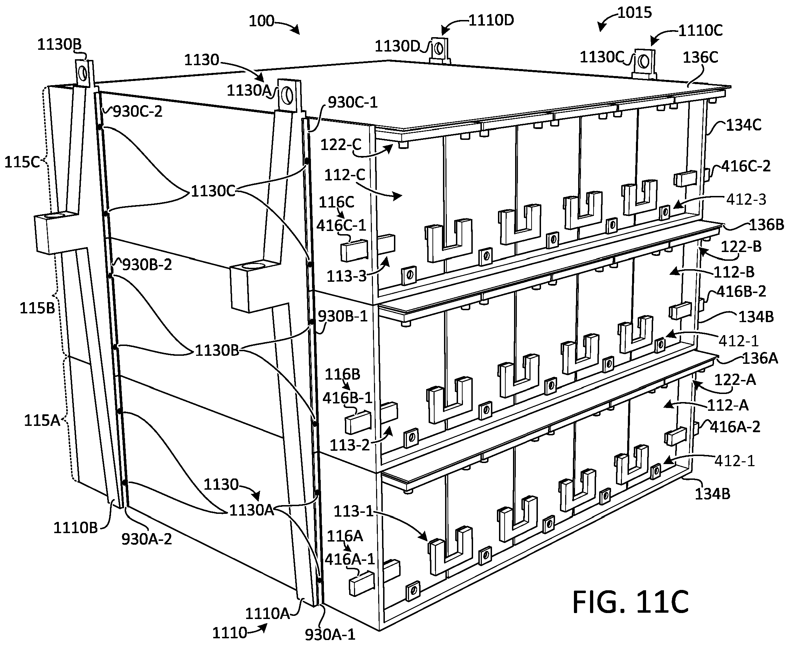

As illustrated in the Figure 11C example, the ES modules 115A-C may be secured to the vertical support members 1110A-D by mount fasteners 1130. The mount fasteners 1130 may comprise any suitable means for securing an ES module 115 to a vertical mount member 1110 including, but not limited to, one or more tabs, locking tabs, flanges, fasteners, screws, bolts, ties, latches, rivets, adhesives, and/or the like. In the Figure 11C example, the stack attachment members 930A of ES module 115A may be secured to the vertical mount members 1110A-D by a first set of mount fasteners 1130A, the stack attachment members 930B of ES module 115B may be secured to the vertical mount members 1110A-D by a second set of mount fasteners 1130B, the stack attachment members 930C of ES module 115C may be secured to the vertical mount members 1110A-D by a third set of mount fasteners 1130C, and so on.

Alternatively, or in addition, the ES modules 115A-C may be secured within the substantially vertical stack 1015 by stack fasteners 1030, as illustrated in one or more of Figures 10A-10C For example, stack attachment members 930B of the second ES module 115B may be secured to stack attachment members 930A of the first ES module 115A by a first set of stack fasteners 1030A, stack attachment members 930C of the third ES module 115C may be secured to stack attachment members 930B of the second ES module 115B by a second set of stack fasteners 1030B, and so on (stack fasteners 1030A and 1030B not shown in Figure 11C to avoid obscuring details of the illustrated examples).

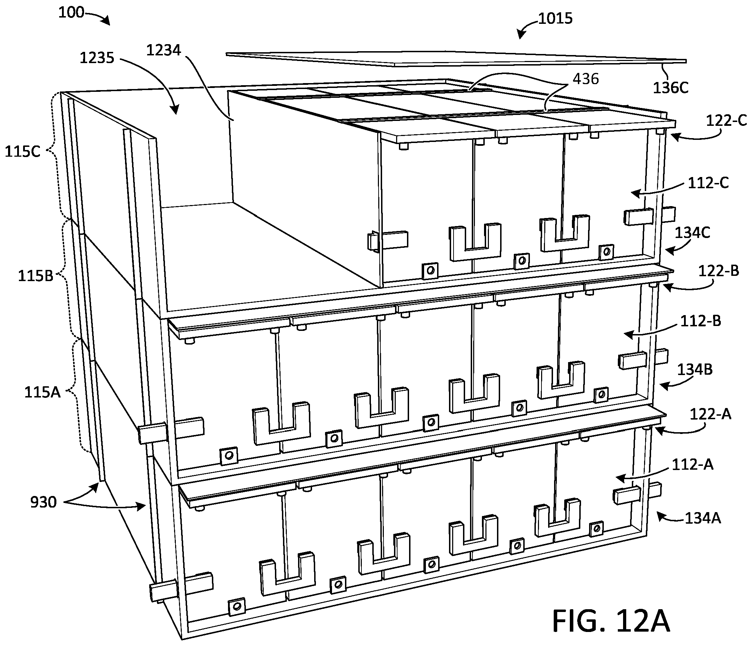

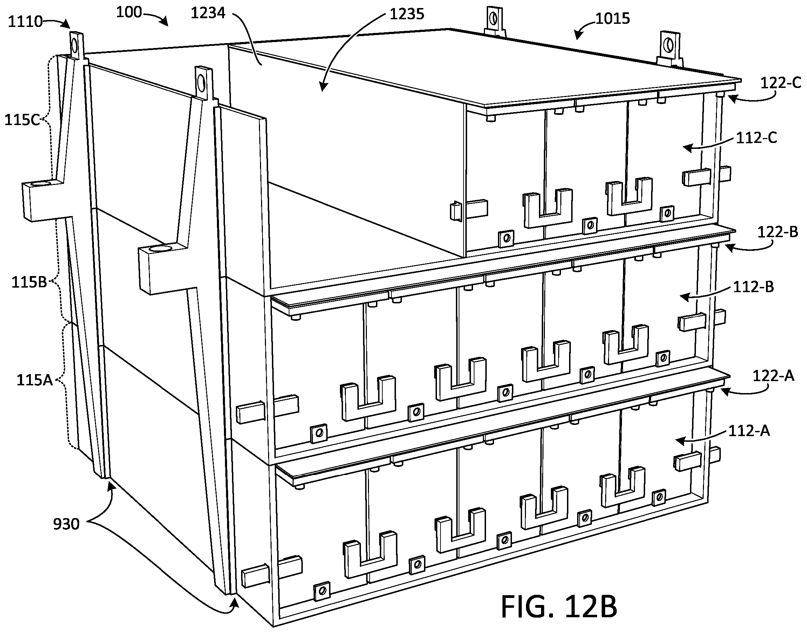

Figures 12A and 12B illustrate additional examples of TC ES systems 100, as disclosed herein. The TC ES system 100 illustrated in Figure 12A may comprise ES modules 115A-C secured within a substantially vertical stack 1015, as disclosed herein. In the Figure 12A example, the third ES module 115C may comprise fewer ES units 112 than ES modules 115A and 115B. For example, the third plurality of ES units 112-C held within the third ES module 115C may comprise three ES units 112 (and the third plurality of TC elements 122-C may comprise three TC elements 122) whereas the first plurality of ES units 112-A of the first ES module 115A and second plurality of ES units 112-B of the second ES module 115B may comprise five ES units 112, respectively (and the first and second plurality of TC elements 122-A and 122-B may comprise five TC elements 122, respectively).

As further illustrated in Figure 12A, the third plurality of TC elements 122-C may be secured to the third plurality of ES units 112-C by a clamp member 436, as disclosed herein. The MSS 134C of the third ES module 115C may comprise a top member 136C configured to cover a top surface of the third ES module 115C (and/or cover top surfaces of the third plurality of TC elements 122-C).

In the Figure 12A example, the MSS 134C of the third ES module 115C may comprise an auxiliary separator 1234 configured to enclose the third set of ES units 112-C and define an auxiliary compartment 1235. As disclosed in further detail herein, the auxiliary component 1235 may be configured to house components of the TC system 120, such as a HE system 150 and/or the like.

Figure 12B illustrates an example of a TC ES system 100 comprising a third ES module 115C having an auxiliary compartment 1235. In the Figure 12B example, the ES modules 115A-C may be secured within the substantially vertical stack configuration by one or more vertical support members 1110, as disclosed herein.

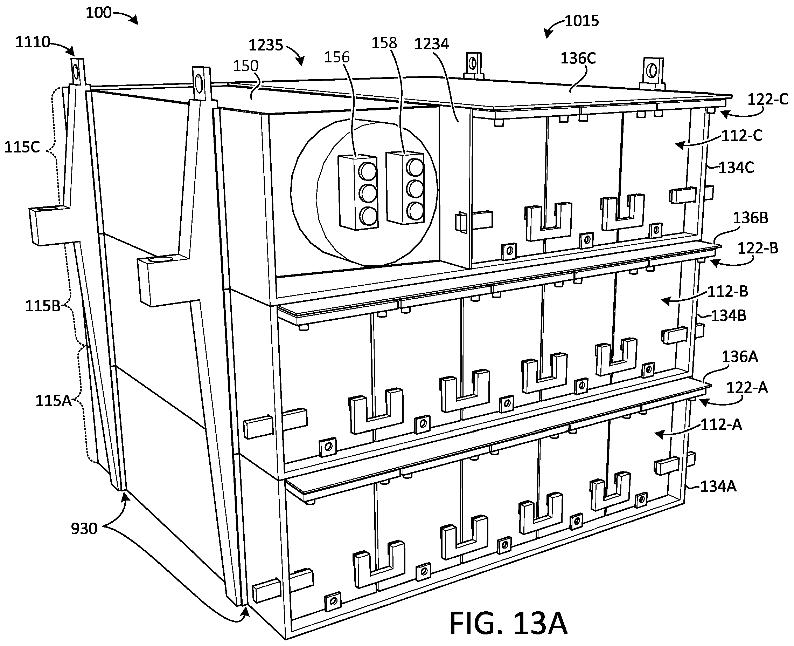

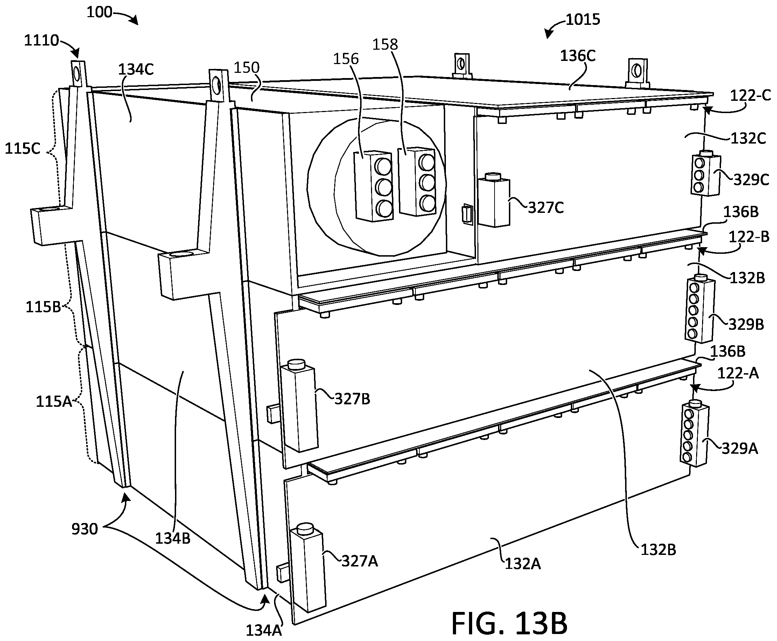

Figures 13A and 13B illustrate examples of TC ES systems 100 comprising ES modules 115 secured within a substantially vertical stack 1015, the substantially vertical stack 1015 comprising components of a TC system 120. In the Figure 13A example, the third ES module 115C may comprise fewer ES units 112 than ES modules 115A and 115B (*e.g.,* the third plurality of ES units 112-C may comprise three ES units 112 whereas the first plurality of ES units 112-A and second plurality of ES units 112-B may each comprise five ES units 112).

The MSS 134C of the third ES module 115C may further comprise an auxiliary separator 1234 configured to enclose the third plurality of ES units 112-C and define an auxiliary compartment 1235. In the Figure 13A example, a HE system 150 may be disposed within the auxiliary compartment 1235. The HE system 150 may be configured to produce initialized TC media 152-1 at the HE outlet 158 and receive utilized TC media 152-2 at the He inlet 156.

In the Figure 13B example, the ES modules 115A-C may comprise respective separators 132A-C. The separators 132A-C may be configured to protect and/or isolate the ES units 112 (and/or electrical components thereof) disposed within the MSS 134A-C of respective ES modules 115A-C from exposure to components of the TC system 120. As illustrated in Figure 13B, the separators 132A-C may be disposed between lateral ends of the ES units 112 and TC couplings 124 (*e.g.,* TC inlets 226 and TC outlets 228) of the TC elements 122.

The separators 132 may further comprise components of the TC system 120. For example, the separator 132A may comprise a first inlet manifold 327A and first outlet manifold 329A, which may be configured to couple the first plurality of TC elements 122-A to the outlet 158 and inlet 156 of the HE system 150, as disclosed herein (*e.g.,* via a first plurality of TC couplings 124); the separator 132B may comprise a second inlet manifold 327B and second outlet manifold 329B, which may be configured to couple the second plurality of TC elements 122-B to the outlet 158 and inlet 156 of the HE system 150, as disclosed herein (*e.g.,* via a second plurality of TC couplings 124); the separator 132C may comprise a third inlet manifold 327C and second outlet manifold 329C, which may be configured to couple the third plurality of TC elements 122-C to the outlet 158 and inlet 156 of the HE system 150, as disclosed herein (*e.g.,* via a third plurality of TC couplings 124); and so on. The separators 132A-C may further comprise TC guides 424 as illustrated in Figures 4G, 4L 4M, and 4N (TC guides 424 and TC couplings 124 not shown in Figure 13B to avoid obscuring details of the illustrated examples).

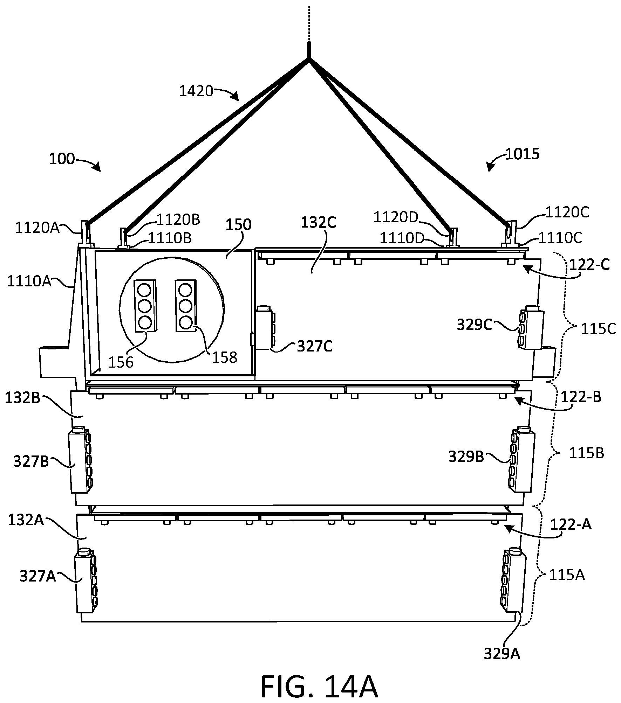

Figure 14A illustrates another example of an TC ES system 100. In the Figure 14A example, the TC ES system 100 may be coupled to a hoist 1420 by vertical support members 1110A-D. More specifically, hoist attachment members 1120A-D of the vertical support members 1110A-D may be coupled to the hoist 1420 (*e.g.,* may be coupled to respective cables, hooks, and/or other hoist attachment means). As illustrated in Figure 14A, the TC ES system 100 may be hoisted into a materials-handling vehicle in an assembled configuration (TC couplings 124 not shown in Figure 14A to avoid obscuring details of the illustrated examples).

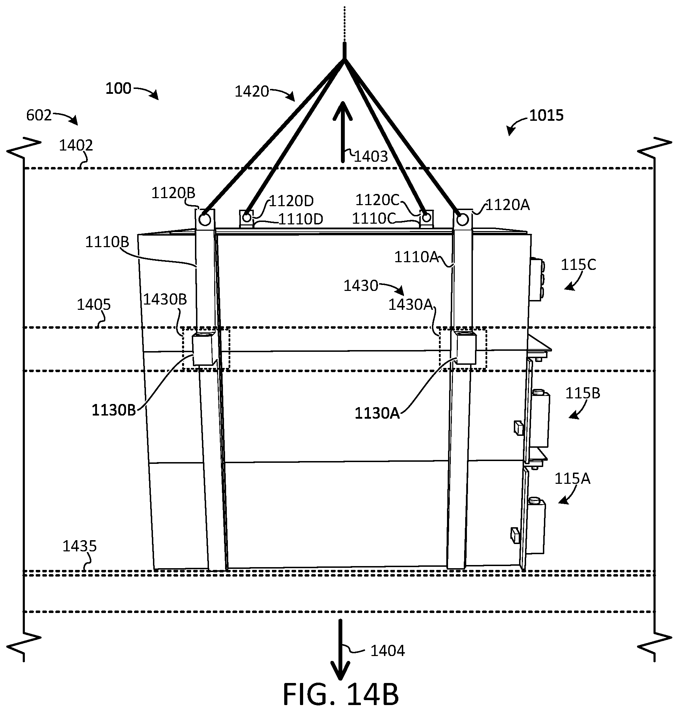

Figure 14B illustrates another example of a TC ES system 100. In the Figure 14B example, the TC ES system 100 may be installed within the body 1402 and/or frame 1405 of a materials-handling vehicle 602. The materials-handling vehicle 602 may comprise a hybrid reach stacker (HRS), as described above in conjunction with Figure 6C.

As illustrated in Figure 14B, the TC ES system 100 may comprise a plurality of ES modules 115A-C secured within a substantially vertical stack 1015 by, *inter alia,* vertical support members 1110A-D. The substantially vertical stack 1015 comprising the assembled TC ES system 100 may be lowered into the body 1402 of the materials-handling vehicle 602 by a hoist 1420. The substantially vertical stack 1015 may be lowered into the body 1402 of the materials-handling vehicle 602 through a top section 1403 of the materials-handling vehicle 602, *e.g.*, through an opening in the body 1402 and/or frame 1405 of the materials-handling vehicle 602 or the like. The TC ES system 100 may be secured to the hoist 1420 by hoist attachment members 1120A-D of the vertical support members 1110A-D.

The TC ES system 100 may be installed and/or secured within the materials-handling vehicle 602 by any suitable means. In the Figure 14B example, the TC ES system 100 may be installed within the materials-handling vehicle 602 by, *inter alia,* securing vehicle mounts 1130A-D of the vertical support mounts 1110A-D to the frame 1405 of the materials-handling vehicle 602. For example, the vehicle mounts 1130A-D may be secured to frame mounts 1430 of the materials-handling vehicle 602 (vehicle mounts 1130C-D and frame mounts 1430C-D not shown in Figure 14B to avoid obscuring details of the illustrated examples). In some implementations, the materials-handling vehicle 602 may further comprise a bottom support member 1435 configured to secure a bottom portion of the TC ES system 100. In the Figure 14B example, the bottom support member 1435 may be configured to support a bottom portion of the first ES module 115A.

In some implementations, ES modules 115 of the TC ES system 100 may be accessed through the top section 1403 and/or bottom section 1404 of the vehicle 602. For example, ES modules 115 may be removed and/or replaced through the bottom section 1404 of the vehicle 602. The first (or bottom) ES module 115A may be removed from the bottom section 1404 of the vehicle 602 by, *inter alia,* removing the bottom support member 1435, detaching the first ES module 115A from the vertical support mounts 1110A-D (and/or second ES module 115B), and lowering the first ES module 115A through the bottom section 1404 of the materials-handling vehicle 602. Following removal of the first ES module 115A, the bottom support member 1435 may be repositioned to support a bottom portion of the second ES module 115B. Alternatively, following removal of the first ES module 115A, the second ES module 115B may be removed from the materials-handling vehicle 602 by, *inter alia,* removing the bottom support member 1435, detaching the second ES module 115B from the vertical support mounts 1110A-D (and/or third ES module 115C), and lowering the second ES module 115B through the bottom section 1404 of the materials-handling vehicle 602. Following removal of the second ES module 115B, the bottom support member 1435 may be repositioned to support a bottom portion of the third ES module 115C. Alternatively, following removal of the second ES module 115B, the third ES module 115C may be removed from the materials-handling vehicle 602 by, *inter alia,* removing the bottom support member 1435, detaching the third ES module 115C from the vertical support mounts 1110A-D, and lowering the third ES module 115C through the bottom section 1404 of the materials-handling vehicle 602.

The substantially vertical stack 1015 may be reassembled through the bottom section 1404 of the vehicle 602 following the procedure described above. For example, reassembling the TC ES system 100 following removal of the third ES module 115C may comprise inserting (or reinserting) the third ES module 115C through the bottom section 1404 of the materials-handling vehicle 602, securing the third ES module 115C to the vertical support members 1110A-D, and repositioning the bottom support member 1435 to support a bottom portion of the third ES module 115C. The second ES module 115B may be reinstalled by, *inter alia,* removing the bottom support member 1435, reinserting the second ES module 115B through the bottom section 1404 of the materials-handling vehicle 602, securing the second ES module 115B to the vertical support members 1110A-D (and/or third ES module 115C), and repositioning the bottom support member 1435 to support a bottom portion of the second ES module 115B. The first ES module 115A may be reinstalled by, *inter alia,* removing the bottom support member 1435, reinserting the first ES module 115A through the bottom section 1404 of the materials-handling vehicle 602, securing the first ES module 115A to the vertical support members 1110A-D (and/or second ES module 115B), and repositioning the bottom support member 1435 to support a bottom portion of the first ES module 115A.

Alternatively, or in addition, ES modules 115 of the TC ES system 100 may be accessed through the top section 1403 of the vehicle 602. For example, the third (or top) ES module 115C of the substantially vertical stack 1015 may be removed by, *inter alia,* detaching the third ES module 115C from the vertical support mounts 1110A-D (and/or second ES module 115B) and raising the third ES module 115C through the top section 1403 of the materials-handling vehicle 602. Following removal of the third ES module 115C, the second ES module 115B may be removed from the materials-handling vehicle 602 by, *inter alia,* detaching the second ES module 115B from the vertical support mounts 1110A-D (and/or first ES module 115A), and raising the second ES module 115B through the top section 1403 of the materials-handling vehicle 602. Following removal of the second ES module 115B, the first ES module 115A may be removed through the top section 1404 of the materials-handling vehicle 602 by, *inter alia,* detaching the first ES module 115A from the vertical support mounts 1110A-D and raising the first ES module 115A through the top section 1403 of the materials-handling vehicle 602.

The substantially vertical stack 1015 may be reassembled through the top section 1403 of the vehicle 602 following the procedure described above. For example, reassembling the TC ES system 100 following removal of the first ES module 115A may comprise lowering the first ES module 115A through the top section 1403 of the materials-handling vehicle 602 *(e.g.,* onto the bottom support member 1435) and securing the first ES module 115A to the vertical support members 1110A-D. The second ES module 115B may be reinstalled by lowering the second ES module 115B through the top section 1404 of the materials-handling vehicle 602 onto the first ES module 115A and securing the second ES module 115B to the vertical support members 1110A-D (and/or first ES module 115A). The third ES module 115C may be reinstalled by, *inter alia,* lowering the third ES module 115C through the top section 1403 of the materials-handling vehicle 602 onto the second ES module 115B and securing the third ES module 115C to the vertical support members 1110A-D (and/or second ES module 115B).

CONCLUSION

The terms and descriptions used above are set forth by way of illustration and example only and are not meant as limitations. Those skilled in the art will recognize that many variations, enhancements and modifications of the concepts described herein are possible without departing from the underlying principles of the invention. For example, skilled persons will appreciate that the subject matter of any sentence, paragraph, or drawing can be combined with subject matter of some or all of the other sentences, paragraphs, or drawings, except where such combinations are mutually exclusive. The scope of the invention should therefore be determined only by the following claims, claims presented in a continuing patent application or a post-issuance proceeding, and equivalents to such claims.

Claims

1. A temperature-control apparatus for use in a materials-handling vehicle (602) comprising a plurality of energy-storage units (112), the apparatus comprising:

a heat exchange system (150) configured to produce initialized temperature-control media (152-1) at an outlet (158) and receive utilized temperature-control media (152-2) at an inlet (156); and
a plurality of temperature-control elements (122), each temperature-control element (122) attached to a respective energy-storage unit (112) of the materials-handling vehicle (602), the temperature-control elements (122) comprising:

a plurality of separate, independent inlet connectors (126) configured to couple inlets (226) of respective temperature-control elements (122) to the outlet (158) of the heat exchange system (150) in parallel such that each temperature-control element (122) receives initialized temperature-control media (152-1) in a substantially same state, and
a plurality of separate, independent outlet connectors (128) configured to couple outlets (228) of respective temperature-control elements (122) to the inlet (156) of the heat exchange system (150).

2. An apparatus according to claim 1, wherein the temperature-control elements (122) are configured such that a cumulative length of the separate, independent inlet connector (126) and the separate, independent outlet connector (128) of each temperature-control element (122) of the plurality of temperature-control elements (122) is substantially equal.

3. An apparatus according to any of claims 1-2, wherein the temperature-control elements (122) are further configured such that segments of the separate, independent inlet connectors (126) and separate, independent outlet connectors (128) of the temperature-control elements (122) are substantially parallel.

4. An apparatus according to any of claims 1-3, further comprising a separator (132) configured to isolate electrical components of the energy-storage units (112) from temperature-control media (152) of the temperature-control elements (122).

5. An apparatus according to claim 4, wherein the separator (132) comprises guides (424) configured to maintain the separate, independent inlet connectors (126) and the separate, independent outlet connectors (128) of the temperature-control elements (122) at designated orientations.

6. A system according to any of claims 4-5, wherein the separator (132) is disposed within an overhang region (212) between lateral ends of the energy-storage units (112) and inlets (226) and outlets (128) of the temperature-control elements (122).

7. An apparatus according to any of claims 1-6, wherein:

the inlet connector (126) of each temperature-control element (122) is configured to couple the inlet (226) of the temperature-control element (122) to the outlet (158) of the heat exchange system (150) independently of other temperature-control elements (122) of the plurality of temperature-control elements (122); and
the outlet connector (128) of each temperature-control element (122) is configured to couple the outlet (128) of the temperature-control element (122) to the inlet (156) of the heat exchange element (150) independently of the other temperature-control elements (122) of the plurality of temperature-control elements (122).

8. An apparatus according to any of claims 1-7, wherein each temperature-control element (122) comprises a respective temperature-control circuit (224) of a plurality of parallel temperature-control circuits (224), each temperature-control circuit (224) covering a respective energy-storage unit (112) and comprising the inlet connector (126) of the temperature-control element (122) and the outlet connector (128) of the temperature control element (122).

9. An apparatus according to any of claims 1-8, further comprising:

a first manifold (327) configured to couple the plurality of separate, independent inlet connectors (126) to the outlet (158) of the heat exchange system (150); and
a second manifold (329) configured to couple the plurality of separate, independent outlet connectors (128) to the inlet (156) of the heat exchange system (150).

10. An apparatus according to any of claims 1-9, further comprising temperature-control logic (520) configured to control parameters pertaining to operation of the heat exchange system (150) based, at least in part, on operating conditions of the energy-storage module (115);
wherein the temperature-control logic (520) is further configured to increase a flow rate of temperature-control media (152) through the plurality of temperature-control elements (122) based, at least in part, on a temperature of one or more of the energy-storage units (112).

11. An apparatus according to any of claims 1-10, wherein each temperature-control element (122) further comprises one or more tabs (223) configured to secure the temperature-control element (122) over a top surface of the energy-storage unit (112), and wherein the temperature-control element (122) is configured to cover substantially all of the top surface of the energy-storage unit (112).

12. An apparatus according to any of claims 1-11, wherein the energy-storage units (112) comprise battery units.

13. A method for use in a materials-handling vehicle (602) comprising an energy-storage module (115) comprising a plurality of energy-storage units (112), the method comprising:

monitoring operating conditions of the energy-storage module (115), wherein each energy-storage unit (112) comprises a respective temperature-control element (122);

determining a temperature-control configuration for the energy-storage module (115) in response to the monitoring;

circulating temperature-control media (152) through the temperature-control elements (122) in accordance with the determined temperature-control configuration such that each temperature-control element (122) receives initialized temperature-control media (152-1) in a substantially same state; and

receiving utilized temperature-control media (152-2) from each temperature-control element (122) at a substantially same flow rate.

14. A method according to claim 13, wherein the inlet connector (126) and the outlet connector (128) of each temperature-control element (122) are configured to couple the temperature-control element (122) to a heat exchange system (150) independently of other temperature-control elements (122) such that each temperature-control element (122) receives the initialized temperature control media (152-1) in the substantially same state.

15. A method according to any of claims 13-14, wherein:

the temperature-control elements (122) are fluidly coupled to a heat exchange system (150) by separate, independent couplings (124), the coupling (124) of each temperature-control element (122) having a substantially equal cumulative length comprising an inlet connection (126) configured to fluidly couple an inlet (226) of the temperature-control element (122) to an outlet (158) of the heat-exchange system (150) and an outlet connector (128) configured to fluidly couple an outlet (128) of the temperature-control element (122) to an inlet (156) of the heat exchange system (150); and

circulating temperature-control media (152) through the temperature-control elements (122) in accordance with the determined temperature-control configuration comprises circulating the temperature-control media (152) through the separate, independent couplings (124) of the substantially equal cumulative length.

FIG. 1

FIG. 2A

FIG. 2B

FIG. 2C

FIG. 2D

FIG. 2E

FIG. 2F

EP 4 693 664 A1

FIG. 2G

FIG. 3

EP 4 693 664 A1

38

FIG. 4A

FIG. 4B

EP 4 693 664 A1

FIG. 4C

FIG. 4D

FIG. 4E

FIG. 4F

FIG. 4G

**FIG. 4H**

**FIG. 4I**

FIG. 4J

FIG. 4K

FIG. 4L

FIG. 4M

**FIG. 4N**

**FIG. 4O**

FIG. 5

FIG. 6A

FIG. 6B

EP 4 693 664 A1

FIG. 6C

FIG. 6D

49

700

Secure temperature control elements to respective energy storage units of an energy storage module.
710

Couple the temperature control elements to a heat exchange system in parallel such that each temperature control element receives initialized temperature control media in a substantially same state.
720

Normalize flow characteristics of the temperature control elements.
730

Circulate temperature control media through plurality of temperature control elements.
740

FIG. 7

800

Monitor operating conditions of an energy storage module
comprising a plurality of energy storage units.
810

Determine temperature control configuration for the
energy storage module.
820

Circulate temperature control media to a plurality of
temperature control elements such that each temperature
control element receives initialized temperature control
media in a substantially same state
830

Receive utilized temperature control media from the
plurality of temperature control elements at a
substantially same flow rate
840

FIG. 8

FIG. 9A

FIG. 9B

FIG. 9C

FIG. 9D

FIG. 10A

FIG. 10B

FIG. 10C

EP 4 693 664 A1

FIG. 11A

FIG. 11B

FIG. 11C

EP 4 693 664 A1

FIG. 12A

FIG. 12B

FIG. 13A

EP 4 693 664 A1

FIG. 13B

FIG. 14A

FIG. 14B

Europäisches Patentamt

European Patent Office

Office européen des brevets

## EUROPEAN SEARCH REPORT

**Application Number**

EP 25 19 2667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 212 412 127 U (SHENZHEN FRD SCIENCE & TECHNOLOGY CO LTD) 26 January 2021 (2021-01-26) * paragraphs [0004], [0025] - [0032]; figures 1-3 * | 1-4, 6-10, 12-15 | INV. H01M50/264 H01M50/249 H01M50/209 H01M10/6567 H01M10/6556 H01M10/625 H01M10/613 |
| X | CN 116 315 266 A (HEFEI GUOXUAN HIGH TECH POWER ENERGY CO LTD) 23 June 2023 (2023-06-23) * paragraphs [0002] - [0025], [0047] - [0050], [0061]; figures 1-4 * | 1-4,6, 8-10, 12-15 | |
| A | CN 115 149 155 A (YUEYANG YAONING NEW ENERGY TECH CO LTD) 4 October 2022 (2022-10-04) * the whole document * | 1-15 | |
| A | CN 217 606 890 U (NANJING CHUANGYUAN TIANDI POWER TECH CO LTD) 18 October 2022 (2022-10-18) * the whole document * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 11 December 2025 | Nogueira da Silva, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 2667

This annex lists the patent family members relating to the patent documents cited in  the above-mentioned European search report.
The members are as contained in the European Patent Office EDP file on
The European Patent Office is in no way liable for these particulars which are merely given for the purpose of information.

11-12-2025

| Patent document cited in search report | | Publication date | Patent family member(s) | Publication date |
|---|---|---|---|---|
| CN 212412127 | U | 26-01-2021 | NONE | |
| CN 116315266 | A | 23-06-2023 | NONE | |
| CN 115149155 | A | 04-10-2022 | NONE | |
| CN 217606890 | U | 18-10-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 79417324